# EUROPEAN PATENT APPLICATION

(11) **EP 4 840 922 A1**
(43) Date of publication of application: **18.11.2026**
(21) Application number: 25745417.3
(22) Date of filing: 24.01.2025
(51) Int. Cl.: C09K 3/00, D21H 17/23, D21H 17/37, D21H 21/14, D21J 5/00

(54) **OILPROOFING AGENT**

(30) Priority: 24.01.2024 JP 2024008993
(71) Applicant: DAIKIN INDUSTRIES, LTD., Osaka-shi, Osaka 530-0001 (JP)
(72) Inventor: NAKAMURA, Hisako, Osaka-Shi, Osaka 530-0001 (JP); UEHARA, Tetsuya, Osaka-Shi, Osaka 530-0001 (JP); SHIBATA, Shun, Osaka-Shi, Osaka 530-0001 (JP); TANAKA, Asaka, Osaka-Shi, Osaka 530-0001 (JP)
(74) Representative: Hoffmann Eitle
(86) International application number: PCT/JP2025/002277
(87) International publication number: WO 2025/159198

(57) **Abstract**

Provided is an oil-resistant agent comprising a liquid-repellent compound and a lignin compound.

## Description

### Technical Field

The present disclosure relates to a repellent, in particular, to an oil-resistant agent.

### Background Art

Patent Literature 1 discloses an aqueous dispersion of acrylamide-based polymer that can significantly enhance the compressive strength of paperboard.

### Citation List

### Patent Literature

Patent Literature 1: JP 2014-237795 A

### Summary of Invention

### Technical Problem

Patent Literature 1 neither describes nor suggests the imparting of oil resistance to pulp substrates or the use of an oil-resistant agent.

An object of the present disclosure is to provide a novel oil-resistant agent which can impart oil resistance to a substrate (in particular, a pulp substrate).

### Solution to Problem

The present disclosure includes the following embodiments.

### [Item 1]

An oil-resistant agent comprising a liquid-repellent compound and a lignin compound.

### [Item 2]

The oil-resistant agent according to item 1, wherein the lignin compound has an ionic group other than a phenolic hydroxy group.

### [Item 3]

The oil-resistant agent according to item 1 or 2, wherein the lignin compound is lignin sulfonate.

### [Item 4]

The oil-resistant agent according to any one of items 1 to 3, wherein the lignin compound is sodium lignin sulfonate.

### [Item 5]

The oil-resistant agent according to any one of items 1 to 4, wherein the liquid-repellent compound is a compound having at least one selected from the group consisting of a hydrocarbon group having 6 or more carbon atoms and optionally having a substituent, and a polysiloxane group.

### [Item 6]

The oil-resistant agent according to item 5, wherein the liquid-repellent compound is at least one selected from the group consisting of a vinyl polymer, a modified body of amine, a modified body of polyol, a modified body of polycarboxylic acid, an isocyanate derivative, wax and silicone.

### [Item 7]

The oil-resistant agent according to item 5 or 6, wherein the liquid-repellent compound is at least one selected from the group consisting of a (meth)acrylic polymer, a styrene polymer, a polysiloxane group-containing (meth)acrylic polymer, a hydrocarbon wax, polyurethane, silicone resin, fatty acid ester, fatty acid amide and modified starch.

### [Item 8]

The oil-resistant agent according to any one of items 1 to 7, wherein the liquid-repellent compound is a (meth)acrylic polymer having a chain alkyl having 12 or more and 18 or less carbon atoms.

### [Item 9]

The oil-resistant agent according to any one of items 1 to 8, wherein the liquid-repellent compound has a hexadecane contact angle of 25° or more.

### [Item 10]

The oil-resistant agent according to any one of items 1 to 9, wherein the oil-resistant agent has a charge density of -1,500 µeq/g or more and 0 µeq/g or less.

### [Item 11]

The oil-resistant agent according to items 1 or 2, wherein the liquid-repellent compound is a (meth)acrylic polymer comprising 50% by weight or more of a repeating unit derived from a monomer (a1), wherein
the monomer (a1) is
(a1) a monomer represented by the formula:

   CH₂=C(-X^{a1})-C(=O)-Y^{a11}-Z(-Y^{a12}-R^{a1})ₙ
wherein R^{a1} is each independently a hydrocarbon group having 6 or more and 40 or less carbon atoms,
X^{a1} is a hydrogen atom, a monovalent organic group or a halogen atom,
Y^{a11} is -O- or -NH-,
Y^{a12} is each independently a direct bond or a group composed of at least one selected from -O-, -C(=O)-, - S(=O)₂-, -NH- and -CH₂-,
Z is a direct bond or a divalent or trivalent hydrocarbon group having 1 to 5 carbon atoms, and
n is 1 or 2.

### [Item 12]

An oil-resistant pulp product comprising a pulp substrate having the liquid-repellent compound and the lignin compound of the oil-resistant agent according to any one of items 1 to 10 adhered thereto.

### [Item 13]

The oil-resistant pulp product according to item 12, wherein the amount of the liquid-repellent compound is 0.03% by weight or more and 3.0% by weight or less based on the pulp substrate.

### [Item 14]

The oil-resistant pulp product according to item 12 or 13, which is a pulp formed article.

### [Item 15]

The oil-resistant pulp product according to any one of items 12 to 14, which is a food packaging material or a food container.

### [Item 16]

A method for producing an oil-resistant pulp product, comprising subjecting a pulp substrate to an external addition treatment or an internal addition treatment with the oil-resistant agent according to any one of items 1 to 11.

### Advantageous Effect of Invention

According to the present disclosure, oil resistance can be imparted to substrates (in particular, pulp substrates).

### Description of Embodiments

### <Definition of Terms>

As used herein, the "n valent group" refers to a group having n bonds, i.e., a group forming n bonds. The "n valent organic group" refers to a n valent group containing carbon. Such organic groups are not limited, but can be hydrocarbon groups or derivatives thereof. The derivative of the hydrocarbon group refers to a group that has one or more of N, O, S, Si, amide, sulfonyl, siloxane, carbonyl, carbonyloxy, halogen and the like at the end or in the molecular chain of a hydrocarbon group.

As used herein, the "hydrocarbon group" refers to a group containing carbon and hydrogen and a group in which a hydrogen atom is removed from the hydrocarbon. Such hydrocarbon groups are not limited, but include C₁₋₂₀ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may include one or more ring structures. In an explicit term, the hydrocarbon group may be substituted by one or more substituents.

Whether or not the phrases "independently at each occurrence", "independently with each other", "each independently" or similar expressions are explicitly described herein, unless otherwise described that they are exceptions, when a plurality of terms (symbols) that can occur in a chemical structure is defined, such definition is applied independently to each occurrence.

The chemical structures described herein should be understood not to encompass chemical structures that are recognized by those skilled in the art as being chemically impossible or extremely unstable.

### <Repellent (oil-resistant agent)>

The repellent in the present disclosure adheres to a substrate (in particular, a pulp substrate) and imparts liquid-repellency, for example, water resistance, oil resistance, water-repellency, oil-repellency and/or antifouling properties to the substrate, and may function as a water-resistant agent, an oil-resistant agent, a water-repellent agent, an oil-repellent agent and/or an antifouling agent. The repellent in the present disclosure is suitable as an oil-resistant agent which imparts oil resistance to substrates (in particular, pulp substrates).

Since chemical adhesion to the surface of a pulp substrate is a reversible reaction, it is believed that the adhesion is less likely to be maintained when shear is applied. In particular, since shear is continuously applied to the substrate due to prolonged agitation, this is considered to be detrimental to chemical fixation. Nevertheless, the present inventor has unexpectedly found that by using the repellent according to the present disclosure, even when the pulp slurry after adding the repellent is stirred for a long time (e.g., 30 minutes or more), the oil resistance of the product (e.g., pulp mold) at high temperatures is excellent.

The repellent according to the present disclosure includes the liquid-repellent compound described below as the active ingredient. The liquid-repellent compound itself may be used as a repellent, or may be combined with other components and used as a repellent. Furthermore, it is preferable that the repellent according to the present disclosure comprises the lignin compound described below. Inclusion of the lignin compound allows the effect of the present disclosure to be achieved well.

The repellent of the present disclosure may not include one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group and a compound having a fluorine atom. The repellent of the present disclosure can impart liquid-repellency to a substrate without these fluorine compounds.

The volume abundance ratio of particles with a size of 100 µm or larger in the repellent of the present disclosure may be 0.1% or more, 0.3% or more, 0.5% or more, 1% or more, 1.5% or more, 3% or more, 4% or more, 5% or more, or 10% or more, and may be 50% or less, 30% or less, 20% or less, 15% or less, 10% or less, 5% or less, 3% or less, or 1.5% or less, and is preferably 20% or less, and more preferably 5% or less, as measured by laser diffraction scattering. The method for setting the volume abundance ratio of particles to the above range is not limited, and for example, particles in the raw material and/or dispersion may be formed into fine particles using a pulverizer or a homogenizer.

The volume abundance ratio of particles with a size of 10 µm or larger in the composition of the present disclosure may be 0.1% or more, 0.3% or more, 0.5% or more, 1% or more, 1.5% or more, 3% or more, 4% or more, 5% or more, or 10% or more, and may be 50% or less, 30% or less, 20% or less, 15% or less, 10% or less, 5% or less, 3% or less, or 1.5% or less, and is preferably 30% or less, more preferably 15% or less, as measured by laser diffraction scattering. The method for setting the volume abundance ratio of such particles to the above range is not limited, and for example, particles in the raw material and/or dispersion may be formed into fine particles using a pulverizer or a homogenizer.

The repellent in the present disclosure may have a volume median diameter as measured by laser diffraction scattering of 0.01 µm or more, 0.05 µm or more, 0.1 µm or more, 0.2 µm or more, 0.3 µm or more, 0.4 µm or more, 0.5 µm or more, or 0.6 µm or more, and 10 µm or less, 5 µm or less, 3 µm or less, 1 µm or less, 0.9 µm or less, 0.8 µm or less, 0.7 µm or less, 0.6 µm or less, 0.5 µm or less, 0.4 µm or less, 0.3 µm or less, or 0.2 µm or less, preferably 1 µm or less, and in an embodiment 0.01 µm or more and 1 µm or less. In the present disclosure, the volume median diameter refers to the median diameter (D50) in a volume-based particle size distribution by laser diffraction scattering.

The particle obtained by removing liquid medium by air dry at room temperature from repellent (e.g., an oil-resistant agent for pulp) which is the water-dispersible composition of the present disclosure may have an average particle size obtained from an observation image by a scanning electron microscope of 0.01 µm or more, 0.05 µm or more, 0.1 µm or more, 0.2 µm or more, 0.3 µm or more, 0.4 µm or more, 0.5 µm or more, or 0.6 µm or more, and 10 µm or less, 5 µm or less, 3 µm or less, 1 µm or less, 0.9 µm or less, 0.8 µm or less, 0.7 µm or less, 0.6 µm or less, 0.5 µm or less, 0.4 µm or less, 0.3 µm or less, or 0.2 µm or less, and preferably 1 µm or less. To set the particle size to the above range, for example, particles in the raw material and/or dispersion may be formed into fine particles using a pulverizer or a homogenizer. The room temperature means 20°C to 30°C, in particular 25°C.

The repellent in the present disclosure may have an ionic charge density of -1,000 µeq/g or more, -800 µeq/g or more, -600 µeq/g or more, -500 µeq/g or more, -400 µeq/g or more, -250 µeq/g or more, -100 µeq/g or more, - 50 µeq/g or more, -25 µeq/g or more, 0 µeq/g or more, 1 µeq/g or more, 25 µeq/g or more, 50 µeq/g or more, 100 µeq/g or more, 200 µeq/g or more, preferably -600 µeq/g or more, for example, -400 µeq/g or more, -200 µeq/g or more, -50 µeq/g or more, and 5,000 µeq/g or less, 2,500 µeq/g or less, 1,000 µeq/g or less, 750 µeq/g or less, 600 µeq/g or less, 500 µeq/g or less, 400 µeq/g or less, 350 µeq/g or less, 300 µeq/g or less, 200 µeq/g or less, 100 µeq/g or less, or 50 µeq/g or less, preferably 1,000 µeq/g or less, more preferably 500 µeq/g or less, for example 300 µeq/g or less, particularly 100 µeq/g or less, and in a preferred embodiment -1,500 µeq/g or more and 1,500 µeq/g or less, and particularly -1,500 µeq/g or more and 0 µeq/g or less.

The anion requirement of a sample solution having a solid content of 0.1 g/L is measured by a particle charge meter (MUTEK PCD-06 manufactured by BTG) using a 1/1,000 N potassium polyvinyl sulfonate solution to calculate the ionic charge density (cationic charge density) by the following equation (1). Alternatively, the cation requirement is measured in the same manner by using poly(diallyldimethylammonium chloride) solution instead of the potassium polyvinyl sulfonate solution to calculate the ionic charge density (anionic charge density) by the following equation (1). $Ionic cherge density \left(μeq/g\right) = A / B$ (1)
A: cation requirement or anion requirement (µeq/L)
B: Concentration of sample solution (g/L)

### {Lignin compound}

The repellent in the present disclosure includes a lignin compound. Inclusion of the lignin compound allows the effect of the present disclosure to be achieved well. For example, inclusion of the lignin compound may improve stability when the repellent is formed into a water dispersion.

In the present disclosure, the lignin compound is selected from lignin and modified lignin. Modified lignin is a compound that is mainly composed of a lignin-derived structure, in which a portion of the lignin is chemically modified and/or reduced in molecular weight, and may be a derivative of lignin, a degraded product of lignin, or a derivative of a degraded product of lignin. Specific examples of lignin compound include lignin, lignin sulfonic acid, kraft lignin, soda lignin, soda-anthraquinone lignin, organosolv lignin, steam explosion lignin and sulfuric acid lignin. Of them, lignin sulfonic acid and kraft lignin are preferred.

The lignin compound has a phenolic hydroxy group. The amount of the phenolic hydroxy group may be 1.5% or more, preferably 1.6% or more, and more preferably 1.7% or more, and may be 20% or less, 15% or less, 10% or less, or 6.0% or less, preferably 5.5% or less, and is more preferably 5.0% or less, and in an embodiment 1.5 to 6.0%, 1.6 to 5.5%, or 1.7 to 5.0%. When the lignin compound is kraft lignin, the amount of the phenolic hydroxy group is more preferably 2.0% or more, and particularly preferably more than 2.5%.

The amount of the phenolic hydroxy group may be determined by measuring the differential absorption coefficient at about 300 nm using a spectrophotometer. To give an example, by subtracting the absorption spectrum of a neutral solution containing the same concentration of lignin from the absorption spectrum of an alkaline solution containing a lignin sample (lignin compound), an ionization differential spectrum is obtained and the phenolic hydroxyl group (%) is determined from the following equation. 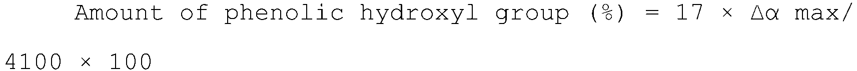 Amount of phenolic hydroxyl group (%) = 17 × Δα max/ 4100 × 100

Δα max [L/(g·cm)] indicates the differential absorption coefficient. For details, see "Chemistry of Lignin - Fundamentals and Application - Expanded Edition" edited by Junzo Nakano, published by Uni Publishing, Co., Ltd. May 25, 1990, p. 541.

The lignin compound may have a weight average molecular weight of 500 or more, 1,000 or more, 2,000 or more, 3,000 or more, 5,000 or more, preferably 1,000 or more, and 500,000 or less, 300,000 or less, 100,000 or less, 50,000 or less, or 30,000 or less, and preferably 50,000 or less. The weight average molecular weight may be measured by GPC in terms of polyethylene glycol.

The lignin compound may have a functional group (in particular, an ionic group) other than the phenolic hydroxy group. Examples of such functional groups include a hydroxy group, a carboxyl group, a polyalkylene oxide chain, a sulfone group, a nitroxyl group, a carbonyl group, a phosphate group, an amino group, an epoxy group, a methylol group, a cyanate group, an isocyanate group, a vinyl group and a maleimide group. In particular, the functional group may be an ionic group, and is preferably an anionic group. This may improve dispersibility. Examples of such functional groups include a carboxyl group, a sulfone group and a phosphate group. Of them, a sulfone group is more preferred.

Because the lignin compound has a phenolic hydroxy group and may further have an ionic group, it can also function as an ionic dispersant (ionic surfactant), in particular as an anionic dispersant (anionic surfactant).

It is preferable that the lignin compound has a sulfur-containing functional group such as a sulfo group and a thiol group. The content of sulfur may be 0.1% by mass or more, 0.3% by weight or more, or 0.5% by weight or more, and 6% by weight or less, 5% by weight or less, 4% by mass or less, or 3% by weight or less.

The functional group in the lignin compound may be quantitatively or qualitatively measured by instrumental analysis such as NMR, IR or elemental analysis.

The lignin compound may include a structural unit derived from other compounds to the extent that the effect of the present disclosure is not impaired. Examples of other compounds include (alkyl)phenol such as phenol and cresol; and an aromatic hydrocarbon compound such as benzene and naphthalene.

It is difficult to identify the chemical structure of the lignin compound uniformly, for example, by formulas. The reason for this is that the backbone that makes up the lignin compound has a very complex molecular structure.

The lignin compound may be a salt. Examples of salts include an alkali metal salt such as sodium salt and potassium salt; an alkaline earth metal salt such as calcium salt; an ammonium salt and a salt of organic amines.

### [Lignin sulfonic acid]

The lignin compound is preferably lignin sulfonic acid. Lignin sulfonic acid is a lignin compound modified with a sulfo group. For example, lignin sulfonic acid may be a compound with a backbone in which the carbon at the α-position of the side chain of the hydroxyphenyl propane structure of lignin is cleaved to introduce a sulfo group.

Lignin sulfonic acid may be lignin sulfonate. Examples of salts include an alkali metal salt such as sodium salt and potassium salt; an alkaline earth metal salt such as calcium salt; an ammonium salt; and a salt of organic amines. The salt may be, for example, sodium lignin sulfonate.

Lignin sulfonic acid may be a commercially available product. Examples thereof include VANILLEX HW (manufactured by Nippon Paper Industries, Co., Ltd.), SAN X M (manufactured by Nippon Paper Industries, Co., Ltd.), PEARLLEX NP (manufactured by Nippon Paper Industries, Co., Ltd.), SANFLO RH (manufactured by Nippon Paper Industries, Co., Ltd.), POLYFON and REAX (both manufactured by Ingevity).

Sodium lignin sulfonate may be a commercially available product, which may be SAN X (registered trademark) P252 and VANILLEX (registered trademark) N manufactured by Nippon Paper Industries, Co., Ltd., Polyfon (registered trademark) F, Polyfon (registered trademark) T, Polyfon (registered trademark) O, and Polyfon (registered trademark) H manufactured by Ingevity.

The amount of the lignin compound may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and 500 parts by weight or less, 300 parts by weight or less, 200 parts by weight or less, 100 parts by weight or less, 30 parts by weight or less, 20 parts by weight or less, 10 parts by weight or less, 5 parts by weight or less, 3 parts by weight or less, or 1 part by weight or less based on 100 parts by weight of the liquid-repellent compound.

### {Liquid-repellent compound}

The repellent in the present disclosure includes a liquid-repellent compound. The liquid repellent compound in the present disclosure adheres to a substrate (in particular, a pulp substrate) and imparts liquid repellency such as water resistance, oil resistance, water-repellency, oil-repellency and/or antifouling properties, in particular oil resistance to the substrate.

### [Characteristics]

The possible characteristics of the liquid repellent compound will be described below.

The liquid repellent compound may have a HD (n-hexadecane) contact angle of 10° or more, 20° or more, 25° or more, 30° or more, 35° or more, 40° or more, 45° or more, 50° or more, 55° or more, 60° or more, or 65° or more, and is preferably 25° or more, more preferably 30° or more, and may have a HD (n-hexadecane) contact angle of 100° or less, 90° or less, or 75° or less. A HD contact angle of the liquid repellent compound of the lower limit or more can impart good liquid-repellency (in particular oil-repellency) to a substrate. The HD contact angle is a static contact angle of the liquid-repellent compound to a spin-coated film, which is obtained by dropping 2 µL of HD on a spin-coated film at room temperature (25°C) and measuring the contact angle one second after the droplet reaches the film.

The liquid repellent compound has a water contact angle of 35° or more, 40° or more, 45° or more, 50° or more, 55° or more, 65° or more, 75° or more, 85° or more, 90° or more, or 100° or more, and may have a water contact angle of 160° or less, 140° or less, 130° or less, 120° or less, 110° or less, 100° or less or 90° or less. A water contact angle of the liquid repellent compound of the lower limit or more can impart good liquid-repellency (in particular water-repellency) to a substrate. The water contact angle is a static contact angle of a liquid-repellent compound to a spin-coated film, which is obtained by dropping 2 µL of water on a spin-coated film at room temperature (25°C) and measuring the contact angle one second after the droplet reaches the film.

The liquid repellent compound is preferably a biobased compound with carbon of biobased origin. A biobased content is measured in accordance with ASTM D6866. The biobased content may be 20% or more, preferably 30% or more, more preferably 50% or more, even more preferably 60% or more, still more preferably 70% or more, and most preferably 80% or more or 90% or more, and for example, 100%. A high biobased content means that the amount of use of fossil resource materials, which are typically petroleum, is small, and a higher biobased content of the liquid repellent compound is preferred from that point of view.

The liquid repellent compound has a biodegradation as of the 180^{th} day of preferably 5% or more. A higher biodegradation is preferred because of small environmental load. The liquid repellent compound may have a biodegradation as of the 180^{th} day of, for example, 10% or more, 20% or more, 30% or more, 50% or more, 60% or more, 70% or more, 80% or more, or 90% or more, and preferably 30% or more, more preferably 50% or more, further preferably 70% or more, and most preferably 80% or more. The liquid repellent compound has a biodegradation as of the 60^{th} day of preferably 5% or more. A higher biodegradation is preferred because of small environmental load. The liquid repellent compound may have a biodegradation as of the 60^{th} day of, for example, 10% or more, 15% or more, 20% or more, 25% or more, 30% or more, 35% or more, 40% or more, or 45% or more, and preferably 10% or more, and more preferably 30% or more. This biodegradation refers to the biodegradation specified in JIS K 6953-1 or ASTM D6400.

The liquid repellent compound may have a melting point of 30°C or more, 40°C or more, 60°C or more, 80°C or more, 100°C or more, or 120°C or more, and is preferably 40°C or more, and may have a melting point of 250°C or less, 225°C or less, 200°C or less, 150°C or less, 130°C or less, 120°C or less, 110°C or less, 100°C or less, 80°C or less, or 50°C or less.

### [Structure]

The liquid repellent compound in the present disclosure may not have any one selected from the group consisting of a fluoroalkyl group having 8 or more carbon atoms, a perfluoroalkyl group having 8 or more carbon atoms, a fluoroalkyl group having 4 or more carbon atoms, a perfluoroalkyl group having 4 or more carbon atoms, a perfluoroalkyl group, a fluoroalkyl group, and a fluorine atom. The liquid repellent compound can impart liquid-repellency without including these fluorine-containing groups to a substrate.

The liquid-repellent compound in the present disclosure does not need to be a fatty acid ester having a glycoside bond. The fatty acid ester having a glycoside bond is typically a compound obtained by adding fatty acid to the hydroxy group of a compound with a glycoside bond-containing structure (typically sugars (monosaccharide or polysaccharide)) via an ester bond.

The liquid-repellent compound may be a compound having at least one group selected from the group consisting of a hydrocarbon group having 6 or more carbon atoms and optionally having a substituent, and a polysiloxane group. In particular, the liquid-repellent compound may be a compound having at least one group selected from the group consisting of a monovalent hydrocarbon group having 6 or more and 40 or less carbon atoms and optionally having a substituent and a monovalent polysiloxane group.

### (Hydrocarbon group having 6 or more carbon atoms and optionally having substituent)

The liquid-repellent compound may have a hydrocarbon group having 6 or more carbon atoms and optionally having a substituent.

The hydrocarbon group may be an aromatic hydrocarbon group or an aliphatic hydrocarbon group, and examples thereof include an aliphatic hydrocarbon group, for example, a saturated or unsaturated aliphatic hydrocarbon group (an alkyl group, an alkenyl group and the like). The hydrocarbon group may be branched, cyclic or linear, and is preferably linear.

The hydrocarbon group is typically monovalent and may be located at the molecular end, and may have one or more methyl groups at the end. In the present description, the hydrocarbon compound (e.g., hydrocarbon wax) should be understood as being composed of only a monovalent hydrocarbon group and a hydrogen atom. For example, n-alkane (eicosane), which has 20 carbon atoms, consists solely of an alkyl group having 20 carbon atoms and a single hydrogen atom.

The hydrocarbon group may have 6 or more, 8 or more, 10 or more, 12 or more, 14 or more, 16 or more, 18 or more, 20 or more, or 22 or more, preferably 6 or more, 10 or more, 12 or more, or 16 or more carbon atoms, and 75 or less, 65 or less, 60 or less, 50 or less, 40 or less, 35 or less, 30 or less, 25 or less, 20 or less, 15 or less, or 10 or less, preferably 40 or less, 30 or less, 25 or less, or 20 or less carbon atoms, and in an embodiment, the hydrocarbon group has 6 or more and 60 or less, 6 or more and 40 or less, 12 or more and 30 or less, or 12 or more and 20 or less carbon atoms. The hydrocarbon group typically has 6 or more and 40 or less carbon atoms, but when the liquid-repellent compound is a hydrocarbon compound (hydrocarbon wax), it may have more than 40 carbon atoms.

The hydrocarbon group may have a substituent, but is preferably non-substituted. Examples of substituents include -OR', -N(R')₂, -COOR', and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon group having a substituent, the amount of carbon atom relative to the carbon atom and the heteroatom may be 70 mol% or more, 80 mol% or more, 90 mol% or more, 95 mol% or more, or 99 mol% or more, and preferably 75 mol% or more, and may be 95 mol% or less, 90 mol% or less, 85 mol% or less, or 80 mol% or less. The hydrocarbon group may have 1 to 3 (for example, 1) -OR' (in particular, - OH) as a substituent (for example at a site other than the end).

### (Polysiloxane group)

The liquid repellent compound may have a polysiloxane group. A polysiloxane group can impart liquid-repellency to the substrate as the hydrocarbon group having 6 or more carbon atoms and optionally having a substituent does.

The polysiloxane group has a polysiloxane structure. In the present description, the polysiloxane group refers to organopolysiloxane modified with an organic group, unless otherwise specified.

The polysiloxane group may have 3 or more, 5 or more, 6 or more, 10 or more, 30 or more, 50 or more, 100 or more, 500 or more, 1,000 or more, 2,000 or more, or 3,000 or more, preferably 10 or more silicon atoms, and 50,000 or less, 25,000 or less, 10,000 or less, 7,500 or less, 5,000 or less, 3,000 or less, 1,500 or less, 1,000 or less, 500 or less, 300 or less, 200 or less, 100 or less, or 50 or less, and for example, 500 or less silicon atoms.

The polysiloxane group may be monovalent and located at the molecular end, or may be divalent or polyvalent and located in the molecule, but is preferably monovalent.

The polysiloxane group may also be represented by the following formula:

-[-Si(R^{s})₂-O-]ₐ-

[wherein R^{s} is independently at each occurrence a hydrocarbon group having 1 to 40 carbon atoms or a reactive group, and
a is an integer of 5 or more and 10,000 or less].

R^{s} is a hydrocarbon group having 1 to 40 carbon atoms or a reactive group.

Examples of hydrocarbon groups having 1 to 40 carbon atoms include a hydrocarbon group having 1 to 5 carbon atoms and a hydrocarbon group having 6 to 40 carbon atoms.

Examples of hydrocarbon groups having 1 to 5 carbon atoms include a hydrocarbon group having 1 to 5 carbon atoms such as a methyl group, an ethyl group, a propyl group, a butyl group and a pentyl group (in particular an aliphatic hydrocarbon group, in particular an alkyl group, for example, a methyl group or an ethyl group, and in particular a methyl group).

The hydrocarbon group having 6 to 40 carbon atoms may be an aromatic hydrocarbon group or an aliphatic hydrocarbon group, and is preferably an aliphatic hydrocarbon group, and in particular a saturated aliphatic hydrocarbon group (an alkyl group). The hydrocarbon group may be cyclic, linear or branched, and preferably linear. The hydrocarbon group may have 6 or more, 8 or more, 10 or more, 12 or more, 14 or more, 16 or more, 18 or more, preferably 10 or more, more preferably 12 or more carbon atoms, and 40 or less, 35 or less, 30 or less, 25 or less, 20 or less, 15 or less, or 10 or less, preferably 30 or less, and more preferably 25 or less carbon atoms.

Examples of reactive groups include a group having a functional group (for example, a hydroxy group, an amino group, a mercapto group, an epoxy group, a carboxyl group, a halogen-substituted alkyl group, a vinyl group, a (meth)acrylic group, a (meth)acryloyloxy group, a (meth)acrylamide group, and a hydrogen atom directly bonded to a silicon atom). These functional groups may be directly bonded to a silicon atom, or may be bonded to an organic group directly bonded to a silicon atom. The organic group may be a hydrocarbon group, and for example, an alkylene group or a divalent aromatic group. The hydrocarbon group may have 2 or more and 12 or less carbon atoms. An alkylene group having 2 or more and 10 or less carbon atoms is preferred. A divalent aromatic group having 6 or more and 12 or less carbon atoms is preferred. The reactive group may be a group selected from the group consisting of a hydroxy group, an epoxy ring, a carboxyl group, a (meth)acrylic group and an amino group, and for example, may be at least one selected from the group consisting of an epoxy ring, a hydroxy group, a (meth)acrylic group and a carboxyl group.

a may be 3 or more, 5 or more, 6 or more, 10 or more, 30 or more, 50 or more, 100 or more, 500 or more, 1,000 or more, 2,000 or more, or 3,000 or more, and preferably 10 or more, and 10,000 or less, 7,500 or less, 5,000 or less, 3,000 or less, 1,500 or less, 1,000 or less, 500 or less, 300 or less, 200 or less, 100 or less, or 50 or less, and preferably 500 or less.

In the polysiloxane group, the amount of R^{s}, which is a hydrocarbon group having 1 to 5 carbon atoms, may be 20 mol% or more, 40 mol% or more, 60 mol% or more, or 80 mol% or more, and preferably 50 mol% or more, and 100 mol% or less, 90 mol% or less, 80 mol% or less, or 70 mol% or less relative to the total amount of R^{s}. For example, 50 mol% or more of the total amount of the R^{s} group may be a methyl group or an ethyl group, and in particular, a methyl group.

In the polysiloxane group, the amount of R^{s}, which is a hydrocarbon group having 6 to 40 carbon atoms, may be 3 mol% or more, 10 mol% or more, 20 mol% or more, or 30 mol% or more, and 100 mol% or less, 90 mol% or less, 80 mol% or less, or 70 mol% or less relative to the total amount of R^{s}.

In the polysiloxane group, the amount of R^{s}, which is a reactive group, may be 5 mol% or more, 10 mol% or more, 20 mol% or more, or 30 mol% or more relative to the total amount of R^{s}, and 50 mol% or less, 40 mol% or less, 30 mol% or less, or 20 mol% or less relative to the total amount of R^{s}. The polysiloxane group does not need to include a reactive group R^{s}.

The R^{s} group may be introduced randomly or in block, and preferably randomly.

The end structure of the polysiloxane group is not limited, and may be -R^{s}, -OR^{s}, -Si(R^{s})₃ and the like. R^{s} in the end structure may or may not have one or more reactive groups. Examples of reactive groups are as described above, and may be at least one selected from the group consisting of an epoxy ring, a hydroxy group, a (meth)acrylic group and a carboxyl group.

The polysiloxane group may have a linker. The matrix structure and the polysiloxane group may be linked by a linker, and examples of linkers are not limited, and include a hydrocarbon group having 1 to 40 (for example, 1 to 20) carbon atoms optionally disconnected via an oxygen atom, and may be, for example, a (poly)oxyalkylene group having 1 to 40 (for example 1 to 20) carbon atoms.

Examples of polysiloxane groups include

-[-Si(R^{s})₂-O-]ₐ-Si(R^{s})₃

-L^{s1}-[-Si(R^{s})₂-O-]ₐ-Si(R^{s})₃

-L^{s1}-O-L^{s1}-[-Si(R^{s})₂-O-]ₐ-R^{s}

-L^{s1}-[-Si(R^{s})₂-O-]ₐ-Si(R^{s})₃

-L^{s1}-O-L^{s1}-[-Si(R^{s})₂-O-]ₐ-R^{s}

-L^{s1}-[-Si(R^{s})₂-O-]ₐ-Si(R^{s})₃,

-L^{s1}-[-Si(R^{s})₂-O-]ₐ-R^{s}

[wherein R^{s} is independently at each occurrence a hydrocarbon group having 1 to 40 carbon atoms or a reactive group,
methyl groups account for 50 mol% or more of the total amount of the R^{s} group,
L^{s1} is independently at each occurrence a hydrocarbon group having 1 to 20 carbon atoms, and
a is 5 or more and 10,000 or less], and 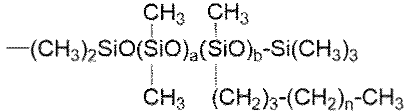 [wherein a is an integer of 0 to 150, b is an integer of 1 to 150, (a + b) is 5 to 200 and n is an integer of 0 to 36].

The polysiloxane group may have a silsesquioxane structure or a silica structure to form a branched structure (a silicone resin structure). For example, the branched structure may be formed by a branched structure such as

-O-Si(R^{s})(-O-)₂

-O-Si(-O-)₃

### [Examples of liquid-repellent compound]

The liquid-repellent compound may be at least one selected from the group consisting of a vinyl polymer, a modified body of amine, a modified body of polyol, a modified body of polycarboxylic acid, an isocyanate derivative, wax and silicone. For example, the liquid-repellent compound may be at least one selected from the group consisting of a (meth)acrylic polymer, a styrene polymer, a polysiloxane group-containing (meth)acrylic polymer, a hydrocarbon wax, polyurethane, silicone resin, fatty acid ester, fatty acid amide and modified starch. It is preferable that these liquid-repellent compounds have at least one selected from the group consisting of a hydrocarbon group having 6 or more carbon atoms and optionally having a substituent, and a polysiloxane group. Details of the liquid-repellent compound will be described below.

The liquid-repellent compound may be a compound having at least one group selected from the group consisting of -O(C=O)R, -COOR, -NHCOR, and -CONHR [wherein R is each independently a hydrocarbon group having 6 or more and 40 or less carbon atoms and optionally having a substituent or a polysiloxane group].

The liquid repellent compound may include an ester group, an amide group, a urethane group, a urea group, an imide group, a thioamide group, a thiourethane group, a thiourea group, a thioimide group, a sulfone amide group, a sulfone urea group, a sulfone urethane group or a sulfone imide group (e.g., an ester group, an amide group, a urethane group, a urea group, an imide group). For example, the liquid repellent compound may include - C(=O)-O-, -O-C(=O)-, -C(=O)-NR'-, -O-C(=O)-NR'-, -NR'-C(=O)-, -NR'-C(=O)-NR'- or -SO₂NR'- wherein R' is independently at each occurrence a hydrogen atom or a hydrocarbon group having 1 to 30 (for example, 1 to 20, 1 to 10, or 1 to 4) carbon atoms. The liquid repellent compound may be a compound in which a raw material compound and a modifying group (in particular the above monovalent hydrocarbon group optionally having a substituent) are bonded through at least one of the above groups. The liquid repellent compound may include an amide structure. Inclusion of at least the amide structure in the liquid repellent compound may improve liquid repellency. Herein the amide structure may be an amide structure in the broad sense, and may be selected from the amide structure in an amide (acid amide) group (or carboxylic acid amide), a urethane group, a urea group, an imide group, a thioamide group, a thiourethane group, a thiourea group, a thioimide group, a sulfone amide group, a sulfone urethane group, a sulfone urea group and a sulfone imide group. The amide structure may be selected from the group consisting of -(C=O)N(-)₂, - (C=S)N(-)₂ and -S(=O)₂N(-)₂ (each group may be left-right inverted). In this regard, of the bonds possessed by N in the amide structure, at least one may be bonded to a hydrogen atom. The amide structure is preferably - (C=O)N(-)₂, and may be an amide structure in a group selected from the group consisting of an amide group, a urethane group, a urea group and an imide group.

### [Amount of liquid-repellent compound]

The amount of the liquid-repellent compound may be 0.01% by weight or more, 0.03% by weight or more, 0.5% by weight or more, 1% by weight or more, 3% by weight or more, 5% by weight or more, 10% by weight or more, 20% by weight or more, 30% by weight or more, and 60% by weight or less, 50% by weight or less, 40% by weight or less, 30% by weight or less, 20% by weight or less, 10% by weight or less, 5% by weight or less, or 3% by weight or less in the repellent. The liquid repellent compound itself may be used as a repellent.

### {Vinyl polymer}

The vinyl polymer will be described as an example of the liquid repellent compound. The vinyl polymer is prepared by polymerizing a vinyl monomer, and exhibits liquid repellency. In this regard, the vinyl monomer may be a compound having a polymerizable carbon-carbon double bond (ethylenically unsaturated double bond) (>C=C<), and may be a monomer having a vinyl group, a vinylene group, a vinylidene group, an acryloyl group, a methacryloyl group, or a monomer having a derivative group thereof.

### [Characteristics]

The vinyl polymer is preferably a compound with carbon of biobased origin. The biobased content is measured in accordance with ASTM D6866. The vinyl polymer may have a biobased content of 20% or more, and is preferably 30% or more, more preferably 50% or more, even more preferably 60% or more, still more preferably 70% or more, and most preferably 80% or more or 90% or more, and for example, 100%. A high biobased content means that the amount of use of fossil resource materials, which are typically petroleum, is small, and a higher biobased content of the vinyl polymer is preferred from that point of view.

The vinyl polymer may have a melting point of 30°C or more, 40°C or more, 60°C or more, 80°C or more, 100°C or more, or 120°C or more, and is preferably 40°C or more, and may have a melting point of 250°C or less, 225°C or less, 200°C or less, 150°C or less, 130°C or less, 120°C or less, 110°C or less, 100°C or less, 80°C or less, or 50°C or less.

### [Structure]

The vinyl polymer may have a weight average molecular weight of 3,000 or more, 5,000 or more, 10,000 or more, 30,000 or more, 100,000 or more, 300,000 or more, or 500,000 or more, and 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, or 5,000 or less. The weight average molecular weight may be measured by GPC in terms of polystyrene.

### (a) Hydrocarbon group-containing monomer

The vinyl polymer may comprise a repeating unit derived from a hydrocarbon group-containing monomer (a). The monomer (a) has one ethylenically unsaturated double bond and a hydrocarbon group having 6 or more and 40 or less carbon atoms.

The monomer (a) preferably has a (meth)acrylic group as the ethylenically unsaturated double bond, and for example, may have a (meth)acrylate group or a (meth)acrylamide group as the ethylenically unsaturated double bond.

The monomer (a) has a hydrocarbon group having 6 or more and 40 or less carbon atoms. The hydrocarbon group having 6 or more and 40 or less carbon atoms is as described in the above (Hydrocarbon group having 6 or more carbon atoms and optionally having substituent), and it is preferable that the hydrocarbon group does not have a substituent. Herein the hydrocarbon group is a monovalent group. The hydrocarbon group which the monomer (a) has may be an aromatic hydrocarbon group or an aliphatic hydrocarbon group, and is preferably an aliphatic hydrocarbon group, and in particular a saturated aliphatic hydrocarbon group (an alkyl group). The hydrocarbon group is branched or linear, and preferably linear. The hydrocarbon group may be saturated or unsaturated. The hydrocarbon group is preferably a saturated aliphatic hydrocarbon group (alkyl group). The hydrocarbon group may have 6 or more, 8 or more, 10 or more, 12 or more, 14 or more, 16 or more, 18 or more, 20 or more, or 22 or more carbon atoms, and has preferably 10 or more, 12 or more, 14 or more, or 16 or more carbon atoms, and may have 40 or less, 35 or less, 30 or less, 25 or less, 20 or less, 15 or less, or 10 or less carbon atoms, and has preferably 30 or less, 25 or less, or 20 or less carbon atoms.

The monomer (a) having a hydrocarbon group having 6 or more and 40 or less carbon atoms is preferably a group represented by the formula:

CH₂=C(-X^{a})-C(=O)-Y^{a}(R^{a})ₖ

[wherein R^{a} is each independently a hydrocarbon group having 6 or more and 40 or less carbon atoms,
X^{a} is a hydrogen atom, a monovalent organic group or a halogen atom,
Y^{a} is a group composed of at least one selected from a divalent to tetravalent hydrocarbon group having 1 carbon atom (in particular, -CH₂-, -CH(-)₂), -C₆H₄-, -O-, -C(=O)-, -S(=O)₂- and -NH-, and
k is 1 to 3].

X^{a} may be a hydrogen atom, a methyl group, a halogen excluding a fluorine atom, a substituted or non-substituted benzyl group, or a substituted or non-substituted phenyl group. Examples of X^{a} include a hydrogen atom, a methyl group, a chlorine atom, a bromine atom, an iodine atom and a cyano group. X^{a} is preferably a hydrogen atom, a methyl group or a chlorine atom. X^{a} is particularly preferably a hydrogen atom.

Y^{a} is a divalent to tetravalent group. Y^{a} is preferably a divalent group.

Y^{a} is a group composed of at least one selected from a hydrocarbon group having 1 carbon atom, -C₆H₄-, -O-, - C(=O)-, -S(=O)₂- and -NH-. It is preferable that Y^{a} is not a hydrocarbon group. Examples of hydrocarbon groups having 1 carbon atom include -CH₂-, -CH(-)₂ or -C(-)₃. A hydrocarbon group having 1 carbon atom may be repeatedly linked to form a hydrocarbon group having 2 or more carbon atoms, such as -(CH₂)ₘ- (m is an integer from 1 to 5). Y^{a} may have an NH group.

Y^{a} may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-[wherein Y' is a direct bond, -O-, -NH- or -S(=O)₂-, and R' is -(CH₂)ₘ- in which m is an integer of 1 to 5, or -C₆H₄- (a phenylene group)].

Specific examples of Y^{a} include -O-, -NH-, -O-C(=O)-, -C(=O)-NH-, -NH-C(=O)-, -O-C(=O)-NH-, -NH-C(=O)-O-, -NH-C(=O)-NH-, -O-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH-(CH₂)ₘ-NH-C₆H₄-, -NH-(CH₂)ₘ-NH-S(=O)₂-, or -NH-(CH₂)ₘ-S(=O)₂-NH- wherein m is 1 to 5, in particular 2 or 4.

Y^{a} is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂-, - O-(CH₂)ₘ-S(=O)₂-NH-, -NH-(CH₂)ₘ-NH-S(=O)₂-, or -NH-(CH₂)ₘ-S(=O)₂-NH- wherein m is an integer of 1 to 5, in particular 2 or 4. Y^{a} is more preferably -O- or -O-(CH₂)ₘ-NH-C(=O)-, in particular -O-(CH₂)ₘ-NH-C(=O)-.

R^{a} is each independently a hydrocarbon group having 6 or more and 40 or less carbon atoms, which is as described in the above (Hydrocarbon group having 6 or more carbon atoms and optionally having substituent), and R^{a} is preferably a linear or branched hydrocarbon group. The hydrocarbon group may be a linear hydrocarbon group. The hydrocarbon group is preferably an aliphatic hydrocarbon group, particularly preferably a saturated aliphatic hydrocarbon group and especially preferably an alkyl group. The hydrocarbon group has preferably 12 to 30, for example, 12 or more and 18 or less, 16 to 26 or 15 to 26, in particular 18 to 22 or 17 to 22 carbon atoms.

Specific examples of monomers (a) include:
(a1) a monomer represented by the formula:

   CH₂=C(-X^{a1})-C(=O)-Y^{a11}-Z(-Y^{a12}-R^{a1})ₙ
wherein R^{a1} is each independently a hydrocarbon group having 6 or more and 40 or less carbon atoms,
X^{a1} is a hydrogen atom, a monovalent organic group or a halogen atom, and
Y^{a11} is -O- or -NH-,
Y^{a12} is each independently a direct bond or a group composed of at least one selected from -O-, -C(=O)-, - S(=O)₂-, -NH- and -CH₂-
Z is a direct bond or a divalent or trivalent hydrocarbon group having 1 to 5 carbon atoms, and
n is 1 or 2, and
(a2) a monomer represented by the formula:

   CH₂=C(-X^{a2})-C(=O)-Y^{a2}-R^{a2}
wherein R^{a2} is a hydrocarbon group having 6 or more and 40 or less carbon atoms,
X^{a2} is a hydrogen atom, a monovalent organic group or a halogen atom, and
Y^{a2} is -O- or -NH-.

### (a1) Monomer

The monomer (a1) is different from the monomer (a2).

The monomer (a1) may have a hydrocarbon group having 6 or more and 40 or less carbon atoms and a NH group-containing group. The monomer (a1) may have an amide group, a urea group, a urethane group or a sulfonamide group. The NH group-containing group may be an amide group, a urea group, a urethane group or a sulfonamide group. The hydrocarbon monomer may be a combination of a hydrocarbon monomer having an amide group, a urea group, an urethane group or a sulfone amide group and a hydrocarbon monomer which does not have an amide group, a urea group, an urethane group or a sulfone amide group. By including these groups in the monomer (a1), the effect of the present disclosure can be achieved well.

The monomer (a1) is (meth)acrylate or (meth)acrylamide having a group composed of at least one selected from -O-, -C(=O)-, -S(=O)₂-, -NH- and -CH₂-.

The monomer (a1) may be a compound represented by the formula:

CH₂=C(-X^{a1})-C(=O)-Y^{a11}-Z(-Y^{a12}-R^{a1})ₙ

[wherein R^{a1} is each independently a hydrocarbon group having 6 or more and 40 or less carbon atoms,
X^{a1} is a hydrogen atom, a monovalent organic group or a halogen atom, and
Y^{a11} is -O- or -NH-,
Y^{a12} is each independently a direct bond or a group composed of at least one selected from -O-, -C(=O)-, - S(=O)₂-, -NH- and -CH₂-
Z is a direct bond or a divalent or trivalent hydrocarbon group having 1 to 5 carbon atoms, and
n is 1 or 2.]
Y^{a12} and/or Z do not need to be a direct bond. Ya¹² and Z do not need to be simultaneously a direct bond.

R^{a1} is preferably an aliphatic hydrocarbon group, particularly preferably a saturated aliphatic hydrocarbon group and especially preferably an alkyl group. In R^{a1}, the hydrocarbon group has preferably 12 to 30, for example, 16 to 26 or 15 to 26, in particular 18 to 22 or 17 to 22 carbon atoms.

X^{a1} may be a hydrogen atom, a methyl group, a halogen excluding a fluorine atom, a substituted or non-substituted benzyl group, or a substituted or non-substituted phenyl group. X^{a1} is preferably a hydrogen atom, a methyl group or a chlorine atom.

Y^{a12} may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-
wherein Y' is each independently a direct bond, -O-, -NH- or -S(=O)₂-,
R' is -(CH₂)ₘ- in which m is an integer of 1 to 5, a linear hydrocarbon group having 1 to 5 carbon atoms and having an unsaturated bond, a hydrocarbon group having 1 to 5 carbon atoms and having a branched structure or - (CH₂)ₗ-C₆H₄-(CH₂)ₗ- in which l is each independently an integer of 0 to 5 and -C₆H₄- is a phenylene group.

Specific examples of Y^{a12} include a direct bond, -O-, -NH-, -O-C(=O)-, -C(=O)-O-, -C(=O)-NH-, -NH-C(=O)-, -NH-S(=O)₂-, -S(=O)₂-NH-, -O-C(=O)-NH-, -NH-C(=O)-O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, - O-(CH₂)ₘ-O-C₆H₄-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH-(CH₂)ₘ-NH-C₆H₄-, wherein m is an integer of 1 to 5.

Y^{a12} may have an NH group.

Y^{a12} is preferably -O-, -NH-, -O-C(=O)-, -C(=O)-O-, - C(=O)-NH-, -NH-C(=O)-, -NH-S(=O)₂-, -S(=O)₂-NH-, -O-C(=O)-NH-, -NH-C(=O)-O-, -NH-C(=O)-NH-, or -O-C₆H₄-. Ya¹² is more preferably -NH-C(=O)-, -C(=O)-NH-, -O-C(=O)-NH-, -NH-C(=O)-O- or -NH-C(=O)-NH-. Y^{a12} may not be a direct bond.

Z is a direct bond or a divalent or trivalent hydrocarbon group having 1 to 5 carbon atoms, and may have a linear structure or a branched structure. Z has preferably 2 to 4, particularly preferably 2 carbon atoms. Specific examples of Z include a direct bond, -CH₂-, - CH₂CH₂-, -CH₂CH₂CH₂-, -CH₂CH₂CH₂CH₂-, -CH₂CH₂CH₂CH₂CH₂-, - CH₂CH(-)₂, -CH₂(CH-)CH₂-, -CH₂CH₂CH(-)₂, -CH₂CH₂CH₂CH₂CH(-)₂, -CH₂CH₂(CH-)CH₂-, and -CH₂CH₂CH₂CH(-)₂. Z may not be a direct bond.

The monomer (a1) is preferably CH₂=C(-X^{a1})-C(=O)-O-(CH₂)ₘ-NH-C(=O)-R^{a1}, CH₂=C(-X^{a1})-C(=O)-O-(CH₂)ₘ-O-C(=O)-NH-R^{a1}, CH₂=C(-X^{a1})-C(=O)-O-(CH₂)ₘ-NH-C(=O)-O-R^{a1}, CH₂=C(-X^{a1})-C(=O)-O-(CH₂)ₘ-NH-C(=O)-NH-R^{a1} wherein R^{a1} and X^{a1} are as described above.

The monomer (a1) is particularly preferably CH₂=C(-X^{a1})-C(=O)-O-(CH₂)ₘ-NH-C(=O)-R^{a1}.

The monomer (a1) may be produced by reacting hydroxyalkyl (meth)acrylate or hydroxyalkyl (meth)acrylamide with long chain alkyl isocyanate. Examples of long chain alkyl isocyanate include lauryl isocyanate, myristyl isocyanate, cetyl isocyanate, stearyl isocyanate, oleyl isocyanate and behenyl isocyanate.

The monomer (a1) may also be produced by reacting (meth)acrylate having an isocyanate group in the side chain, such as 2-methacryloyloxyethyl methacrylate, with long chain alkylamine or long chain alkyl alcohol. Examples of long chain alkylamine include laurylamine, myristylamine, cetylamine, stearylamine, oleylamine and behenylamine. Examples of long chain alkyl alcohol include lauryl alcohol, myristyl alcohol, cetyl alcohol, stearyl alcohol, oleyl alcohol and behenyl alcohol.

Preferred examples of monomers (a) are as follows:
Stearyl (meth)acrylate, behenyl (meth)acrylate, stearyl α-chloroacrylate, behenyl α-chloroacrylate
Stearyl (meth)acrylamide, behenyl (meth)acrylamide; 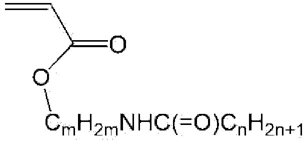 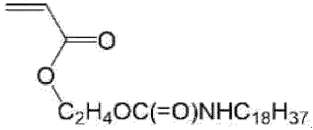 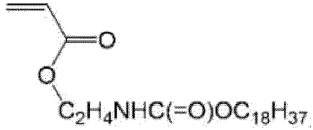 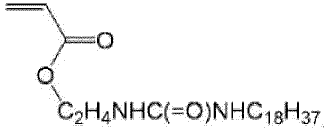 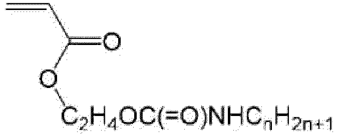 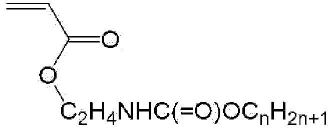 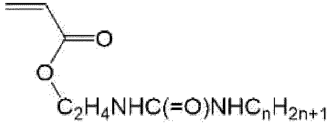 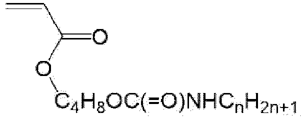 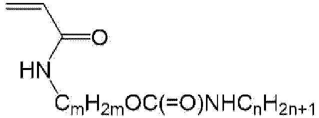 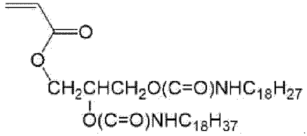 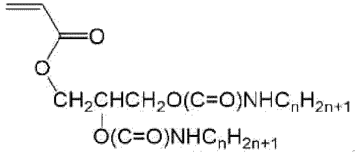 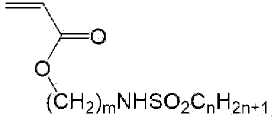 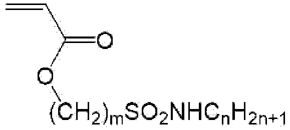 wherein n is a number of 6 to 40 and m is a number of 1 to 5.

The compounds of the above formula are an acrylic compound having a hydrogen atom at the α position, and specific examples thereof may also include a methacrylic compound having a methyl group at the α position and an α-chloroacrylic compound having a chlorine atom at the α position.

The monomer (a1) is preferably an amide-group containing monomer represented by the formula:

R^{a12}-C(=O)-NH-R^{a13}-O-R^{a11}

wherein R^{a11} is an organic residue having an ethylenically unsaturated polymerizable group,
R^{a12} is a hydrocarbon group having 6 or more and 40 or less carbon atoms, and
R^{a13} is a hydrocarbon group having 1 to 5 carbon atoms.

R^{a11} is an organic residue having an ethylenically unsaturated polymerizable group, and is not limited as long as it has a polymer carbon - carbon double bond. Specific examples thereof include an organic residue having an ethylenically unsaturated polymerizable group, such as -C(=O)CR^{a111}=CH₂, -CHR^{a111}=CH₂ and -CH₂CHR^{a111}=CH₂, in which R^{a111} is a hydrogen atom or an alkyl group having 1 to 4 carbon atoms. R^{a11} may have various organic groups other than the ethylenically unsaturated polymerizable group, including, for example, an organic group such as chain hydrocarbon, cyclic hydrocarbon, a polyoxyalkylene group and a polysiloxane group. These organic groups may be substituted by a substituent. R^{a11} is preferably - C(=O)CR^{a111}=CH₂.

R^{a12} is a hydrocarbon group of the monomer (a1) as described above. Examples thereof include a hydrocarbon group having 6 or more and 40 or less carbon atoms, and preferably an alkyl group, and a chain hydrocarbon group and a cyclic hydrocarbon group. Of them, a chain hydrocarbon group is preferred, and a linear saturated hydrocarbon group is particularly preferred. R^{a12} has 6 or more and 40 or less, preferably 11 to 27, and particularly preferably 15 to 23 carbon atoms.

R^{a13} is a hydrocarbon group having 1 to 5 carbon atoms, preferably an alkyl group. The hydrocarbon group having 1 to 5 carbon atoms may be linear or branched, and may have an unsaturated bond, and is preferably linear. R^{a13} has preferably 2 to 4, and particularly preferably 2 carbon atoms. R^{a13} is preferably an alkylene group.

The amide group-containing monomer may be a monomer with only one type of R^{a12} (e.g., a compound with only R^{a12} having 17 carbon atoms), or a monomer in which more than one R^{a12}'s are combined (e.g., a mixture of a compound with R^{a12} having 17 carbon atoms and a compound with R^{a12} having 15 carbon atoms).

Examples of amide group-containing monomers include carboxylic acid amide alkyl (meth)acrylate.

Specific examples of amide group-containing monomers include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethyl amide (meth)acrylate, oleic acid ethylamide (meth)acrylate, t-butyl cyclohexylcaproic acid amide ethyl (meth)acrylate, adamantanecarboxylic acid ethylamide (meth)acrylate, naphthalenecarboxylic acid amide ethyl (meth)acrylate, anthracenecarboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether and a mixture thereof.

It is preferable that the amide group-containing monomer is stearic acid amide ethyl (meth)acrylate. The amide group-containing monomer may be a mixture containing stearic acid amide ethyl (meth)acrylate. The amount of stearic acid amide ethyl (meth)acrylate in the mixture containing stearic acid amide ethyl (meth)acrylate may be, for example, 40% by weight or more, 50% by weight or more, 60% by weight or more, or 70% by weight or more, and 90% by weight or less, 80% by weight or less, or 70% by weight or less based on the total weight of the amide group-containing monomers. The rest of the monomers may be, for example, palmitic acid amide ethyl (meth)acrylate.

### (a2) Monomer

The monomer (a2) is a compound represented by the formula:

CH₂=C(-X^{a2})-C(=O)-Y^{a2}-R^{a2}

[wherein R^{a2} is a hydrocarbon group having 6 or more and 40 or less carbon atoms,
X^{a2} is a hydrogen atom, a monovalent organic group or a halogen atom, and
Y^{a2} is -O- or -NH-].

The monomer (a2) is a long chain acrylate ester monomer in which Y^{a2} is -O-, or a long chain acrylamide monomer in which Y^{a2} is -NH-.

R^{a2} is preferably an aliphatic hydrocarbon group, particularly preferably a saturated aliphatic hydrocarbon group and especially preferably an alkyl group. In R^{a2}, the hydrocarbon group has preferably 12 to 30, for example, 16 to 26, in particular 18 to 22 carbon atoms.

X^{a2} may be a hydrogen atom, a methyl group, a halogen excluding a fluorine atom, a substituted or non-substituted benzyl group, or a substituted or non-substituted phenyl group. Preferred is a hydrogen atom, a methyl group or a chlorine atom.

Preferred specific examples of long chain acrylate ester monomers include lauryl (meth)acrylate, stearyl (meth)acrylate, icosyl (meth)acrylate, behenyl (meth)acrylate, stearyl α-chloroacrylate, icosyl α-chloroacrylate and behenyl α-chloroacrylate.

Specific examples of long chain acrylamide monomers include stearyl (meth)acrylamide, icosyl (meth)acrylamide and behenyl (meth)acrylamide.

### (b) Hydrophilic group-containing monomer

The vinyl polymer may comprise a repeating unit derived from a hydrophilic group-containing monomer (b). The monomer (b) is different from the monomer (a), and has a hydrophilic group.

The monomer (b) preferably has a (meth)acrylic group as a group having an ethylenically unsaturated double bond, and for example, may have a (meth)acrylate group or a (meth)acrylamide group as the ethylenically unsaturated double bond. The monomer (a) may have one or two, and preferably only one group having an ethylenically unsaturated double bond.

The hydrophilic group is preferably an oxyalkylene-containing group (in which the alkylene group has 2 to 6 carbon atoms), and particularly preferably an oxyethylene group. The monomer (b) is preferably oxyalkylene (meth)acrylate, for example, polyalkylene (or monoalkylene) glycol mono(meth)acrylate and/or polyalkylene (or monoalkylene) glycol di(meth)acrylate, polyalkylene (or monoalkylene) glycol mono(meth)acrylamide.

The monomer (b) is preferably oxyalkylene (meth)acrylate represented by the formula:

CH₂=CX^{b}C(=O)-Y^{b}-(R^{b}O)ₙ-A^{b}

wherein X^{b} is a hydrogen atom or a methyl group,
Y^{b} is -O- or -NH-,
R^{b} is each independently an alkylene group having 2 to 6 carbon atoms,
A^{b} is a hydrogen atom, an unsaturated or saturated hydrocarbon group having 1 to 22 carbon atoms or CH₂=CX^{b}C(=O)-, and
n is an integer of 1 to 90.

Examples of monomer (b) are preferably those represented by the formula (monomer (b1), monomer (b2), monomer (b3), respectively):

CH₂=CX^{b}C(=O)-O-(R^{b}O)ₙ-A^{bi} (b1)

CH₂=CX^{b}C(=O)-O-(R^{b}O)ₙ-C(=O)CX^{b}=CH₂ (b2),

or

CH₂=CX^{b}C(=O)-NH-(R^{b}O)ₙ-A^{bi} (b3),

[wherein
X^{b} is each independently a hydrogen atom or a methyl group,
R^{b} is each independently an alkylene group having 2 to 6 carbon atoms
A^{bi} is each independently a hydrogen atom or an unsaturated or saturated hydrocarbon group having 1 to 22 carbon atoms, and
n is an integer of 1 to 90.]

n is, for example, 1 to 50, in particular 1 to 30, especially 1 to 15 or 2 to 15. Or, n may be, for example, 1.

R^{b} may be a linear or branched alkylene group, and may be, for example, a group represented by the formula - (CH₂)ₓ- or -(CH₂)ₓ₁-(CH(CH₃))ₓ₂- wherein x1 and x2 are 0 to 6, for example, 2 to 5, and the sum of x1 and x2 is 1 to 6, and the order of -(CH₂)ₓ₁- and -(CH(CH₃))ₓ₂- is not limited to the order in the formula described, and may be random.

In -(R^{b}O)ₙ-, there may be 2 or more types of Rs (e.g., 2 to 4 types, in particular, 2 types). -(R^{b}O)ₙ- may be, for example, a combination of -(R¹O)ₙ₁- and -(R²O)ₙ₂-wherein R¹ and R² are different from each other and are an alkylene group having 2 to 6 carbon atoms, n1 and n2 are a number of 1 or more, and the sum of n1 and n2 is 2 to 90.

In the formula (b1), (b2) and (b3), R^{b} is preferably an ethylene group, a propylene group or a butylene group, and particularly preferably a butylene group. In the formula (b1), (b2) and (b3), R^{b} may be a combination of two or more alkylene groups. In that case, at least one R is preferably an ethylene group, propylene group or a butylene group. Examples of combinations of R^{b} include a combination of an ethylene group/ a propylene group, a combination of an ethylene group/ a butylene group and a combination of a propylene group/ a butylene group. The monomer (b) may be a mixture of two or more. In that case, at least one of the monomer (b) is preferably a monomer in which R^{b} in the formula (b1), (b2) and (b3) is an ethylene group, a propylene group or a butylene group. When polyalkylene glycol di(meth)acrylate represented by the formula (b2) is used, using only polyalkylene glycol di(meth)acrylate as the monomer (b) is not preferred, and using it together with the monomer (b1) is preferred. Even in that case, it is preferable to keep the proportion of the compound represented by the formula (b2) at less than 30% by weight in the monomers (b) used.

Specific examples of monomers (b) include, but are not limited to, the following monomers:

CH₂=CHCOO-CH₂CH₂O-H

CH₂=CHCOO-CH₂CH₂CH₂O-H

CH₂=CHCOO-CH₂CH(CH₃)O-H

CH₂=CHCOO-CH(CH₃)CH₂O-H

CH₂=CHCOO-CH₂CH₂CH₂CH₂O-H

CH₂=CHCOO-CH₂CH₂CH(CH₃)O-H

CH₂=CHCOO-CH₂CH(CH₃)CH₂O-H

CH₂=CHCOO-CH(CH₃)CH₂CH₂O-H

CH₂=CHCOO-CH₂CH(CH₂CH₃)O-H

CH₂=CHCOO-CH₂C(CH₃)₂O-H

CH₂=CHCOO-CH(CH₂CH₃)CH₂O-H

CH₂=CHCOO-C(CH₃)₂CH₂O-H

CH₂=CHCOO-CH(CH₃)CH(CH₃)O-H

CH₂=CHCOO-C(CH₃)(CH₂CH₃)O-H

CH₂=CHCOO-(CH₂CH₂O)₂-H

CH₂=CHCOO-(CH₂CH₂O)₄-H

CH₂=CHCOO-(CH₂CH₂O)₅-H

CH₂=CHCOO-(CH₂CH₂O)₆-H

CH₂=CHCOO-(CH₂CH₂O)₅-CH₃

CH₂=CHCOO-(CH₂CH₂O)₉-CH₃

CH₂=CHCOO-(CH₂CH₂O)₂₃-CH₃

CH₂=CHCOO-(CH₂CH₂O)₉₀-CH₃

CH₂=CHCOO-(CH₂CH(CH₃)O)₉-H

CH₂=CHCOO-(CH₂CH(CH₃)O)₉-CH₃

CH₂=CHCOO-(CH₂CH(CH₃)O)₁₂-CH₃

CH₂=CHCOO-(CH₂CH₂O)₅-(CH₂CH(CH₃)O)₂-H

CH₂=CHCOO-(CH₂CH₂O)₅-(CH₂CH(CH₃)O)₃-CH₃

CH₂=CHCOO-(CH₂CH₂O)₈-(CH₂CH(CH₃)O)₆-CH₂CH(C₂H₅)C₄H₉

CH₂=CHCOO-(CH₂CH₂O)₂₃-OOC(CH₃)C=CH₂

CH₂=CHCOO-(CH₂CH₂O)₂₀-(CH₂CH(CH₃)O)₅-CH₂-CH=CH₂

CH₂=CHCOO-(CH₂CH₂O)₉-H

CH₂=C(CH₃)COO-CH₂CH₂O-H

CH₂=C(CH₃)COO-CH₂CH₂CH₂O-H

CH₂=C(CH₃)COO-CH₂CH(CH₃)O-H

CH₂=C(CH₃)COO-CH(CH₃)CH₂O-H

CH₂=C(CH₃)COO-CH₂CH₂CH₂CH₂O-H

CH₂=C(CH₃)COO-CH₂CH₂CH(CH₃)O-H

CH₂=C(CH₃)COO-CH₂CH(CH₃)CH₂O-H

CH₂=C(CH₃)COO-CH(CH₃)CH₂CH₂O-H

CH₂=C(CH₃)COO-CH₂CH(CH₂CH₃)O-H

CH₂=C(CH₃)COO-CH₂C(CH₃)₂O-H

CH₂=C(CH₃)COO-CH(CH₂CH₃)CH₂O-H

CH₂=C(CH₃)COO-C(CH₃)₂CH₂O-H

CH₂=C(CH₃)COO-CH(CH₃)CH(CH₃)O-H

CH₂=C(CH₃)COO-C(CH₃)(CH₂CH₃)O-H

CH₂=C(CH₃)COO-(CH₂CH₂O)₂-H

CH₂=C(CH₃)COO-(CH₂CH₂O)₄-H

CH₂=C(CH₃)COO-(CH₂CH₂O)₅-H

CH₂=C(CH₃)COO-(CH₂CH₂O)₆-H

CH₂=C(CH₃)COO-(CH₂CH₂O)₉-H

CH₂=C(CH₃)COO-(CH₂CH₂O)₅-CH₃

CH₂=C(CH₃)COO-(CH₂CH₂O)₉-CH₃

CH₂=C(CH₃)COO-(CH₂CH₂O)₂₃-CH₃

CH₂=C(CH₃)COO-(CH₂CH₂O)₉₀-CH₃

CH₂=C(CH₃)COO-(CH₂CH(CH₃)O)₉-H

CH₂=C(CH₃)COO-(CH₂CH(CH₃)O)₉-CH₃

CH₂=C(CH₃)COO-(CH₂CH(CH₃)O)₁₂-CH₃

CH₂=C(CH₃)COO-(CH₂CH₂O)₅-(CH₂CH(CH₃)O)₂-H

CH₂=C(CH₃)COO-(CH₂CH₂O)₅-(CH₂CH(CH₃)O)₃-CH₃

CH₂=C(CH₃)COO-(CH₂CH₂O)₈-(CH₂CH(CH₃)O)₆-CH₂CH(C₂H₅)C₄H₉

CH₂=C(CH₃)COO-(CH₂CH₂O)₂₃-OOC(CH₃)C=CH₂

CH₂=C(CH₃)COO-(CH₂CH₂O)₂₀-(CH₂CH(CH₃)O)₅-CH₂-CH=CH₂

CH₂=CH-C(=O)-NH-CH₂CH₂O-H

CH₂=CH-C(=O)-NH-CH₂CH₂CH₂O-H

CH₂=CH-C(=O)-NH-CH₂CH(CH₃)O-H

CH₂=CH-C(=O)-NH-CH(CH₃)CH₂O-H

CH₂=CH-C(=O)-NH-CH₂CH₂CH₂CH₂O-H

CH₂=CH-C(=O)-NH-CH₂CH₂CH(CH₃)O-H

CH₂=CH-C(=O)-NH-CH₂CH(CH₃)CH₂O-H

CH₂=CH-C(=O)-NH-CH(CH₃)CH₂CH₂O-H

CH₂=CH-C(=O)-NH-CH₂CH(CH₂CH₃)O-H

CH₂=CH-C(=O)-NH-CH₂C(CH₃)₂O-H

CH₂=CH-C(=O)-NH-CH(CH₂CH₃)CH₂O-H

CH₂=CH-C(=O)-NH-C(CH₃)₂CH₂O-H

CH₂=CH-C(=O)-NH-CH(CH₃)CH(CH₃)O-H

CH₂=CH-C(=O)-NH-C(CH₃)(CH₂CH₃)O-H

CH₂=CH-C(=O)-NH-(CH₂CH₂O)₂-H

CH₂=CH-C(=O)-NH-(CH₂CH₂O)₄-H

CH₂=CH-C(=O)-NH-(CH₂CH₂O)₅-H

CH₂=CH-C(=O)-NH-(CH₂CH₂O)₆-H

CH₂=CH-C(=O)-NH-(CH₂CH₂O)₉-H

CH₂=CH-C(=O)-NH-(CH₂CH₂O)₅-CH₃

CH₂=CH-C(=O)-NH-(CH₂CH₂O)₉-CH₃

CH₂=CH-C(=O)-NH-(CH₂CH₂O)₂₃-CH₃

CH₂=CH-C(=O)-NH-(CH₂CH₂O)₉₀-CH₃

CH₂=CH-C(=O)-NH-(CH₂CH(CH₃)O)₉-H

CH₂=CH-C(=O)-NH-(CH₂CH(CH₃)O)₉-CH₃

CH₂=CH-C(=O)-NH-(CH₂CH(CH₃)O)₁₂-CH₃

CH₂=CH-C(=O)-NH-(CH₂CH₂O)₅-(CH₂CH(CH₃)O)₂-H

CH₂=CH-C(=O)-NH-(CH₂CH₂O)₅-(CH₂CH(CH₃)O)₃-CH₃

CH₂=CH-C(=O)-NH-(CH₂CH₂O)₈-(CH₂CH(CH₃)O)₆-CH₂CH(C₂H₅)C₄H₉

CH₂=C(CH₃)-C(=O)-NH-CH₂CH₂O-H

CH₂=C(CH₃)-C(=O)-NH-CH₂CH₂CH₂O-H

CH₂=C(CH₃)-C(=O)-NH-CH₂CH(CH₃)O-H

CH₂=C(CH₃)-C(=O)-NH-CH(CH₃)CH₂O-H

CH₂=C(CH₃)-C(=O)-NH-CH₂CH₂CH₂CH₂O-H

CH₂=C(CH₃)-C(=O)-NH-CH₂CH₂CH(CH₃)O-H

CH₂=C(CH₃)-C(=O)-NH-CH₂CH(CH₃)CH₂O-H

CH₂=C(CH₃)-C(=O)-NH-CH(CH₃)CH₂CH₂O-H

CH₂=C(CH₃)-C(=O)-NH-CH₂CH(CH₂CH₃)O-H

CH₂=C(CH₃)-C(=O)-NH-CH₂C(CH₃)₂O-H

CH₂=C(CH₃)-C(=O)-NH-CH(CH₂CH₃)CH₂O-H

CH₂=C(CH₃)-C(=O)-NH-C(CH₃)₂CH₂O-H

CH₂=C(CH₃)-C(=O)-NH-CH(CH₃)CH(CH₃)O-H

CH₂=C(CH₃)-C(=O)-NH-C(CH₃)(CH₂CH₃)O-H

CH₂=C(CH₃)-C(=O)-NH-(CH₂CH₂O)₂-H

CH₂=C(CH₃)-C(=O)-NH-(CH₂CH₂O)₄-H

CH₂=C(CH₃)-C(=O)-NH-(CH₂CH₂O)₅-H

CH₂=C(CH₃)-C(=O)-NH-(CH₂CH₂O)₆-H

CH₂=C(CH₃)-C(=O)-NH-(CH₂CH₂O)₉-H

CH₂=C(CH₃)-C(=O)-NH-(CH₂CH₂O)₅-CH₃

CH₂=C(CH₃)-C(=O)-NH-(CH₂CH₂O)₉-CH₃

CH₂=C(CH₃)-C(=O)-NH-(CH₂CH₂O)₂₃-CH₃

CH₂=C(CH₃)-C(=O)-NH-(CH₂CH₂O)₉₀-CH₃

CH₂=C(CH₃)-C(=O)-NH-(CH₂CH(CH₃)O)₉-H

CH₂=C(CH₃)-C(=O)-NH-(CH₂CH(CH₃)O)₉-CH₃

CH₂=C(CH₃)-C(=O)-NH-(CH₂CH(CH₃)O)₁₂-CH₃

CH₂=C(CH₃)-C(=O)-NH-(CH₂CH₂O)₅-(CH₂CH(CH₃)O)₂-H

CH₂=C(CH₃)-C(=O)-NH-(CH₂CH₂O)₅-(CH₂CH(CH₃)O)₃-CH₃

CH₂=C(CH₃)-C(=O)-NH-(CH₂CH₂O)₈-(CH₂CH(CH₃)O)₆-CH₂CH(C₂H₅)C₄H₉.

Acrylate and acrylamide in which X² is a hydrogen atom are preferred as the monomer (b). The monomer (b) is particularly preferably hydroxyethyl acrylate, hydroxypropyl acrylate, hydroxybutyl acrylate or hydroxyethyl acrylamide.

### (c) Ionic group-containing monomer

The vinyl polymer may comprise a repeating unit derived from an ionic group-containing monomer (c). The monomer (c) is preferably a monomer having an ethylenically unsaturated double bond and an ionic group (in particular, an acrylic monomer). The ionic group is an anionic group and/or a cationic group, or a salt thereof.

The monomer (c) preferably has a (meth)acrylic group as the ethylenically unsaturated double bond, and for example, may have a (meth)acrylate group or a (meth)acrylamide group as the ethylenically unsaturated double bond.

Examples of monomers having an anionic group include a monomer having a carboxyl group, a sulfonic acid group or a phosphate group. Specific examples of monomers having an anionic group include (meth)acrylic acid, crotonic acid, maleic acid, fumaric acid, itaconic acid, citraconic acid, vinylsulfonic acid, (meth)allylsulfonic acid, styrene sulfonic acid, phosphoric acid (meth)acrylate, vinylbenzene sulfonic acid, acrylamide t-butylsulfonic acid and a salt thereof.

Examples of salts of the anionic group include alkaline metal salt, alkaline earth metal salt, and an ammonium salt such as methyl ammonium salt, ethanol ammonium salt and triethanol ammonium salt.

In the monomer having a cationic group, examples of cationic groups include an amino group, which is preferably a tertiary amino group and a quaternary amino group. It is preferable that in the tertiary amino group, two groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., a benzyl group (C₆H₅-CH₂-)). It is preferable that in the quaternary amino group, three groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., benzyl group (C₆H₅-CH₂-)). In the tertiary amino group and the quaternary amino group, the last group bonded to the nitrogen atom may have an ethylenically unsaturated double bond. The cationic group may be in the form of salt.

The cationic group in the form of salt is a salt with an acid (an organic acid or an inorganic acid). An organic acid such as a carboxylic acid having 1 to 20 carbon atoms (in particular, a monocarboxylic acid such as acetic acid, propionic acid, butyric acid and stearic acid) are preferred. Dimethylaminoethyl methacrylate, diethylaminoethyl methacrylate and a salt thereof are preferred.

Specific examples of monomers having a cationic group are as follows:
CH₂=CHCOO-CH₂CH₂-N(CH₃)₂ and a salt thereof (e.g., acetate)
CH₂=CHCOO-CH₂CH₂-N(CH₂CH₃)₂ and a salt thereof (e.g., acetate)
CH₂=C(CH₃)COO-CH₂CH₂-N(CH₃)₂ and a salt thereof (e.g., acetate)
CH₂=C(CH₃)COO-CH₂CH₂-N(CH₂CH₃)₂ and a salt thereof (e.g., acetate)
CH₂=CHC(O)N(H)-CH₂CH₂CH₂-N(-CH₃)₂ and a salt thereof (e.g., acetate)
CH₂=CHCOO-CH₂CH₂-N(-CH₃)(-CH₂-C₆H₅) and a salt thereof (e.g., acetate)
CH₂=C(CH₃)COO-CH₂CH₂-N(-CH₂CH₃)(-CH₂-C₆H₅)and a salt thereof (e.g., acetate)

   CH₂=CHCOO-CH₂CH₂-N⁺(CH₃)₃Cl⁻

   CH₂=CHCOO-CH₂CH₂-N⁺(-CH₃)₂(-CH₂-C₆H₅)Cl⁻

   CH₂=C(CH₃)COO-CH₂CH₂-N⁺(CH₃)₃Cl⁻

   CH₂=CHCOO-CH₂CH(OH)CH₂-N⁺(CH₃)₃Cl⁻

   CH₂=C(CH₃)COO-CH₂CH(OH)CH₂-N⁺(CH₃)₃Cl⁻

   CH₂=C(CH₃)COO-CH₂CH(OH)CH₂-N⁺(-CH₂CH₃)₂(-CH₂-C₆H₅)Cl⁻

   CH₂=C(CH₃)COO-CH₂CH₂-N⁺(CH₃)₃Br⁻

   CH₂=C(CH₃)COO-CH₂CH₂-N⁺(CH₃)₃I⁻

   CH₂=C(CH₃)COO-CH₂CH₂-N⁺(CH₃)₃O⁻SO₃CH₃

   CH₂=C(CH₃)COO-CH₂CH₂-N⁺(CH₃)(-CH₂-C₆H₅)₂Br⁻.

Methacrylic acid, acrylic acid and dimethylaminoethyl methacrylate are preferred, and methacrylic acid and dimethylaminoethyl methacrylate are more preferred as the ionic group-containing monomer (c).

### (d) Halogenated olefin monomer

The vinyl polymer may comprise a repeating unit derived from a halogenated olefin monomer (d). The halogenated olefin monomer (d) may not have a fluorine atom. The halogenated olefin monomer (d) is preferably an olefin having 2 to 20 carbon atoms and substituted by 1 to 10 chlorine atoms, bromine atoms or iodine atoms. The halogenated olefin monomer (d) is preferably chlorinated olefin having 2 to 20 carbon atoms, and particularly preferably an olefin having 2 to 5 carbon atoms and 1 to 5 chlorine atoms. Preferred examples of halogenated olefin monomers (d) include halogenated vinyl such as vinyl chloride, vinyl bromide and vinyl iodide, and halogenated vinylidene such as vinylidene chloride, vinylidene bromide and vinylidene iodide. Vinyl chloride and vinylidene chloride are preferred because they increase water-repellency, in particular, durability of water-repellency. The presence of the repeating unit derived from a halogenated olefin monomer (d) improves wash durability provided by the vinyl polymer.

### (e) Cross-linkable monomer

The vinyl polymer may comprise a repeating unit derived from a cross-linkable monomer (e). The cross-linkable monomer (e) has a reactive group and/or an ethylenically unsaturated double bond (preferably a (meth)acrylate group). The cross-linkable monomer (e) may be a monomer which does not include a fluorine atom. The cross-linkable monomer (e) may be a compound having at least two ethylenically unsaturated double bonds (preferably a (meth)acrylate group), or a compound having at least one ethylenically unsaturated double bond and at least one reactive group. Examples of reactive groups include a hydroxyl group, an epoxy group, chloromethyl group, a blocked isocyanate group, an amino group and a carboxyl group.

Examples of crosslinkable monomers may be a vinyl monomer having a reactive group, mono(meth)acrylate, di(meth)acrylate or di(meth)acrylamide having a reactive group.

Examples of crosslinkable monomers include, but are not limited to, diacetone (meth)acrylamide, 3-chloro-2-hydroxypropyl(meth)acrylate, 2-acetoacetoxyethyl (meth)acrylate, butadiene, isoprene, chloroprene, vinyl monochloroacetate, vinyl methacrylate, glycidyl (meth)acrylate, 1,4-butanediol di(meth)acrylate, 1,6-hexanediol di(meth)acrylate, 1,9-nonanediol di(meth)acrylate and neopentylglycol di(meth)acrylate.

### (f) Cyclic hydrocarbon group-containing monomer

The vinyl polymer may comprise a repeating unit derived from a cyclic hydrocarbon group-containing monomer (f). The cyclic hydrocarbon group-containing monomer (f) has a cyclic hydrocarbon group, and may have an ethylenically unsaturated double bond and a cyclic hydrocarbon group. The vinyl polymer may be a styrene polymer having a repeating unit derived from styrene or a styrene derivative.

The cyclic hydrocarbon group-containing monomer (f) preferably has a (meth)acrylic group as the ethylenically unsaturated double bond, and for example, may have a (meth)acrylate group or a (meth)acrylamide group as the ethylenically unsaturated double bond.

The cyclic hydrocarbon group may be alicyclic or aromatic. The cyclic hydrocarbon group may be saturated or unsaturated. The cyclic hydrocarbon group may be a monocyclic group, a polycyclic group, or a bridged-ring group, and is preferably a bridged-ring group. The cyclic hydrocarbon group may have a chain group (e.g., a halogen atom, a linear or branched hydrocarbon group (in particular, a linear or branched hydrocarbon group having 1 to 20 carbon atoms).

The cyclic hydrocarbon group may have 4 or more, 6 or more, or 8 or more, and 30 or less, 26 or less, 22 or less, 18 or less, or 14 or less carbon atoms.

Specific examples of cyclic hydrocarbon groups include a cyclohexyl group, a t-butylcyclohexyl group, an adamantyl group, a 2-methyl-2-adamantyl group, a 2-ethyl-2-adamantyl group, a bornyl group, an isobornyl group, a norbornyl group, a dicyclopentanyl group, a dicyclopentenyl group, a benzyl group, a phenyl group, a naphthyl group, a 2-t-butylphenyl group, a residue formed by eliminating one or more hydrogen atoms from those groups (e.g., a cyclohexylene group, an adamantylene group, a phenylene group and a naphthylene group), and a substituted group thereof.

Specific examples of cyclic hydrocarbon group-containing monomers (f) include cyclohexyl(meth)acrylate, t-butylcyclohexyl(meth)acrylate, benzyl (meth)acrylate, isobornyl (meth)acrylate, dicyclopentanyl(meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, 2-ethyl-2-adamantyl (meth)acrylate and a compound in which such acrylate is substituted with acrylamide. These may be used alone, or two or more of them may be used in combination.

An example of cyclic hydrocarbon group-containing monomers (f) is a styrene compound. The styrene compound may be modified with a chain group (e.g., a halogen atom, a linear or branched hydrocarbon group (in particular, a linear or branched hydrocarbon group having 1 to 20 carbon atoms)). Specific examples thereof include styrene, 4-t-butylstyrene, 3,5-di-t-butylstyrene, 2,4,6-tri-t-butylstyrene, 4-methylstyrene, 3,5-dimethylstyrene and 2,4,6-trimethylstyrene. The styrene compound may be an α-methylstyrene compound, an α-chlorostyrene compound with a chlorine atom at the α position, or a styrene compound with a hydrogen atom at the α position.

### (g) Polysiloxane group-containing monomer

The vinyl polymer may comprise a repeating unit derived from a polysiloxane group-containing monomer (g). The monomer (g) has one ethylenically unsaturated double bond and a polysiloxane group.

The monomer (g) preferably has a (meth)acrylic group, and for example, may have a (meth)acrylate group or a (meth)acrylamide group as the ethylenically unsaturated double bond.

The polysiloxane group of the monomer (g) is as described in the above (Polysiloxane group). The monomer (g) may have a polydimethylsiloxane group in the side chain.

The ethylenically unsaturated double bond and the polysiloxane group may be bonded by any linker group.

The monomer (g) is preferably a monomer represented by the formula:

CH₂=C(-X^{g})-C(=O)-Y^{g}(R)^{g}ₖ

[wherein R^{g} is a group having a polydimethylsiloxane group,
X^{g} is a hydrogen atom, a monovalent organic group or a halogen atom,
Y^{g} is a group composed of at least one selected from a divalent to tetravalent hydrocarbon group having 1 carbon atom (in particular, -CH₂-, -CH(-)₂), -C₆H₄-, -O-, -C(=O)-, -S(=O)₂- and -NH-, and
k is 1 to 3.]

X^{g} may be a hydrogen atom, a methyl group, a halogen excluding a fluorine atom, a substituted or non-substituted benzyl group, or a substituted or non-substituted phenyl group. Examples of X^{g} include a hydrogen atom, a methyl group, a chlorine atom, a bromine atom, an iodine atom and a cyano group. X^{g} is preferably a hydrogen atom, a methyl group or a chlorine atom. X^{g} is particularly preferably a hydrogen atom.

Y^{g} is a divalent to tetravalent group. Y^{g} is preferably a divalent group.

Y^{g} is preferably a group composed of at least one selected from a hydrocarbon group having 1 carbon atom, - C₆H₄-, -O-, -C(=O)-, -S(=O)₂- and -NH-. It is preferable that Y^{g} is not a hydrocarbon group. Examples of hydrocarbon groups having 1 carbon atom include -CH₂-, - CH(-)₂ or -C(-)₃. Hydrocarbon groups having 1 carbon atom may be repeatedly linked to form a hydrocarbon group having 2 or more carbon atoms, such as -(CH₂)ₘ- (m is an integer of 1 to 5). Y^{g} may have an NH group.

Y^{g} may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-
[wherein Y' is a direct bond, -O-, -NH- or -S(=O)₂-, and R' is -(CH₂)ₘ- (wherein m is an integer of 1 to 5) or -C₆H₄- (a phenylene group)].

Specific examples of Y^{g} include -O-, -NH-, -O-C(=O)-, -C(=O)-NH-, -NH-C(=O)-, -O-C(=O)-NH-, -NH-C(=O)-O-, -NH-C(=O)-NH-, -O-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, -O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH-(CH₂)ₘ-NH-C₆H₄-, -NH-(CH₂)ₘ-NH-S(=O)₂-, or -NH-(CH₂)ₘ-S(=O)₂-NH- [wherein m is 1 to 5, in particular 2 or 4].

Y^{g} is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂-, - O-(CH₂)ₘ-S(=O)₂-NH-, -NH-(CH₂)ₘ-NH-S(=O)₂-, or -NH-(CH₂)ₘ-S(=O)₂-NH- [wherein m is an integer of 1 to 5, in particular 2 or 4]. Y^{g} is more preferably -O- or -O-(CH₂)ₘ-NH-C(=O)-, in particular -O-(CH₂)ₘ-NH-C(=O)-.

R^{g} is a group having a polydimethylsiloxane group. The polydimethylsiloxane group is as described in the above (Polysiloxane group).

Examples of monomers (g) are as follows:

CH₂=C(-X^{g})-C(=O)-Y^{g}-[-Si(R^{s})₂-O-]ₐ-Si(R^{s})₃

CH₂=C(-X^{g})-C(=O)-Y^{g}-L^{s1}-[-Si(R^{s})₂-O-]ₐ-Si(R^{s})₃

CH₂=C(-X^{g})-C(=O)-Y^{g}-L^{s1}-O-L^{s1}-[-Si(R^{s})₂-O-]ₐ-R^{s}

CH₂=C(-X^{g})-C(=O)-Y^{g}-L^{s1}-[-Si(R^{s})₂-O-]ₐ-Si(R^{s})₃

CH₂=C(-X^{g})-C(=O)-Y^{g}-L^{s1}-O-L^{s1}-[-Si(R^{s})₂-O-]ₐ-R^{s}

CH₂=C(-X^{g})-C(=O)-Y^{g}-L^{s1}-[-Si(R^{s})₂-O-]ₐ-Si(R^{s})₃,

CH₂=C(-X^{g})-C(=O)-Y^{g}-L^{s1}-[-Si(R^{s})₂-O-]ₐ-R^{s}

[wherein the respective symbols are as described above].

### (h) Other monomers

Other monomers are not limited to those examples, and include acrylonitrile, short-chain alkyl (meth)acrylate, vinyl acetate and vinyl alkyl ether. Other monomers (h) may be used alone, or two or more of them may be used in combination.

### [Composition of polymer]

The combination of the monomers (a) to (g) constituting the repeating unit of the vinyl polymer is not limited, and is for example, as follows (parentheses omitted).
a $a + b$ $a + b + c$ $a + c$ $a + d$ $a + b + c + d$ $a + b + c + d + e$ $a + b + c + d + e + f$

In the above combinations, the monomer (g) may also be used instead of the monomer (a) or in addition to the monomer (a). Other monomers (g) may also be used together with the above combinations. When the vinyl polymer is used for a pulp product, preferably the monomer (a), the monomer (b) and the monomer (c) are used together.

The amount of the repeating unit derived from the monomer (a) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the monomer (a) (in particular the monomer (a1)) may be more than 90% by weight, 92% by weight or more, 94% by weight or more, 96% by weight or more, 98% by weight or more, 99% by weight or more, 99.5% by weight or more, or 100% by weight, and is, for example, 93% by weight or more, preferably more than 97% by weight, and 100% by weight or less, 99% by weight or less, 97% by weight or less, 95% by weight or less, or 93% by weight or less, and in an embodiment more than 90% by weight and 100% by weight or less based on the vinyl polymer. The amount of the monomer (a1) may be 100% by weight based on the vinyl polymer.

The amount of the monomer (a1) in the monomer (a) may be 10% by weight or more, 20% by weight or more, 30% by weight or more, 40% by weight or more, 50% by weight or more, 60% by weight or more, 70% by weight or more, or 80% by weight or more, and is preferably 30% by weight or more, and may be 100% by weight or less, 90% by weight or less, 80% by weight or less, 50% by weight or less, 30% by weight or less.

The amount of the monomer (a2) in the monomer (a) may be 10% by weight or more, 20% by weight or more, 30% by weight or more, 40% by weight or more, 50% by weight or more, 60% by weight or more, 70% by weight or more, or 80% by weight or more, and may be 100% by weight or less, 90% by weight or less, 80% by weight or less, 50% by weight or less, 30% by weight or less.

The amount of the repeating unit derived from the monomer (b) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (b) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, and 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (c) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (c) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (d) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more based on the vinyl polymer. Furthermore, the amount of the repeating unit derived from the monomer (d) may be 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (d) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (e) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (e) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (f) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (f) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (g) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (g) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by mass of the repeating unit derived from the monomer (a).

The amount of the repeating unit derived from the monomer (h) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less based on the vinyl polymer.

The amount of the repeating unit derived from the monomer (h) may be 0.01 part by weight or more, 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less based on 100 parts by weight of the repeating unit derived from the monomer (a).

When the monomer (g) is used instead of the monomer (a), the term "100 parts by weight of the repeating unit derived from the monomer (a)" in the above explanation of the amount of the respective monomers may be interchanged with "100 parts by weight of the repeating unit derived from the monomer (g)".

### [Polymerization method]

The vinyl polymer may be polymerized by a known polymerization method, and conditions of polymerization reaction may be optionally selected. Examples of polymerization methods include solution polymerization, suspension polymerization, emulsion polymerization, and condensation polymerization.

Solution polymerization uses a method in which monomer is dissolved in an organic solvent in the presence of a polymerization initiator, and after nitrogen replacement, the mixture is heated and stirred at 30 to 120°C for 1 to 10 hours. Examples of polymerization initiators include azobisisobutyronitrile, benzoyl peroxide, di-t-butyl peroxide, lauryl peroxide, cumene hydroperoxide, t-butyl peroxypivalate and diisopropyl peroxydicarbonate. 0.01 to 20 parts by weight, for example, 0.01 to 10 parts by weight of polymerization initiator is used based on 100 parts by weight of the monomer.

Organic solvents are inert to monomers and dissolves them. Examples thereof include ester (e.g., ester having 2 to 40 carbon atoms such as ethyl acetate and butyl acetate), ketone (e.g., ketone having 2 to 40 carbon atoms such as methyl ethyl ketone, diisobutyl ketone and methyl isobutyl ketone), alcohol (e.g., alcohol having 1 to 40 carbon atoms such as ethanol, butanol and isopropyl alcohol). Specific examples of solvents include acetone, chloroform, HCFC-225, isopropyl alcohol, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane and trichlorotrifluoroethane. 10 to 3,000 parts by weight, for example, 50 to 2,000 parts by weight of organic solvent is used based on 100 parts by weight of the total amount of the monomers.

Emulsion polymerization uses a method in which monomer is emulsified in water in the presence of a polymerization initiator and an emulsifier, and after nitrogen replacement, the monomer is polymerized by stirring at 50 to 80°C for 1 to 20 hours. As the polymerization initiator, a water-soluble initiator such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, sodium peroxide, potassium persulfate and ammonium persulfate, and an oil-soluble initiator such as azobisisobutyronitrile, benzoyl peroxide, di-t-butylperoxide, lauryl peroxide, cumene hydroperoxide, t-butyl peroxypivalate and diisopropyl peroxydicarbonate are used. 0.01 to 10 parts by weight of polymerization initiator is used based on 100 parts by weight of the monomer.

To obtain an aqueous polymer dispersion having excellent standing stability, it is desirable to perform polymerization by forming fine particles of monomers in water by using an emulsification device which can offer high crush energy, such as a high pressure homogenizer and a ultrasonic homogenizer. The emulsifier may be anionic, cationic or nonionic, and 0.5 to 20 parts by weight of the emulsifier may be used based on 100 parts by weight of the monomer. It is preferable to use an anionic and/or nonionic and/or cationic emulsifier. If monomers are not completely dissolved, it is preferable to add a compatibilizer which dissolves the monomers completely, such as a water-soluble organic solvent or a low molecular weight monomer. Addition of the compatibilizer improves emulsifiability and copolymerizability.

The above organic solvent may be used as the aqueous organic solvent. Examples thereof include acetone, methyl ethyl ketone, ethyl acetate, propylene glycol, dipropylene glycol monomethyl ether, dipropylene glycol, tripropylene glycol and ethanol. 1 to 50 parts by weight, for example, 10 to 40 parts by weight of the organic solvent may be used based on 100 parts by weight of water. Examples of low molecular weight monomers include methyl methacrylate, glycidyl methacrylate and 2,2,2-trifluoroethyl methacrylate. 1 to 50 parts by weight, for example, 10 to 40 parts by weight of the low molecular weight monomer may be used based on 100 parts by weight of the total amount of the monomers.

A chain transfer agent may also be used in polymerization. The molecular weight of the polymer can be changed depending on the amount of use of the chain transfer agent. Examples of chain transfer agents include a mercaptan group-containing compound, in particular, alkyl mercaptan having 1 to 40 carbon atoms, such as lauryl mercaptan, thioglycol and thioglycerol, and an inorganic salt such as sodium hypophosphite and sodium hydrogen sulfide. 0.01 to 10 parts by weight, for example, 0.1 to 5 parts by weight of the chain transfer agent may be used based on 100 parts by weight of the total amount of the monomers.

### {Modified body of amine}

The modified body of amine will be described as an example of the liquid repellent compound. A modified body of amine is a compound prepared by chemically modifying an amine compound so that the amine compound exhibits liquid repellency.

The modified body of amine according to the present disclosure is highly dispersible in liquid medium due to its structure, and thus the repellent of the present disclosure can have stable properties. Repellents using a polymer compound as an active ingredient tend to have a wide molecular weight distribution and contain relatively large amounts of impurity components. On the other hand, the molecular weight of the modified body of amine can be reduced and the molecular weight distribution of the modified body of amine can be narrowed (monodisperse), and this can lead to better performance.

### [Structure]

The modified body of amine may have a molecular weight of 200 or more, 300 or more, 350 or more, 400 or more, 500 or more, 550 or more, or 750 or more, and 3,000 or less, 2,500 or less, 2,000 or less, 1,500 or less, 1,000 or less, 900 or less, 800 or less, 750 or less, or 500 or less.

In some embodiments, the modified body of amine in the present disclosure does not have an active hydrogen-containing group. Examples of active hydrogen-containing groups include an amino group (an amino group not adjacent to a carbonyl group, e.g., a primary or secondary amino group), a hydroxy group and a carboxyl group. In some embodiments, the modified body of amine in the present disclosure does not have a primary or secondary amino group which is not adjacent to a carbonyl group.

The modified body of amine in the present disclosure may be polyamide having a plurality of amide structures, and for example, may be a polyamide in which amine (a raw material amine compound, for example, polyamine) is modified with a plurality of modifying group (e.g., Z^{N} described below) through an amide structure. Here, amide may have an amide structure included in a urethane group, a urea group, imide and the like.

The modified body of amine may be a compound in which amine (a raw material amine compound) is modified with a hydrocarbon group having 6 or more carbon atoms and optionally having a substituent or a polysiloxane group.

In the modified body of amine, one or more of amino groups in amine are substituted with a modifying group. The modifying group is preferably a hydrocarbon group having 6 or more carbon atoms and optionally having a substituent, or a polysiloxane group, which is in particular a monovalent hydrocarbon group having 6 or more and 40 or less carbon atoms and optionally having a substituent, or a monovalent polysiloxane group. The modified body of amine may have a structure in which amine is modified with a monovalent aliphatic hydrocarbon group having 6 or more and 40 or less carbon atoms from the viewpoint of the improvement in liquid-repellency.

Details of the hydrocarbon group having 6 or more carbon atoms and optionally having a substituent and the polysiloxane group are as described in the above (Hydrocarbon group having 6 or more carbon atoms and optionally having substituent) and (Polysiloxane group).

### (Amine backbone)

The modified body of amine in the present disclosure has an amine backbone. The amine backbone has one or more amino groups which have a predetermined number of bonds (valence), obtained by removing a predetermined number of atoms or atomic groups (e.g., hydrogen) from an amine compound. The amino group in the amine backbone refers to a group selected from the group consisting of - NH₂, -NH- and -N(-)₂, and also includes an amino group adjacent to a carbonyl group, which is included in an amide group, a urethane group, a urea group, imide and the like. The amine backbone may be an aliphatic group or an aromatic group having one or more amino groups, and this does not exclude the presence of a heteroatom other than nitrogen.

The amine backbone may have a molecular weight of 30 or more, 50 or more, 100 or more, 200 or more, 300 or more, 400 or more, or 500 or more, and 2,800 or less, 2,500 or less, 2,000 or less, 1,500 or less, 1,000 or less, 750 or less, 600 or less, 450 or less, 300 or less, or 250 or less.

The amine backbone may have 1 or more, 2 or more, 3 or more, 4 or more, 6 or more, 8 or more, 10 or more, 12 or more, 14 or more, 16 or more, or 18 or more and 100 or less, 80 or less, 60 or less, 40 or less, 30 or less, 20 or less, 10 or less, or 5 or less carbon atoms, and has preferably 50 or less, and particularly preferably 30 or less carbon atoms.

The amine backbone has one or more amino groups. The amino group is a mono to trivalent amino group and is one or more groups selected from the group consisting of -NH₂, -NH- and -N(-)₂. The amine backbone may have 1 or more, 2 or more, 3 or more, 4 or more, 5 or more, or 6 or more, and preferably 2 or more, and 12 or less, 10 or less, 8 or less, 6 or less, 4 or less, 3 or less, 2 or less, or 1 amino group.

The amine backbone has a hydrocarbon group (an aliphatic hydrocarbon group or an aromatic hydrocarbon group). The hydrocarbon group may be cyclic, branched or linear. The hydrocarbon group may be saturated or unsaturated (for example, saturated). In this case, the hydrocarbon group may be interrupted by an oxygen atom and/or a sulfur atom, and may be composed of only a carbon atom, a nitrogen atom and a hydrogen atom. The hydrocarbon group may be a hydrocarbon group optionally interrupted by an oxygen atom and/or a sulfur atom (e.g., a chain saturated aliphatic hydrocarbon group or an aromatic hydrocarbon group having 1 or 2 hydrocarbon aromatic rings), a usual hydrocarbon group (e.g., a chain saturated aliphatic hydrocarbon group or an aromatic hydrocarbon group having 1 or 2 hydrocarbon aromatic rings). When the hydrocarbon group is interrupted by an oxygen atom and/or a sulfur atom, the amine backbone has an ether, thioether, polyether or polythioether structure. The amine backbone may have 1 or more, 2 or more, 3 or more, 4 or more, 5 or more, or 6 or more, and 12 or less, 10 or less, 8 or less, 6 or less, 4 or less, 3 or less, 2 or less, or 1 hydrocarbon group.

The amine backbone may be composed of mono to trivalent amino group and a chain saturated aliphatic hydrocarbon group or aromatic hydrocarbon group optionally interrupted by an oxygen atom and/or a sulfur atom.

The molar ratio between the carbon atom and the nitrogen atom (C/N ratio) in the amine backbone may be 1 or more, 2 or more, 2.5 or more, 3 or more, 3.5 or more, or 4 or more, and 8 or less, 7 or less, 6 or less, 5 or less, 4 or less, 3.5 or less, 3 or less, 2.5 or less, or 2 or less, and is preferably 6 or less or 4 or less.

(-Y^{N}-Z^{N}ₙ)

The modified body of amine in the present disclosure has one or more groups represented by the following formula:

-Y^{N}-Z^{N}ₙ

[wherein Y^{N} is a direct bond or a 1+n valent group,
Z^{N} is a monovalent hydrocarbon group having 6 or more and 40 or less carbon atoms and optionally having a substituent or a monovalent polysiloxane group, and
n is an integer of 1 or more and 3 or less], and
at least one -Y^{N}-Z^{N}ₙ is optionally bonded to the nitrogen atom of the amine backbone.

The modified body of amine may have 1 or more, 2 or more, 3 or more, 4 or more, 5 or more, or 6 or more -Y^{N}-Z^{N}ₙ, and has preferably 2 or more -Y^{N}-Z^{N}ₙ, and may have 12 or less, 10 or less, 8 or less, 6 or less, 4 or less, 3 or less, 2 or less, or 1 -Y^{N}-Z^{N}ₙ.

At least one -Y^{N}-Z^{N}ₙ in the modified body of amine is bonded to the nitrogen atom of the amine backbone. The proportion of the number of -Y^{N}-Z^{N}ₙ bonded to the nitrogen atom of the amine backbone to the total number of -Y^{N}-Z^{N}ₙ in the modified body of amine may be 10% or more, 30% or more, 60% or more, 80% or more, or 100%, and may be 100% or less, 95% or less, 75% or less, 50% or less, or 25% or less. -YN⁻ZNⁿ not bonded to the nitrogen atom of the amine backbone is optionally bonded to another group (e.g., a hydrocarbon group) of the amine backbone.

### (Y^{N})

Y^{N} is a direct bond or a 1+n valent group, and preferably a 1+n valent group. Y^{N} functions as a linker connecting the amine backbone and n Z^{N} groups.

n is the number of Z^{N} bonded to Y^{N}, and may be an integer of 1 or more and 3 or less. n may be 1 or more, 2 or more, or 3 or more, and 3 or less, 2 or less, or 1 or less, and is, for example, 2 or less.

Y^{N} may be an aliphatic group (unsaturated aliphatic group or saturated aliphatic group) or an aromatic group.

Y^{N} may have a molecular weight of 10 or more, 50 or more, 100 or more, 200 or more, 300 or more, 500 or more, or 750 or more, and 2,000 or less, 1,500 or less, 1,000 or less, 750 or less, 500 or less, or 300 or less.

Y^{N} may have a carbonyl group. Y^{N} may have one or more selected from the group consisting of an amide group, a urea group, a urethane group and an imide group. Alternatively, Y^{N} may form one or more selected from the group consisting of an amide group, a urea group, a urethane group and imide with the amino group in the amine backbone. Examples of the amide group, urea group, urethane group and imide group include:

-O-C(=O)-NR'-,

-NR'-C(=O)-,

-NR'-C(=O)-O-,

-NR'-C(=O)-NR'-

-C(=O)-NR'-

-C(=O)-NR'-C(=O)-

[wherein R' is a hydrogen atom or a hydrocarbon group having 1 to 30 (e.g., 1 to 20, 1 to 10, or 1 to 4) carbon atoms]. Y^{N} is preferably bonded to a nitrogen atom in the amine backbone through a -(C=O)- group.

Y^{N} may be a 1+n valent group composed of one or more selected from the group consisting of a direct bond, -O-, -C(=O)-, -C(=NR')-, -S-, -S(=O)₂-, -C(=S)-, -NR'-, - C(OR')R'-, -C(OR')(-)₂, -N(-)₂, a divalent to tetravalent aliphatic hydrocarbon group having 1 to 20 carbon atoms, a divalent to tetravalent hydrocarbon aromatic ring and a divalent to tetravalent heterocyclic ring wherein R' is a hydrogen atom or a hydrocarbon group having 1 to 30 (for example, 1 to 20, 1 to 10, or 1 to 4) carbon atoms.

Y^{N} is a 1+n valent group composed of one or more selected from the group consisting of Y^{N1} and Y^{N2}.

Y^{N1} is a group composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or a hydrocarbon group having 1 to 30 (for example, 1 to 20, 1 to 10, or 1 to 4) carbon atoms),

Y^{N2} is a group composed of one or more selected from the group consisting of a divalent to tetravalent aliphatic hydrocarbon group having 1 to 20 carbon atoms, a divalent to tetravalent hydrocarbon aromatic ring, and a divalent to tetravalent heterocyclic ring. In the present description, the left side of the group represented by Y^{N} is bonded to the amine backbone and the right side thereof is bonded to Z^{N}.

### ○ Y^{N1}

Y^{N1} is a non-hydrocarbon linker.

Y^{N1} is a direct bond or a divalent or higher valent group. Y^{N1} may have a valence of 2 to 4, 2 or 3, or 2. It is preferable that Y^{N1} is not limited to direct bond.

Y^{N1} may have a molecular weight of 10 or more, 50 or more, 100 or more, 200 or more, 300 or more, or 500 or more, and 2,000 or less, 1,500 or less, 1,000 or less, 750 or less, or 500 or less.

Y^{N1} may be composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or a hydrocarbon group having 1 to 30 (for example, 1 to 20, 1 to 10, or 1 to 4) carbon atoms). Examples of Y^{N1} include:
a direct bond,

   -O-,

   -O-C(=O)-,

   -O-C(=O)-O-,

   -O-C(=O)-NR'-,

   -NR'-,

   -NR'-C(=O)-,

   -NR'-C(=O)-O-,

   -NR'-C(=O)-NR'-,

   -C(=O)-,

   -C(=O)-O-,

   -C(=O)-NR'-,

   -C(=O)-NR'-C(=O)-,

   -C(=NR')-,

   -S-,

   -SO₂-,

   -SO₂NR'-,

   -C(OR')R'-,

   -C(OR')(-)₂,

   -N(-)₂
[wherein R' is independently at each occurrence a hydrogen atom or a hydrocarbon group having 1 to 30 (for example, 1 to 20, 1 to 10, or 1 to 4) carbon atoms]. When Y^{N1} is bonded to the nitrogen atom of the amine backbone, the nitrogen atom is regarded as a part of the amine backbone (an amino group).

### ∘ Y^{N2}

Y^{N2} is a hydrocarbon optionally having a substituent, a hydrocarbon aromatic ring optionally having a substituent or a heterocyclic linker optionally having a substituent.

Y^{N2} may be a hydrocarbon group or a non-hydrocarbon group (including a heteroatom). Y^{N2} may be aliphatic or aromatic. Y^{N2} may be linear, branched or cyclic.

Y^{N2} is a divalent or higher valent group. Y^{N2} may have a valence of, for example, 2 to 4, 2 or 3, or 2.

Y^{N2} may have 1 or more, 2 or more, 3 or more, 4 or more, 6 or more, 8 or more, 10 or more, 12 or more, 14 or more, 16 or more, or 18 or more carbon atoms, and 40 or less, 35 or less, 30 or less, 25 or less, 20 or less, 15 or less, 10 or less, or 5 or less carbon atoms.

Y^{N2} is composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms, and 35 or less, 30 or less, 25 or less, 20 or less, 15 or less, 10 or less, or 5 or less carbon atoms. The aliphatic hydrocarbon group may have a valence of 2 or more, 3 or more, or 4, and 4 or less, 3 or less, or 2.

The aliphatic hydrocarbon group may have a substituent. Examples of substituents include -OR', - N(R')₂, -COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene and coronene. The number of ring constituting atoms of the hydrocarbon aromatic ring is 3 to 20, 4 to 16, or 5 to 12 and preferably 5 to 12. The hydrocarbon aromatic ring may have a valence of 2 or more, 3 or more, or 4, and may be 4 or less, 3 or less, or 2.

The hydrocarbon aromatic ring may have a substituent. Examples of substituents include -R', -OR', -N(R')₂, - COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon aromatic ring having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline, and the like. The number of ring constituting atom of the heterocyclic ring is 3 to 20, 4 to 16, or 5 to 12 and preferably 5 to 12. A valence of the heterocyclic ring may be 2 or more, 3 or more, or 4, and may be 4 or less, 3 or less, or 2.

The heterocyclic ring may have a substituent. Examples of substituents include -R', -OR', -N(R')₂, - COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the carbon atom and the heteroatom may be 60 mol% or more, 70 mol% or more, 80 mol% or more, 90 mol% or more, 95 mol% or more, or 99 mol% or more, and is, for example, 65 mol% or more, and may be 95 mol% or less, 90 mol% or less, 85 mol% or less, 80 mol% or less, or 70 mol% or less.

Examples of Y^{N2} include

-Ali-

-Cy-

-Ali(-)₂

-Cy(-)₂

(-)₂Ali-

(-)₂Cy-

(-)₂Ali(-)₂

(-)₂Cy(-)₂

-Ali-Cy-

-Cy-Ali-

-Cy-Ali-Cy-

-Ali-Cy-Ali-

[wherein Ali is an aliphatic hydrocarbon group having 1 to 20 carbon atoms and Cy is a hydrocarbon aromatic ring or a heterocyclic ring].

Specific examples of Y^{N2} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

### · Examples of Y^{N}

Examples of Y^{N} will be described. In the following, R' is independently at each occurrence a hydrogen atom or a hydrocarbon group having 1 to 30 (for example, 1 to 20, 1 to 10, or 1 to 4) carbon atoms.

When Y^{N} is divalent, examples of Y^{N} include -Y^{N1}-, - Y^{N1}-Y^{N2}-, -Y^{N1}-Y^{N2}-Y^{N1}-, -Y^{N1}-Y^{N2}-Y^{N1}-Y^{N2}-, -Y^{N2}-, -Y^{N2}-Y^{N1}-, - Y^{N2}-Y^{N1}-Y^{N2}- and -Y^{N2}-Y^{N1}-Y^{N2}-Y^{N1}-.

When Y^{N} is trivalent, examples of Y^{N} include -Y^{N1}(-)₂, -Y^{N1}-Y^{N2}(-)₂, -Y^{N1}-(Y^{N2}-)₂, -Y^{N1}-Y^{N2}-Y^{N1}(-)₂, -Y^{N1}-Y^{N2}(-Y^{N1}-)₂, - Y^{N1}-(Y^{N2}-Y^{N1}-)₂, -Y^{N1}-Y^{N2}-Y^{N1}-Y^{N2}(-)₂, -Y^{N1}-Y^{N2}-Y^{N1}-(Y^{N2}-)_{2,} -Y^{N1}-Y^{N2}-(Y^{N1}-Y^{N2}-)_{2,} -Y^{N1}-(Y^{N2}-Y^{N1}-Y^{N2}-)₂;
-Y^{N2}(-)₂, -Y^{N2}-Y^{N1}(-)₂, -Y^{N2}-(Y^{N1}-)₂, -Y^{N2}-Y^{N1}-Y^{N2}(-)₂, -Y^{N2}-Y^{N1}(-Y^{N2}-)₂, -Y^{N2}-(Y^{N1}-Y^{N2}-)₂, -Y^{N2}-Y^{N1}-Y^{N2}-Y^{N1}(-)₂, -Y^{N2}-Y^{N1}-Y^{N2}-(Y^{N1}-)_{2,} -Y^{N2}-Y^{N1}-(Y^{N2}-Y^{N1}-)_{2,} and -Y^{N2}-(Y^{N1}-Y^{N2}-Y^{N1}-)₂.

When Y^{N} is tetravalent, examples of Y^{N} include -Y^{N1}(-)₃, -Y^{N1}-Y^{N2}(-)₃, -Y^{N1}-(Y^{N2}-)₃, -Y^{N1}-Y^{N2}-Y^{N1}(-)₃, -Y^{N1}-Y^{N2}(-Y^{N1}-)₃, -Y^{N1}-(Y^{N2}-Y^{N1}-)₃, -Y^{N1}-Y^{N2}-Y^{N1}-Y^{N2}(-)₃, -Y^{N1}-Y^{N2}-Y^{N1}-(Y^{N2}-)_{3,} -Y^{N1}-Y^{N2}-(Y^{N1}-Y^{N2}-)_{3,} -Y^{N1}-(Y^{N2}-Y^{N1}-Y^{N2}-)₃;
-Y^{N2}(-)₃, -Y^{N2}-Y^{N1}(-)₃, -Y^{N2}-(Y^{N1}-)₃, -Y^{N2}-Y^{N1}-Y^{N2}(-)₃, -Y^{N2}-Y^{N1}(-Y^{N2}-)₃, -Y^{N2}-(Y^{N1}-Y^{N2}-)₃, -Y^{N2}-Y^{N1}-Y^{N2}-Y^{N1}(-)₃, -Y^{N2}-Y^{N1}-Y^{N2}-(Y^{N1}-)_{3,} -Y^{N2}-Y^{N1}-(Y^{N2}-Y^{N1}-)_{3,} and -Y^{N2}-(Y^{N1}-Y^{N2}-Y^{N1}-)₃.

Preferred examples of Y^{N} include
-Y^{N1}-, -Y^{N1}-Y^{N2}-, -Y^{N1}-Y^{N2}-Y^{N1}-, -Y^{N1}-Y^{N2}(-)₂, -Y^{N2}-, -Y^{N2}-Y^{N1}-, -Y^{N2}-Y^{N1}-Y^{N2}-, -Y^{N2}-Y^{N1}(-)₂. It is preferable that in the modified body of amine, there is - (C=O)- at the end of the amine backbone in one or more Y^{N}, and one or more Y^{N} are bonded to the nitrogen atom in the amine backbone.

Y^{N} is preferably
-Y^{N1}-, -Y^{N1}-Y^{N2}-, -Y^{N1}-Y^{N2}-Y^{N1}-, -Y^{N1}-Y^{N2}(-)₂,
-Y^{N2}-, -Y^{N2}-Y^{N1}-, -Y^{N2}-Y^{N1}-Y^{N2}-, -Y^{N2}-Y^{N1}(-)₂,
[wherein Y^{N1} is independently at each occurrence a direct bond,

   -O-,

   -O-C(=O)-,

   -O-C(=O)-O-,

   -O-C(=O)-NR'-,

   -NR'-,

   -NR'-C(=O)-,

   -NR'-C(=O)-O-,

   -NR'-C(=O)-NR'-,

   -C(=O)-,

   -C(=O)-O- or

   -C(=O)-NR'-

   -C(=O)-NR'-C(=O)-
(wherein R' is independently at each occurrence a hydrogen atom or a hydrocarbon group having 1 to 30 (for example, 1 to 20, 1 to 10, or 1 to 4) carbon atoms), and

Y^{N2} is a divalent to tetravalent aliphatic hydrocarbon group having 1 to 10 carbon atoms, or a divalent aromatic group (for example, a divalent phenyl group or a divalent triazole group)]. By this, excellent liquid-repellency is imparted to substrates.

Specific examples of Y^{N} also include:

*-(C=O)-

-O-(C=O)-NR'-

[wherein * means a bond to a nitrogen atom in the amine backbone,
R' is a hydrogen atom or a hydrocarbon group having 1 to 30 (for example, 1 to 20, 1 to 10, or 1 to 4) carbon atoms].

### (Z^{N})

Z^{N} is a monovalent hydrocarbon group having 6 or more and 40 or less carbon atoms and optionally having a substituent or a monovalent polysiloxane group. The same explanation in the above (Hydrocarbon group having 6 or more carbon atoms and optionally having substituent) and (Polysiloxane group) applies.

### [Examples of modified body of amine]

### (Example 1 of modified body of amine)

An example of the modified body of amine is (Example 1 of modified body of amine), which is a compound represented by the following formula:

N(-Y^{N}-Z^{N}ₙ)ₚ(-H)_{q}-L¹-[N(-Y^{N}-Z^{N}ₙ)ᵣ(-H)ₛ-L¹-]ₜ-N(-Y^{N}-Z^{N}ₙ)ₚ(- H)_{q}

[wherein Y^{N} is independently at each occurrence a direct bond or a 1+n valent group,
Z^{N} is independently at each occurrence a linear or branched monovalent hydrocarbon group having 6 or more and 40 or less carbon atoms and optionally having a substituent,
L¹ is independently at each occurrence a divalent aliphatic hydrocarbon group having 2 to 20 carbon atoms or an aromatic hydrocarbon group which are optionally interrupted by an oxygen atom and/or a sulfur atom,
n is independently at each occurrence an integer of 1 or more and 3 or less,
p is independently at each occurrence an integer of 0 or more and 2 or less,
q is independently at each occurrence an integer of 0 or more and 2 or less,
p + q is 2 in each N(-Y^{N}-Z^{N}ₙ)ₚ(-H)_{q},
r is independently at each occurrence 0 or 1,
s is independently at each occurrence 0 or 1,
r + s is 1 in each N(-Y^{N}-Z^{N}ₙ)ᵣ(-H)ₛ,
the sum of all p and all r is 1 or more and
t is an integer of 0 or more and 10 or less].

In Example 1 of the modified body of amine, the details of Y^{N}, Z^{N} and n are as described above.

In Example 1 of the modified body of amine, L¹ is a divalent aliphatic hydrocarbon group having 2 to 20 carbon atoms or an aromatic hydrocarbon group which are optionally interrupted by an oxygen atom and/or a sulfur atom, and may be a cyclic, branched or linear hydrocarbon group, and is preferably a chain hydrocarbon group or an aromatic hydrocarbon. L1 may be the hydrocarbon group described in the above [Amine backbone]. The hydrocarbon group may be interrupted by an oxygen atom and/or a sulfur atom, may be composed of only a carbon atom, a nitrogen atom and hydrogen atom. L1 may be, for example, a saturated or unsaturated (e.g., saturated) aliphatic hydrocarbon group or an aromatic hydrocarbon group with 1 or 2 hydrocarbon aromatic rings. L1 is preferably a cyclic group having both a ring (e.g., an aromatic ring) and a chain structure (e.g., a linear structure, ether oxygen, or thioether sulfur). Specific examples thereof include 1,3-phenylenebisalkylene group, 1,4-phenylenebisalkylene group, diphenyl ether diyl group, diphenyl thioether diyl group. L1 may have 2 or more, 3 or more, 4 or more, 6 or more, 8 or more, 10 or more, or 12 or more, and 20 or less, 18 or less, 16 or less, 14 or less, 12 or less, 10 or less, 8 or less, 6 or less, 4 or less, or 3 or less carbon atoms.

In Example 1 of the modified body of amine, p is independently at each occurrence an integer of 0 or more and 2 or less, q is independently at each occurrence an integer of 0 or more and 2 or less, and p + q is 2 in each N(-Y^{N}-Z^{N}ₙ)ₚ(-H)_{q}. Preferably p may be independently at each occurrence 1 or more and is, for example, 2.

In Example 1 of the modified body of amine, r is independently at each occurrence 0 or 1, s is independently at each occurrence 0 or 1, and r + s is 1 in each N(-Y^{N}-Z^{N}ₙ)ᵣ(-H)ₛ. Preferably p may be independently at each occurrence 1 or more and is, for example, 2.

The sum of all p and all r is 1 or more, which means that Example 1 of the modified body of amine has one or more -Y^{N}-Z^{N}ₙ. The sum of all p and all r may be 1 or more, 3 or more, 5 or more, 7 or more, 9 or more, 12 or more (the sum of all q and all s may be 0), and 14 or less, 12 or less, 10 or less, 8 or less, 6 or less, or 4 or less.

In Example 1 of the modified body of amine, t is an integer of 0 or more and 10 or less. t may be 0 or more, 1 or more, 2 or more, 4 or more, or 6 or more, and is preferably 0 or more or 2 or more and t may be 8 or less, 6 or less, 4 or less, 3 or less, 2 or less, or 1 or less, and for example 0 or 1.

### (Example 2 of modified body of amine)

Another example of the modified body of amine is (Example 2 of modified body of amine), which is a compound represented by the following formula:

N(-Y^{N}-Z^{N}ₙ)ₚ(-H)_{q}-L²(-Y^{N}-Z^{N}ₙ)ᵤ

[wherein Y^{N} is independently at each occurrence a direct bond or a 1+n valent group,
Z^{N} is independently at each occurrence a linear or branched monovalent hydrocarbon group having 6 or more and 40 or less carbon atoms and optionally having a substituent,
L² is a 1+u valent aliphatic hydrocarbon group having 2 to 20 carbon atoms or an aromatic hydrocarbon group which are optionally interrupted by an oxygen atom and/or a sulfur atom,
n is independently at each occurrence an integer of 1 or more and 3 or less,
p is an integer of 0 or more and 2 or less,
q is an integer of 0 or more and 2 or less,
p + q is 2,
u is an integer of 1 or more and 3 or less, and
the sum of p and u is 1 or more].

In Example 2 of the modified body of amine, the details of Y^{N}, Z^{N} and n are as described above.

In Example 2 of the modified body of amine, L² is a 1+u valent aliphatic hydrocarbon group having 2 to 20 carbon atoms or an aromatic hydrocarbon group which are optionally interrupted by an oxygen atom and/or a sulfur atom, and may be a cyclic, branched or linear hydrocarbon group, and is preferably a chain hydrocarbon group or an aromatic hydrocarbon. L2 may be the hydrocarbon group described in the above [Amine backbone]. The hydrocarbon group may be interrupted by an oxygen atom and/or a sulfur atom, may be composed of only a carbon atom, a nitrogen atom and hydrogen atom. L2 may be, for example, a saturated or unsaturated (e.g., saturated) aliphatic hydrocarbon group or an aromatic hydrocarbon group with 1 or 2 hydrocarbon aromatic rings. L2 is preferably a cyclic group having both a ring (e.g., an aromatic ring) and a chain structure (e.g., a linear structure, ether oxygen, or thioether sulfur). Specific examples thereof include 1,3-phenylenebisalkylene group, 1,4-phenylenebisalkylene group, diphenyl ether diyl group, diphenyl thioether diyl group. L2 may have 2 or more, 3 or more, 4 or more, 6 or more, 8 or more, 10 or more, or 12 or more, and 20 or less, 18 or less, 16 or less, 14 or less, 12 or less, 10 or less, 8 or less, 6 or less, 4 or less, or 3 or less carbon atoms.

In Example 2 of the modified body of amine, p is an integer of 0 or more and 2 or less, q is an integer of 0 or more and 2 or less, and p + q is 2. p may be preferably 1 or more and is, for example, 2.

In Example 2 of the modified body of amine, u is an integer of 1 or more and 3 or less. u is 1, 2 or 3, and for example 2 or 3.

In Example 2 of the modified body of amine, the sum of p and u is 1 or more, which means that Example 2 of the modified body of amine has one or more -Y^{N}-Z^{N}ₙ. The sum of all p and all u may be 1 or more, 2 or more, 3 or more, 4 or more, or 5 or more (the sum of all q may be 0), and the sum of p and u may be 5 or less, 4 or less, 3 or less, or 2 or less.

### (Specific Examples)

Specific examples of modified bodies of amine include the compounds represented by the following formula. In the following formula, details of Z are as described in Z^{N} above.

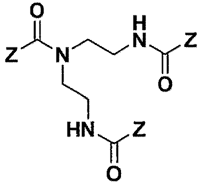

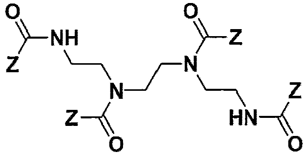

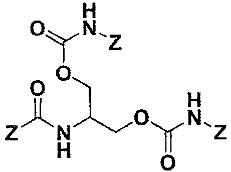

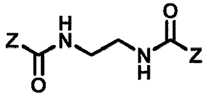

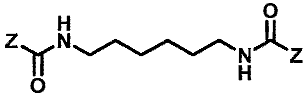

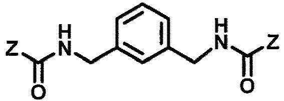

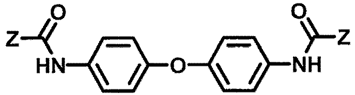

The modified body of amine may be a synthetic wax derived from animal or vegetable oil and fat. The synthetic wax may also be prepared by condensing fatty acid derived from animal or vegetable oil and fat and aliphatic amine or amine containing aromatic. Examples of synthetic wax include a fatty acid amide compound such as a hydroxy fatty acid amide compound, a palmitamide compound, an octadecanoic acid amide compound, a stearic acid amide compound, an arachidic acid amide compound, a behenic acid amide compound, a lignoceric acid amide compound, an oleic acid amide compound, a linoleic acid amide compound, an α-linolenic acid amide compound, γ-linolenic acid amide compound, an arachidonic acid amide compound, an icosapentaenoic acid amide compound and a docosahexaenoic acid amide compound.

### [Production Method]

The method for producing the modified body of amine is not limited, and examples thereof include a method in which a modified body of amine is synthesized by allowing various types of amines (raw material amines) to react with a Z^{N} group-containing carboxylic acid in the presence of a condensing agent, if necessary, and a method in which a modified body of amine is synthesized by allowing various types of amines to react with Z^{N} group-containing carboxylic acid chloride, acid anhydride, isocyanate or the like. A known condensing agent may be used, and examples thereof include DCC, EDCI, CDI, BOP, COMU, DMT-MM, DPPA and Py-Bop.

### (Amine (raw material amine))

Examples of amine (raw material amine), which is a precursor of amine backbone, include those capable of forming amine backbone, such as alkylamine such as methylamine, ethylamine, propylamine, butylamine and dibutylamine; alkylenediamine such as ethylenediamine, propylenediamine, butylenediamine, pentanediamine, hexamethylenediamine, cyclohexanediamine and methylenebiscyclohexylamine; polyalkylenepolyamine such as diethylenetriamine, triethylenetetramine, tris (2-aminoethyl) amine, tetraethylenepentamine, pentaethylenehexamine, dipropylenetriamine, tripropylenetetramine, tris (2-aminopropyl) amine, tetrapropylenepentamine, pentapropylenehexamine, iminobispropylamine, dibutylenetriamine, bis(2-aminoethoxy)ethane, bis(2-aminoethyl) ether, bis [2-(2-aminoethoxy)ethyl] ether, bis[2-(3-aminoprotoxy)ethyl] ether, spermine and spermidine; oxygen or sulfur-containing aliphatic amine such as 1-aminopropanediol, 2-amino-1,3-propanediol, 3-amino-1,2-propanediol, polyoxypropylenediamine and polyoxyethylenediamine; aromatic monoamine such as aniline, 1- or 2-naphthylamine, 1-, 2-, or 9-aminoanthracene, 9-aminophenanthracene and 2-, 3- or 4-aminobiphenyl; monocyclic aromatic polyamine such as o-, m- or p-phenylene diamine, o-, m- or p-xylylenediamine, diaminotoluene and 2,3-, 2,4- or 2,5-tolylenediamine; polycyclic aromatic polyamine such as diaminobiphenyl, bisaminophenoxyphenylpropane, diaminodiphenyl ether, diaminodiphenyl sulfide, diaminodiphenylsulfone, diaminobenzophenone, diaminodiphenylmethane, diaminophenylpropane, diaminophenyl hexafluoropropane, diaminophenylphenylethane, bisaminophenoxybenzene, bisaminobenzoyl benzene, bisaminodimethylbenzyl benzene, aminophenoxybiphenyl, aminophenoxyphenyl ketone, bisaminoditrifluoromethylbenzyl benzene, aminophenoxyphenyl sulfone, aminophenoxyphenyl ether, aminophenoxyphenyl propane, bis(aminophenoxybenzoyl) benzene, bis(aminophenoxy-α,α-dimethylbenzyl) benzene, bis[(aminoaryloxy)benzoyl] diphenylether, bis (amino-α,α-dimethylbenzylphenoxy) benzophenone, aminophenoxyphenyl sulfide, bis [amino-α,α-dimethylbenzylphenoxy]diphenyl sulfone, 4,4'-bis[aminophenoxyphenoxy]diphenyl sulfone, diaminodiaryloxybenzophenone, diaminoaryloxybenzophenone, 3,3'-dimethoxy-4,4'-diaminobiphenyl, 4,4'-diaminotriphenyl methane, 3,3'-dimethyl-4,4'-diaminobiphenyl, 4,4'-methylenebisaniline, 4,4'-oxydianiline, 1,3-bis(4-aminophenoxy)benzene, 4,4'-diaminodiphenylether and 4,4'-bis(aminophenyl)amine; oxygen or sulfur-containing polycyclic aromatic polyamine such as 2,2'-bis[4-(4-aminophenoxy)phenyl]propane, 1,3-bis(4-aminophenoxy)benzene, 1,3-bis(3-aminophenoxy)benzene, 3,4'-diaminodiphenyl ether and 4,4'-diaminodiphenylsulfide; and hydroxyl group-containing polyamine such as 2-hydroxyethylethylenediamine, 2-hydroxyethylpropylenediamine, di-2-hydroxyethylethylenediamine, di-2-hydroxyethylpropylenediamine, 2-hydroxypropylethylenediamine and di-2-hydroxypropylethylenediamine. Polyamine may also be a polymer of a polymerizable compound such as allylamine.

### {Modified body of polyol}

The modified body of polyol will be described as an example of the liquid repellent compound. A modified body of polyol is a compound prepared by chemically modifying polyol so that the polyol exhibits liquid repellency. The modifying group is preferably a hydrocarbon group having 6 or more carbon atoms and optionally having a substituent or a polysiloxane group, which is in particular a monovalent hydrocarbon group having 6 or more and 40 or less carbon atoms and optionally having a substituent, or a monovalent polysiloxane group. The modified body of polyol may have a structure in which polyol is modified with a monovalent aliphatic hydrocarbon group having 6 or more and 40 or less carbon atoms from the viewpoint of the improvement in liquid-repellency.

Details of the hydrocarbon group having 6 or more carbon atoms and optionally having a substituent and the polysiloxane group are as described in the above (Hydrocarbon group having 6 or more carbon atoms and optionally having substituent) and (Polysiloxane group).

### [Structure]

The modified body of polyol may be a polymer having a degree of polymerization of 1 or more. The modified body of polyol may have a degree of polymerization of 2 or more, 3 or more, 5 or more, 6 or more, preferably 7 or more, more preferably 8 or more, and further preferably 9 or more from the viewpoint of the improvement in the liquid-repellency. The modified body of polyol may have a degree of polymerization of 100 or less, preferably 50 or less, more preferably 30 or less, and further preferably 15 or less from the viewpoint of the improvement in handling properties of the repellent. The degree of polymerization means the repeating number of monomer units constituting the polymer.

The degree of polymerization in the present disclosure means an average degree of polymerization. The average degree of polymerization in the present disclosure is measured under the following conditions.

When the modified body of polyol in the present disclosure is a modified body of polyglycerol obtained by modifying polyglycerol, the degree of polymerization of the modified body of polyol means the average degree of polymerization of the polyglycerol. The average degree of polymerization of polyglycerol refers to an average degree of polymerization (n) calculated from the hydroxyl number determined by the end group analysis. More specifically, the average degree of polymerization and the average molecular weight are calculated from the following (Formula 1) and (Formula 2).$Average molecular weight = 74 n + 18$ (Formula 1) 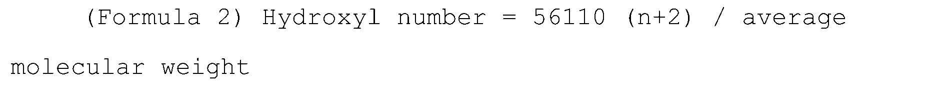 Hydroxyl number = 56110 (n+2) / average molecular weight (Formula 2)

The hydroxyl number in the above (Formula 2) indicates the number of hydroxyl groups in polyglycerol. The hydroxyl number is calculated from the amount of potassium hydroxide necessary for neutralizing acetic acid used for acetylation of free hydroxyl groups contained in 1 g of polyglycerol, which is determined according to The JOCS Standard Methods for the Analysis of Fats, Oils and Related Materials (I), 2003, edited by Japan Oil Chemists' Society. The hydroxyl number of polyglycerol, which is the raw material, is actually measured by the above Standard Methods for the Analysis of Fats, Oils and Related Materials, and the average degree of polymerization and the average molecular weight of polyglycerol may be calculated by the above relational expression.

When the modified body of polyol in the present disclosure is a modified body of polyvinyl alcohol obtained by modifying polyvinyl alcohol, the degree of polymerization of the modified body of polyol means the average degree of polymerization of the polyvinyl alcohol. The average degree of polymerization of polyvinyl alcohol may be measured according to JIS K 6726, Testing Methods for Polyvinyl Alcohol.

When the modified body of polyol in the present disclosure is a modified body of polysaccharide obtained by modifying polysaccharide, the degree of polymerization of the modified body of polyol means the average degree of polymerization of the polysaccharide. The average degree of polymerization of polysaccharide may be analyzed as follows. The degree of polymerization refers to the number of monosaccharide units in polysaccharide (fructose and glucose units), and the average degree of polymerization means the maximum of the peaks in the results of analysis obtained by a common analytical method such as HPLC, GC or HPAEC as described below. The average degree of polymerization may be measured by using ULTRON PS-80N made by Shinwa Chemical Industries Ltd. (8 × 300 mm) (solvent: water, flow rate: 0.5 ml/ minute, temperature: 50°C) or TSK-GEL G30000 PWXL made by Tosoh Corporation (7.8 × 300 mm) (solvent: water, flow rate: 0.5 ml/ minute, temperature: 50°C) as the column, and a differential refractometer as the detector.

The modified body of polyol may be a low molecular weight compound (having a weight average molecular weight of less than 1,500, less than 1,000 or 500 or less) and/or a high molecular weight compound. The modified body of polyol may have a weight average molecular weight of 100 or more, 200 or more, 300 or more, 400 or more, 500 or more, 1,000 or more, 3,000 or more, 5,000 or more, 10,000 or more, 30,000 or more, 100,000 or more, 300,000 or more, or 500,000 or more, and may have a weight average molecular weight of 1,000,000 or less, 750,000 or less, 500,000 or less, 300,000 or less, 100,000 or less, 75,000 or less, 50,000 or less, 30,000 or less, 10,000 or less, 9,000 or less, 8,000 or less, 7,000 or less, 6,000 or less, 5,000 or less, 3,000 or less, 2,000 or less, 1,000 or less, or 500 or less.

The hydroxy group substitution ratio of the modified body of polyol may be 1% or more, 3% or more, 5% or more, 10% or more, 20% or more, 30% or more, 40% or more, 50% or more, 60% or more, 70% or more, 80% or more, 90% or more, or 100%, and is preferably 10% or more, for example 30% or more, 40% or more, 50% or more, 60% or more, 70% or more, particularly 80% or more, and may be 100% or less, 95% or less, 85% or less, 75% or less, 65% or less, 55% or less, 45% or less, 35% or less, 25% or less, 15% or less, and is, for example, 95% or less. The "substitution ratio" means the proportion (mol%) of modified hydroxy groups out of the hydroxy groups derived from polyol, and may mean the proportion (mol%) of hydroxy groups modified by a monovalent hydrocarbon group having 6 or more and 40 or less carbon atoms and optionally having a substituent, or a monovalent polysiloxane group.

The residual ratio of hydroxyl groups in the modified body of polyol may be 1% or more, 3% or more, 5% or more, 10% or more, 20% or more, 30% or more, 40% or more, 50% or more, 60% or more, 70% or more, 80% or more, or 90% or more, and for example, 5% or more, and may be 100% or less, 95% or less, 85% or less, 75% or less, 65% or less, 55% or less, 45% or less, 35% or less, 25% or less, 15% or less, or 5% or less, and for example, 50% or less, 30% or less, or 10% or less. In this regard, the "residual ratio" means the proportion (mol%) of hydroxyl groups without modification, out of the hydroxy groups derived from the polyol.

The number of modifying groups that the modified body of polyol has may be 2 or more, 5 or more, 7 or more, 8 or more, 9 or more, 10 or more, 12 or more, 15 or more, 30 or more, or 50 or more, and 1,000 or less, 750 or less, 500 or less, 300 or less, 100 or less, 50 or less, 30 or less, or 20 or less. In this regard, the modifying group is preferably a monovalent hydrocarbon group having 6 or more and 40 or less carbon atoms and optionally having a substituent, or a monovalent polysiloxane group.

The modifying group equivalent of the modified body of polyol may be 150 or more, 250 or more, 350 or more, 450 or more, 550 or more, 650 or more, 750 or more, or 1,000 or more, and 2,500 or less, 2,000 or less, 1,500 or less, 1,000 or less, 750 or less, 500 or less, or 400 or less. The modifying group equivalent is obtained by dividing the weight average molecular weight of modified body of polyol by the number of modifying groups. In this regard, the modifying group is preferably a monovalent hydrocarbon group having 6 or more and 40 or less carbon atoms and optionally having a substituent, or a monovalent polysiloxane group.

In the modified body of polyol, one or more hydroxy groups in polyol are substituted by a modifying group. The modifying group is preferably a monovalent hydrocarbon group having 6 or more and 40 or less carbon atoms and optionally having a substituent, or a monovalent polysiloxane group. The modified body of polyol may have a structure in which polyol is modified with an aliphatic hydrocarbon group having 6 or more and 40 or less carbon atoms from the viewpoint of the improvement in liquid-repellency.

Details of the monovalent hydrocarbon group having 6 or more and 40 or less carbon atoms and optionally having a substituent and the monovalent polysiloxane group are as described in the above (Hydrocarbon group having 6 or more carbon atoms and optionally having substituent) and (Polysiloxane group).

### (-Y^{O}-Z^{O}ₙ)

In the modified body of polyol in the present disclosure, one or more hydroxy groups in polyol are optionally substituted by a group represented by the following formula:

-Y^{O}-Z^{O}ₙ

[wherein Y^{O} is a 1+n valent group composed of one or more selected from the group consisting of Y^{O1} and Y^{O2},
Y^{O1} is a group composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or a hydrocarbon group having 1 to 30 (for example, 1 to 20, 1 to 10, or 1 to 4) carbon atoms,
Y^{O2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
Z^{O} is a monovalent hydrocarbon group having 6 or more and 40 or less carbon atoms and optionally having a substituent or a monovalent polysiloxane group, and
n is an integer of 1 or more and 3 or less].

### (Y^{O})

Y^{O} is a 1+n valent group composed of one or more selected from the group consisting of Y^{O1} and Y^{O2},
Y^{O1} is a group composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or hydrocarbon group having 1 to 30 (for example, 1 to 20, 1 to 10, or 1 to 4) carbon atoms),
Y^{O2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

n is the number of Z^{O} bonded to Y^{O}, and may be an integer of 1 or more and 3 or less. n may be 1 or more, 2 or more, or 3 or more, and 3 or less, 2 or less, or 1 or less, and is, for example, 2 or less.

Y^{O} may have a molecular weight of 10 or more, 50 or more, 100 or more, 200 or more, 300 or more, 500 or more, or 750 or more, and 3,000 or less, 2,500 or less, 2,000 or less, 1,500 or less, 1,000 or less, 750 or less, 500 or less, 300 or less, 200 or less, 100 or less, or 50 or less.

Y^{O} may include at least an amide group, a urethane group, a urea group, an imide group, a thioamide group, a thiourethane group, a thiourea group, a thioimide group, a sulfone amide group, a sulfone urea group, a sulfone urethane group, or a sulfone imide group. For example, Y^{O} may include -C(=O)-NR'-, -C(=S)-NR'-, -O-C(=O)-NR'-, - NR'-C(=O)-, -NR'-C(=O)-NR'- or -SO₂NR'-. Inclusion of these groups in Y^{O} may improve liquid repellency.

### ∘ Y^{O1}

Y^{O1} is a non-hydrocarbon linker.

Y^{O1} is a direct bond or a divalent or higher valent group. YO¹ may have a valence of 2 to 4, 2 or 3, or 2. It is preferable that Y^{O1} is not limited to direct bond.

Y^{O1} may have a molecular weight of 10 or more, 50 or more, 100 or more, 200 or more, 300 or more, or 500 or more, 2,000 or less, 1,500 or less, 1,000 or less, 750 or less, or 500 or less.

Y^{O1} may be composed of one or more selected from the group consisting of a direct bond, -O-, -C(=O)-, -S(=O)₂-, -NR'-, -C(OR')R'- and -C(OR')(-)₂ (wherein R' is independently at each occurrence a hydrogen atom or a hydrocarbon group having 1 to 30 (for example, 1 to 20, 1 to 10, or 1 to 4) carbon atoms). Examples of Y^{O1} include: a direct bond,

-O-,

-O-C(=O)-,

-O-C(=O)-O-,

-O-C(=O)-NR'-,

-NR'-,

-NR'-C(=O)-,

-NR'-C(=O)-O-,

-NR'-C(=O)-NR'-,

-C(=O)-,

-C(=O)-O-,

-C(=O)-NR'-,

-SO₂-,

-SO₂NR'-,

-C(OR')R'-,

and

-C(OR')(-)₂

(wherein R' is independently at each occurrence a hydrogen atom or a hydrocarbon group having 1 to 30 (for example, 1 to 20, 1 to 10, or 1 to 4) carbon atoms).

Y^{O1} may include at least an amide group, a urethane group, a urea group, an imide group, a thioamide group, a thiourethane group, a thiourea group, a thioimide group, a sulfone amide group, a sulfone urea group, a sulfone urethane group, or a sulfone imide group. For example, Y^{O2} may include -C(=O)-NR'-, -O-C(=O)-NR'-, -NR'-C(=O)-, -NR'-C(=O)-NR'- or -SO₂NR'-. Inclusion of these groups in Y^{O1} may improve liquid repellency.

### ∘ Y^{O2}

Y^{O2} is a hydrocarbon optionally having a substituent, a hydrocarbon aromatic ring optionally having a substituent or a heterocyclic linker optionally having a substituent.

Y^{O2} may be a hydrocarbon group or a non-hydrocarbon group (including a heteroatom). YO² may be aliphatic or aromatic. YO² may be linear, branched or cyclic.

Y^{O2} is a divalent or higher valent group. YO² may have a valence of, for example, 2 to 4, 2 or 3, or 2.

Y^{O2} may have 1 or more, 2 or more, 3 or more, 4 or more, 6 or more, 8 or more, 10 or more, 12 or more, 14 or more, 16 or more, or 18 or more, and 40 or less, 35 or less, 30 or less, 25 or less, 20 or less, 15 or less, 10 or less, or 5 or less carbon atoms.

Y^{O2} is composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms, and 35 or less, 30 or less, 25 or less, 20 or less, 15 or less, 10 or less, or 5 or less carbon atoms. The aliphatic hydrocarbon group may have a valence of 2 or more, 3 or more, or 4, and 4 or less, 3 or less, or 2.

The aliphatic hydrocarbon group may have a substituent. Examples of substituents include -OR', - N(R')₂, -COOR', and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene and coronene. The number of ring constituting atom of the hydrocarbon aromatic ring is 3 to 20, 4 to 16, or 5 to 12, and preferably 5 to 12. The hydrocarbon aromatic ring may have a valence of 2 or more, 3 or more, or 4, and 4 or less, 3 or less, or 2.

The hydrocarbon aromatic ring may have a substituent. Examples of substituents include -R', -OR', -N(R')₂, - COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon aromatic ring having a substituent, the amount of carbon atom relative to the carbon atom and the heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline and the like. The number of ring constituting atom of the heterocyclic ring is 3 to 20, 4 to 16, or 5 to 12 and preferably 5 to 12. A valence of the heterocyclic ring may be 2 or more, 3 or more, or 4, and may be 4 or less, 3 or less, or 2.

The heterocyclic ring may have a substituent. Examples of substituents include -R', -OR', -N(R')₂, - COOR' and a halogen atom (wherein R' is independently at each occurrence a hydrogen atom or hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the carbon atom and the heteroatom may be 60 mol% or more, 70 mol% or more, 80 mol% or more, 90 mol% or more, 95 mol% or more, or 99 mol% or more, and for example, 65 mol% or more, and 95 mol% or less, 90 mol% or less, 85 mol% or less, 80 mol% or less, or 70 mol% or less.

Examples of Y^{O2} include

-Ali-

-Cy-

-Ali(-)₂

-Cy(-)₂

(-)₂Ali-

(-)₂Cy-

(-)₂Ali(-)₂

(-)₂Cy(-)₂

-Ali-Cy-

-Cy-Ali-

-Cy-Ali-Cy-

-Ali-Cy-Ali-

[wherein Ali is an aliphatic hydrocarbon group having 1 to 20 carbon atoms and Cy is a hydrocarbon aromatic ring or a heterocyclic ring].

Specific examples of Y^{O2} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

### (Example of Y^{O})

Examples of Y^{O} will be described. In the following, R' is independently at each occurrence a hydrogen atom or a hydrocarbon group having 1 to 30 (for example, 1 to 20, 1 to 10, or 1 to 4) carbon atoms.

When Y^{O} is divalent, examples of Y^{O} include -Y^{O1}-, - Y^{O1}-Y^{O2}-, -Y^{O1}-Y^{O2}-Y^{O1}-, -Y^{O1}-Y^{O2}-Y^{O1}-Y^{O2}-, -Y^{O2}-, -Y^{O2}-Y^{O1}-, - Y^{O2}-Y^{O1}-Y^{O2}- and -Y^{O2}-Y^{O1}-Y^{O2}-Y^{O1}-.

When Y^{O} is trivalent, examples of Y^{O} include -Y^{O1}(-)₂, -Y^{O1}-Y^{O2}(-)₂, -Y^{O1}-(Y^{O2}-)₂, -Y^{O1}-Y^{O2}-Y^{O1}(-)₂, -Y^{O1}-Y^{O2}(-Y^{O1}-)₂, - Y^{O1}-(Y^{O2}-Y^{O1}-)₂, -Y^{O1}-Y^{O2}-Y^{O1}-Y^{O2}(-)₂, -Y^{O1}-Y^{O2}-Y^{O1}-(Y^{O2}-)_{2,} -Y^{O1}-Y^{O2}-(Y^{O1}-Y^{O2}-)_{2,} -Y^{O1}-(Y^{O2}-Y^{O1}-Y^{O2}-)₂;
-Y^{O2}(-)₂, -Y^{O2}-Y^{O1}(-)₂, -Y^{O2}-(Y^{O1}-)₂, -Y^{O2}-Y^{O1}-Y^{O2}(-)₂, -Y^{O2}-Y^{O1}(-Y^{O2}-)₂, -Y^{O2}-(Y^{O1}-Y^{O2}-)₂, -Y^{O2}-Y^{O1}-Y^{O2}-Y^{O1}(-)₂, -Y^{O2}-Y^{O1}-Y^{O2}-(Y^{O1}-)_{2,} -Y^{O2}-Y^{O1}-(Y^{O2}-Y^{O1}-)_{2,} and -Y^{O2}-(Y^{O1}-Y^{O2}-Y^{O1}-)₂.

When Y^{O} is tetravalent, examples of Y^{O} include -Y^{O1}(-)₃, -Y^{O1}-Y^{O2}(-)₃, -Y^{O1}-(Y^{O2}-)₃, -Y^{O1}-Y^{O2}-Y^{O1}(-)₃, -Y^{O1}-Y^{O2}(-Y^{O1}-)₃, -Y^{O1}-(Y^{O2}-Y^{O1}-)₃, -Y^{O1}-Y^{O2}-Y^{O1}-Y^{O2}(-)₃, -Y^{O1}-Y^{O2}-Y^{O1}-(Y^{O2}-)_{3,} -Y^{O1}-Y^{O2}-(Y^{O1}-Y^{O2}-)_{3,} -Y^{O1}-(Y^{O2}-Y^{O1}-Y^{O2}-)₃;
-Y^{O2}(-)₃, -Y^{O2}-Y^{O1}(-)₃, -Y^{O2}-(Y^{O1}-)₃, -Y^{O2}-Y^{O1}-Y^{O2}(-)₃, -Y^{O2}-Y^{O1}(-Y^{O2}-)₃, -Y^{O2}-(Y^{O1}-Y^{O2}-)₃, -Y^{O2}-Y^{O1}-Y^{O2}-Y^{O1}(-)₃, -Y^{O2}-Y^{O1}-Y^{O2}-(Y^{O1}-)_{3,} -Y^{O2}-Y^{O1}-(Y^{O2}-Y^{O1}-)_{3,} and -Y^{O2}-(Y^{O1}-Y^{O2}-Y^{O1}-)₃.

Preferred examples of Y^{O} include
-Y^{O1}-, -Y^{O1}-Y^{O2}-, -Y^{O1}-Y^{O2}-Y^{O1}-, -Y^{O1}-Y^{O2}(-)₂,
-Y^{O2}-, -Y^{O2}-Y^{O1}-, -Y^{O2}-Y^{O1}-Y^{O2}-, -Y^{O2}-Y^{O1}(-)₂.

### (Preferred example of Y^{O})

Y^{O} may be preferably
-O-Y^{O11}- or
-O-Y^{O11}-Y^{O21}-Y^{O12}-
[wherein, independently at each occurrence,
Y^{O11} is a direct bond, -C(=O)-, -C(=O)-NR'- or - C(=S)-NR'-,
Y^{O21} is a hydrocarbon group having 1 to 40 carbon atoms, and
Y^{O12} is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, -C(=O)-, -C(=O)-O-, -C(=O)-NR'-, -SO₂-, - SO₂NR'-, -C(OR')R'- or -C(OR')(-)₂].

Y^{O11} is a non-hydrocarbon linker, and is a direct bond or divalent or higher valent group.

Y^{O11} may have a molecular weight of 10 or more, 50 or more, 100 or more, 200 or more, 300 or more, or 500 or more, and 2,000 or less, 1,500 or less, 1,000 or less, 750 or less, or 500 or less.

Y^{O11} may be a direct bond, -C(=O)-, -C(=O)-NR'- or - C(=S)-NR'-.

Y^{O21} is a divalent hydrocarbon linker, and may be a hydrocarbon group having 1 to 40 carbon atoms.

Y^{O21} may have 1 or more, 2 or more, 3 or more, 4 or more, 6 or more, 8 or more, 10 or more, 12 or more, 14 or more, 16 or more, or 18 or more, and 40 or less, 35 or less, 30 or less, 25 or less, 20 or less, 15 or less, 10 or less, or 5 or less carbon atoms.

The hydrocarbon group having 1 to 40 carbon atoms may be cyclic, branched or linear, and may be a saturated or unsaturated (e.g., saturated) aliphatic hydrocarbon group.

Specific examples of Y^{O21} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

Y^{O12} may be -O-, -O-C(=O)-, -O-C(=O)-O-, -O-C(=O)-NR'-, -NR'-, -NR'-C(=O)-, -NR'-C(=O)-O-, -NR'-C(=O)-NR'-, -C(=O)-, -C(=O)-O-, -C(=O)-NR'-, -SO₂-, -SO₂NR'-, - C(OR')R'- or -C(OR')(-)₂.

Y^{O12} may include at least an amide group, a urethane group, a urea group, an imide group, a thioamide group, a thiourethane group, a thiourea group, a thioimide group, a sulfone amide group, a sulfone urea group, a sulfone urethane group, or a sulfone imide group. For example, Y^{O12} may be -C(=O)-NR'-, -O-C(=O)-NR'-, -NR'-C(=O)-, -NR'-C(=O)-NR'- or -SO₂NR'-. Inclusion of these groups in Y^{C12} may improve liquid repellency.

### (Z^{O})

Z^{O} is a monovalent hydrocarbon group having 6 or more and 40 or less carbon atoms and optionally having a substituent or a monovalent polysiloxane group. The same explanation in the above (Hydrocarbon group having 6 or more carbon atoms and optionally having substituent) and (Polysiloxane group) applies.

### [Other modifying groups]

The hydroxy group of polyol may be substituted by a modifying group other than -Y^{O}-Z^{O}ₙ. Examples of modifying groups include an anionic group and/or a cationic group.

Examples of anionic groups include a monomer having a carboxyl group, a sulfonic acid group or a phosphoric acid group.

Examples of salts of the anionic group include alkaline metal salt, alkaline earth metal salt, or an ammonium salt such as methyl ammonium salt, ethanol ammonium salt and triethanol ammonium salt.

Examples of cationic groups include an amino group, which is preferably a tertiary amino group and a quaternary amino group. It is preferable that in the tertiary amino group, two groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., a benzyl group (C₆H₅-CH₂-)). It is preferable that in the quaternary amino group, three groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., benzyl group (C₆H₅-CH₂-)). In the tertiary amino group and the quaternary amino group, the last group bonded to the nitrogen atom may have a carbon-carbon double bond. The cationic group may be in the form of salt.

The cationic group in the form of salt is a salt with an acid (an organic acid or an inorganic acid). An organic acid such as a carboxylic acid having 1 to 20 carbon atoms (in particular, a monocarboxylic acid such as acetic acid, propionic acid, butyric acid and stearic acid) is preferred.

### [Production Method]

The modified body of polyol may be produced by reacting a modifying agent including a modifying group (or a precursor structure of the modifying group) with the hydroxy group of polyol.

### (Polyol)

Polyol has two or more hydroxy groups and is a raw material of the modified body of polyol. Polyol has two or more hydroxy groups in the molecule. Polyol may be aliphatic or aromatic, and is preferably aliphatic.

Polyol may have an ether bond. Preferably polyol may have two or more ether bonds. More specifically, polyol is preferably a compound having two or more hydroxy groups and two or more ether bonds. In other words, polyol is preferably polyether having two or more hydroxy groups.

When polyol is a polymer, polyol may have a hydroxy group and an ether bond in the repeating structure of the monomer unit.

Polyol may be a low molecular weight compound (having a weight average molecular weight of, for example, less than 1,000 or 500 or less) and/or a high molecular weight compound. Polyol may have a weight average molecular weight of 50 or more, 100 or more, 300 or more, 500 or more, 1,000 or more, 3,000 or more, 5,000 or more, 10,000 or more, 30,000 or more, 100,000 or more, 300,000 or more, or 500,000 or more, and 1,000,000 or less, 750,000 or less, 500,000 or less, 300,000 or less, 100,000 or less, 75,000 or less, 50,000 or less, 30,000 or less, 10,000 or less, 5,000 or less, 3,000 or less, 2,000 or less, 1,000 or less, or 500 or less.

Polyol may have 2 or more, 5 or more, 7 or more, 10 or more, 15 or more, 30 or more, 50 or more, or 100 or more hydroxy groups, and 3,000 or less, 1,000 or less, 750 or less, 500 or less, 300 or less, 100 or less, 50 or less, 30 or less, or 20 or less hydroxy groups.

The hydroxy group equivalent of polyol may be 20 or more, 40 or more, 60 or more, 80 or more, 100 or more, 120 or more, or 150 or more, and 1,000 or less, 800 or less, 600 or less, 400 or less, 200 or less, 100 or less, or 75 or less. Dividing the weight average molecular weight of polyol by the number of hydroxyl groups gives the hydroxy group equivalent of polyol.

Polyol may be a natural product. The natural product may be a high molecular weight natural product, a low molecular weight natural product, or a derivative thereof. The above natural product also includes a compound converted from microorganisms. Examples of polyol include a monosaccharide, an oligosaccharide, a polysaccharide, a sugar alcohol (reducing sugar), a hydroxy acid, an amino acid, vitamin, flavonol, hydroxyhydrocarbon, a polymer of a hydroxy group-containing compound, polyether polyol, polymer polyol, polyester polyol and other polyols.

Examples of monosaccharides include glucose, fructose, galactose and xylose.

Examples of oligosaccharides include sucrose, cycloamylose, cyclodextrin, maltose, trehalose, lactose and sucralose.

Examples of sugar alcohols (reducing sugar) include sorbitol, maltitol, erythritol, isomalt, lactitol, mannitol, xylitol, sorbitan and lactitol.

Examples of polysaccharides include starch, cellulose, curdlan, pullulan, alginic acid, carrageenan, guar gum, chitin, chitosan, locust bean gum, kappa-carrageenan, iota-carrageenan, isomaltodextrin, gellan gum and tamarind seed gum.

Examples of hydroxy acids include ascorbic acid, kojic acid, quinic acid, chlorogenic acid and gluconic acid.

Examples of amino acids include glucosamine.

Examples of vitamins include ascorbic acid and inositol.

Examples of flavonols include catechin, quercetin and anthocyanin.

Examples of hydroxyhydrocarbons include ethylene glycol, propylene glycol, diethylene glycol, triethylene glycol, tetraethylene glycol, neopentyl glycol, trimethylene glycol, glycerol, trimethylolpropane and trimethylolethane. The hydroxyhydrocarbon is a hydrocarbon having a hydroxy group, and may be aliphatic or aromatic, and is preferably aliphatic. The term "hydroxyhydrocarbon" may also mean a hydroxyhydrocarbon other than the compounds included in a different group, such as polysaccharide (other hydroxyhydrocarbons).

Examples of polymers of a hydroxy group-containing compound include polyglycerol, polyvinyl alcohol, hydroxyethyl (meth)acrylate polymer, hydroxypropyl (meth)acrylate polymer and hydroxybutyl (meth)acrylate polymer.

Polyether polyol may be a compound obtained by addition polymerization of alkylene oxide onto an initiator. Examples of initiators include a difunctional or higher functional compound having a hydroxyl group. Examples of initiators include propylene glycol, polypropylene glycol, ethylene glycol, polyethylene glycol, glycerol, polyglycerol, trimethylol propane, triethanolamine, pentaerythritol, ethylenediamine, aromatic diamine, diethylenetriamine, sorbitol and sucrose. Alkylene oxide include ethylene oxide and propylene oxide. The polyether polyol, which is obtained by addition polymerization of alkylene oxide onto the initiator, is also referred to as polyoxyalkylene polyol, or an oxyalkylene derivative of polyol. Typical examples of polyether polyol include polyoxypropylene triol obtained by addition polymerization of propylene oxide onto glycerol and polyoxypropylene polyglyceryl ether obtained by addition polymerization of propylene oxide onto polyglycerol.

An example of polymer polyol is a compound obtained by polymerizing at least a moiety of polyether polyol in the polyether polyol with an ethylenically unsaturated monomer. Examples of ethylenically unsaturated monomers include acrylonitrile and styrene.

An example of polyester polyol may be a compound obtained by dehydration condensation of a difunctional or higher functional compound having a carboxyl group and a difunctional or higher functional compound having a hydroxyl group. Examples of difunctional or higher functional compounds having a carboxyl group include terephthalic acid, isophthalic acid, phthalic acid, methylphthalic acid, trimellitic acid, pyromellitic acid, adipic acid, sebacic acid, succinic acid, maleic acid, fumaric acid, tetrahydrophthalic acid, methyltetrahydrophthalic acid, hexahydrophthalic acid and an acid anhydride thereof. Examples of difunctional or higher functional compounds having a hydroxyl group include ethylene glycol, propylene glycol, propanediol, neopentyl glycol, glycerol, trimethylolethane, trimethylolpropane, pentaerythritol and a polymer thereof.

### (Modifying agent)

The modifying agent is preferably a compound which is reactive to polyol and comprises the monovalent hydrocarbon group having 6 or more and 40 or less carbon atoms and optionally having a substituent or the monovalent polysiloxane group described above.

Examples of modifying agents are as follows:

| | |
|---|---|
| Acid halide | G(O=)C-Z^{O} |
| Acid anhydride | O(C(=O)-Z^{O})₂ |
| Carboxylic acid | HO(O=)C-Z^{O} |
| Isocyanate | O=C=N-Z^{O} |
| Thioisocyanate | S=C=N-Z^{O} |
| Epoxy | (CH₂OCH)CH₂O-Z^{O} |
| Halide | G-Z^{O} |
| Amine | H₂N-Z^{O} |
| Hydroxy | HO-Z^{O} |

[In the formula, Z^{O} is as described above, and G is a halogen atom (e.g., F, Cl, Br or I)].

Z^{O} in the structure of the above modifying agent may be replaced with any group constituting the modifying group. For example, Z^{O} may be a monovalent hydrocarbon group having 6 or more and 40 or less carbon atoms and optionally having a substituent or a monovalent polysiloxane group, and Z^{O} may be -Y^{O}-Z^{O}ₙ.

The modified body of polyol may also be synthesized by reacting polyol and a modifying agent. For example, the modified body of polyol may be synthesized by forming an ester bond by reacting a modifying agent, which is an acid halide compound, acid anhydride or carboxylic acid, with the hydroxy group of polyol. Alternatively, the modified body of polyol may be produced by forming an ether bond by reacting a modifying agent, which is a halide compound or an epoxy compound, with the hydroxy group of polyol. Conditions of the reaction between polyol and the modifying agent may be suitably designed by a person skilled in the art, including use of a catalyst (e.g., acid catalyst and base catalyst) and use of a condensing agent depending on the intended product.

### {Modified body of polycarboxylic acid}

The modified body of polycarboxylic acid will be described as an example of the liquid repellent compound. A modified body of polycarboxylic acid is a compound prepared by chemically modifying polycarboxylic acid so that polycarboxylic acid exhibits liquid repellency.

### [Structure]

The modified body of polycarboxylic acid may be a low molecular weight compound (having a weight average molecular weight of, for example, less than 1,500, less than 1,000 or 500 or less) and/or a high molecular weight compound. The modified body of polycarboxylic acid may have a weight average molecular weight of 100 or more, 200 or more, 300 or more, 400 or more, 500 or more, 1,000 or more, 3,000 or more, 5,000 or more, 10,000 or more, 30,000 or more, 100,000 or more, 300,000 or more, or 500,000 or more, and may have a weight average molecular weight of 1,000,000 or less, 750,000 or less, 500,000 or less, 300,000 or less, 100,000 or less, 75,000 or less, 50,000 or less, 30,000 or less, 10,000 or less, 9,000 or less, 8,000 or less, 7,000 or less, 6,000 or less, 5,000 or less, 3,000 or less, 2,000 or less, 1,000 or less, or 500 or less.

The weight average molecular weight (Mw) and the number average molecular weight (Mn) of the modified body of polycarboxylic acid may be measured by GFC using polyethylene glycol/polyethylene oxide as a standard sample by the following apparatus under the following conditions.
Separation column: SB-806M (8 mm × 30 mm, Shodex)
Column temperature: 40°C
Solvent for mobile phase: ion-exchanged water
Flow rate of mobile phase: 1.0 mL/min
Sample concentration: 0.5 wt%
Injection amount: 50 µL
Detector: RI detector (Waters 2414 made by Waters)

The weight average molecular weight (Mw), the number average molecular weight (Mn) and polydispersity (Mw/Mn) of the modified body of polycarboxylic acid in terms polystyrene may be determined by gel permeation chromatography (GPC) using tetrahydrofuran (THF) as an eluent and Shodex KF400RL and KF400RH columns (polystyrene gel) made by SHOWA DENKO K.K.

The hydroxy group substitution ratio in the carboxyl group of the modified body of polycarboxylic acid may be 1% or more, 3% or more, 5% or more, 10% or more, 20% or more, 30% or more, 40% or more, 50% or more, 60% or more, 70% or more, 80% or more, 90% or more, or 100%, and is preferably 10% or more, for example, 30% or more, 40% or more, 50% or more, 60% or more, 70% or more, particularly 80% or more, and may be 100% or less, 95% or less, 85% or less, 75% or less, 65% or less, 55% or less, 45% or less, 35% or less, 25% or less, 15% or less, and is for example, 95% or less. The "substitution ratio" means the proportion (mol%) of modified hydroxy groups out of the hydroxy groups in the carboxyl group derived from polycarboxylic acid, and may mean the proportion (mol%) of hydroxy groups modified by a monovalent hydrocarbon group having 6 or more and 40 or less carbon atoms and optionally having a substituent, or a monovalent polysiloxane group.

The residual ratio of hydroxyl groups in the carboxyl group in the modified body of polycarboxylic acid may be 1% or more, 3% or more, 5% or more, 10% or more, 20% or more, 30% or more, 40% or more, 50% or more, 60% or more, 70% or more, 80% or more, or 90% or more, and for example, 5% or more, and may be 100% or less, 95% or less, 85% or less, 75% or less, 65% or less, 55% or less, 45% or less, 35% or less, 25% or less, 15% or less, or 5% or less, and for example, 50% or less, 30% or less, or 10% or less. In this regard, the "residual ratio" means the proportion (mol%) of hydroxyl groups without modification, out of the hydroxy groups in the carboxyl group derived from polycarboxylic acid.

The number of modifying groups that the modified body of polycarboxylic acid has may be 2 or more, 5 or more, 7 or more, 10 or more, 15 or more, 30 or more, or 50 or more, and 1,000 or less, 750 or less, 500 or less, 300 or less, 100 or less, 50 or less, 30 or less, or 20 or less. In this regard, the modifying group is preferably a monovalent hydrocarbon group having 6 or more and 40 or less carbon atoms and optionally having a substituent, or a monovalent polysiloxane group.

The modifying group equivalent of the modified body of polycarboxylic acid may be 150 or more, 250 or more, 350 or more, 450 or more, 550 or more, 650 or more, 750 or more, or 1,000 or more, and 2,500 or less, 2,000 or less, 1,500 or less, 1,000 or less, 750 or less, 500 or less, or 400 or less. The modifying group equivalent is obtained by dividing the weight average molecular weight of modified body of polycarboxylic acid by the number of modifying groups. In this regard, the modifying group is preferably a monovalent hydrocarbon group having 6 or more and 40 or less carbon atoms and optionally having a substituent, or a monovalent polysiloxane group.

In the modified body of polycarboxylic acid, one or more hydroxy groups in polycarboxylic acid are modified by a modifying group. The modifying group is preferably a monovalent hydrocarbon group having 6 or more and 40 or less carbon atoms and optionally having a substituent, or a monovalent polysiloxane group. The modified body of polycarboxylic acid may have an aliphatic hydrocarbon group having 6 or more and 40 or less carbon atoms for polycarboxylic acid from the viewpoint of the improvement in liquid repellency.

Details of the monovalent hydrocarbon group having 6 or more and 40 or less carbon atoms and optionally having a substituent and the monovalent polysiloxane group are as described in the above (Hydrocarbon group having 6 or more carbon atoms and optionally having substituent) and (Polysiloxane group).

### (-Y^{C}-Z^{C}ₙ)

In the modified body of polycarboxylic acid in the present disclosure, one or more hydroxyl groups in the carboxyl group in polycarboxylic acid are optionally substituted by a group represented by the following formula:

-Y^{C}-Z^{C}ₙ

[wherein Y^{C} is a 1+n valent group composed of one or more selected from the group consisting of Y^{C1} and Y^{C2},
Y^{C1} is a group composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or a hydrocarbon group having 1 to 30 (for example, 1 to 20, 1 to 10, or 1 to 4) carbon atoms),
Y^{C2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent,
Z^{C} is a monovalent hydrocarbon group having 6 or more and 40 or less carbon atoms and optionally having a substituent or a monovalent polysiloxane group, and
n is an integer of 1 or more and 3 or less]

(Y^{C})

Y^{C} is a 1+n valent group composed of one or more selected from the group consisting of Y^{C1} and Y^{C2},
Y^{C1} is a group composed of one or more selected from the group consisting of a direct bond, -O-, -C(=O)-, - C(=NR')-, -S-, -S(=O)₂-, -C(=S)-, -NR'-, -C(OR')R'-, - C(OR')(-)₂ and -N(-)₂ (wherein R' is independently at each occurrence a hydrogen atom or a hydrocarbon group having 1 to 30 (for example, 1 to 20, 1 to 10, or 1 to 4) carbon atoms), and
Y^{C2} is a group composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

n is the number of Z^{C} bonded to Y^{C}, and may be an integer of 1 or more and 3 or less. n may be 1 or more, 2 or more, or 3 or more. n may be 3 or less, 2 or less, or 1 or less, and is, for example, 2 or less.

Y^{C} may have a molecular weight of 10 or more, 50 or more, 100 or more, 200 or more, 300 or more, 500 or more, or 750 or more, and 3,000 or less, 2,500 or less, 2,000 or less, 1,500 or less, 1,000 or less, 750 or less, 500 or less, 300 or less, 200 or less, 100 or less, or 50 or less.

Y^{C} may include at least an amide group, a urethane group, a urea group, an imide group, a thioamide group, a thiourethane group, a thiourea group, a thioimide group, a sulfone amide group, a sulfone urea group, a sulfone urethane group, or a sulfone imide group. For example, Y^{C} may be -C(=O)-NR'-, -O-C(=O)-NR'-, -NR'-C(=O)-, -NR'-C(=O)-NR'- or -SO₂NR'-. Inclusion of these groups in Y^{C} may improve liquid repellency.

### ∘ Y^{C1}

Y^{C1} is a non-hydrocarbon linker.

Y^{C1} is a direct bond or a divalent or higher valent group. YC¹ may have a valence of 2 to 4, 2 or 3, or 2. It is preferable that Y^{C1} is not limited to direct bond.

Y^{C1} may have a molecular weight of 10 or more, 50 or more, 100 or more, 200 or more, 300 or more, or 500 or more, and 2,000 or less, 1,500 or less, 1,000 or less, 750 or less, or 500 or less.

Y^{C1} may be composed of one or more selected from the group consisting of a direct bond, -O-, -C(=O)-, -S(=O)₂-, -NR'-, -C(OR')R'-, and -C(OR')(-)₂, (wherein R' is independently at each occurrence a hydrogen atom or a hydrocarbon group having 1 to 30 (for example, 1 to 20, 1 to 10, or 1 to 4) carbon atoms). Examples of Y^{C1} include: a direct bond,

-O-,

-O-C(=O)-,

-O-C(=O)-O-,

-O-C(=O)-NR'-,

-NR'-,

-NR'-C(=O)-,

-NR'-C(=O)-O-,

-NR'-C(=O)-NR'-,

-C(=O)-,

-C(=O)-O-,

-C(=O)-NR'-,

-SO₂-,

-SO₂NR'-,

-C(OR')R'-,

-C(OR')(-)₂

wherein R' is independently at each occurrence a hydrogen atom or a hydrocarbon group having 1 to 30 (for example, 1 to 20, 1 to 10, or 1 to 4) carbon atoms.

Y^{C1} may include at least an amide group, a urethane group, a urea group, an imide group, a thioamide group, a thiourethane group, a thiourea group, a thioimide group, a sulfone amide group, a sulfone urea group, a sulfone urethane group or a sulfone imide group. For example, Y^{C1} may include -C(=O)-NR'-, -O-C(=O)-NR'-, -NR'-C(=O)-, - NR'-C(=O)-NR'- or -SO₂NR'-. Inclusion of these groups in Y^{C1} may improve liquid repellency.

### ∘ Y^{C2}

Y^{C2} is a hydrocarbon optionally having a substituent, a hydrocarbon aromatic ring optionally having a substituent or a heterocyclic linker optionally having a substituent.

Y^{C2} may be a hydrocarbon group or a non-hydrocarbon group (including a heteroatom). YC² may be aliphatic or aromatic. YC² may be linear, branched or cyclic.

Y^{C2} is a divalent or higher valent group. YC² may have a valence of, for example, 2 to 4, 2 or 3, or 2.

Y^{C2} may have 1 or more, 2 or more, 3 or more, 4 or more, 6 or more, 8 or more, 10 or more, 12 or more, 14 or more, 16 or more, or 18 or more carbon atoms, and 40 or less, 35 or less, 30 or less, 25 or less, 20 or less, 15 or less, 10 or less, or 5 or less carbon atoms.

Y^{C2} is composed of one or more selected from the group consisting of a divalent to tetravalent aliphatic hydrocarbon group having 1 to 40 carbon atoms and optionally having a substituent, a divalent to tetravalent hydrocarbon aromatic ring optionally having a substituent, and a divalent to tetravalent heterocyclic ring optionally having a substituent.

The divalent to tetravalent aliphatic hydrocarbon group having 1 to 40 carbon atoms may be a cyclic, branched or linear hydrocarbon group. The divalent to tetravalent aliphatic hydrocarbon group having 1 to 40 carbon atoms may be a saturated or unsaturated (e.g., saturated) aliphatic hydrocarbon group. The aliphatic hydrocarbon group having 1 to 40 carbon atoms may have 1 or more, 2 or more, 3 or more, 4 or more, 6 or more, 8 or more, or 10 or more carbon atoms, and 35 or less, 30 or less, 25 or less, 20 or less, 15 or less, 10 or less, or 5 or less carbon atoms. The aliphatic hydrocarbon group may have a valence of 2 or more, 3 or more, or 4, and 4 or less, 3 or less, or 2.

The aliphatic hydrocarbon group may have a substituent. Examples of substituents include -OR', - N(R')₂, -COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the aliphatic hydrocarbon group having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

Examples of the divalent to tetravalent hydrocarbon aromatic ring include groups obtained by removing 2 to 4 hydrogen atoms from hydrocarbon aromatic rings such as benzene, naphthalene, anthracene, phenanthrene, tetracene (naphthacene), pentacene, pyrene and coronene. The number of ring constituting atoms of the hydrocarbon aromatic ring is 3 to 20, 4 to 16, or 5 to 12 and preferably 5 to 12. The valence of the hydrocarbon aromatic ring may be 2 or more, 3 or more, or 4, and may be 4 or less, 3 or less, or 2.

The hydrocarbon aromatic ring may have a substituent. Examples of substituents include -R', -OR', -N(R')₂, - COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the hydrocarbon aromatic ring having a substituent, the amount of carbon atom relative to the amount of carbon atom and heteroatom may be 70 mol% or more, 80 mol% or more, 90 mol% or more, 95 mol% or more, or 99 mol% or more, and is preferably 75 mol% or more, and may be 95 mol% or less, 90 mol% or less, 85 mol% or less, or 80 mol% or less.

The divalent to tetravalent heterocyclic ring may be an aliphatic group or an aromatic group. Examples of the divalent to tetravalent heterocyclic rings include groups obtained by removing 2 to 4 hydrogen atoms from pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, pyrrolidine, piperidine, piperazine, imidazolidine, thiazoline and the like. The number of ring constituting atoms of the heterocyclic ring is 3 to 20, 4 to 16, or 5 to 12 and preferably 5 to 12. The heterocyclic ring may have a valence of 2 or more, 3 or more, or 4, and 4 or less, 3 or less, or 2.

The heterocyclic ring may have a substituent. Examples of substituents include -R', -OR', -N(R')₂, - COOR' and a halogen atom (wherein R' is independently at each occurrence a hydrogen atom or a hydrocarbon group having 1 to 30, 1 to 20, 1 to 10, or 1 to 4 carbon atoms). The substituent may or may not have active hydrogen. The number of substituents may be 6 or less, 5 or less, 4 or less, 3 or less, 2 or less, 1 or less, or 0. In the heterocyclic ring having a substituent, the amount of carbon atom relative to the carbon atom and the heteroatom may be 60 mol% or more, 70 mol% or more, 80 mol% or more, 90 mol% or more, 95 mol% or more, or 99 mol% or more, and is, for example, 65 mol% or more, and may be 95 mol% or less, 90 mol% or less, 85 mol% or less, 80 mol% or less, or 70 mol% or less.

Examples of Y^{C2} include

-Ali-

-Cy-

-Ali(-)₂

-Cy(-)₂

(-)₂Ali-

(-)₂Cy-

(-)₂Ali(-)₂

(-)₂Cy(-)₂

-Ali-Cy-

-Cy-Ali-

-Cy-Ali-Cy- and

-Ali-Cy-Ali-

[wherein Ali is an aliphatic hydrocarbon group having 1 to 20 carbon atoms and Cy is a hydrocarbon aromatic ring or a heterocyclic ring].

Specific examples of Y^{C2} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

### (Example of Y^{C})

Examples of Y^{C} will be described. In the following, R' is independently at each occurrence a hydrogen atom or a hydrocarbon group having 1 to 30 (for example, 1 to 20, 1 to 10, or 1 to 4) carbon atoms.

When Y^{C} is divalent, examples of Y^{C} include -Y^{C1}-, - Y^{C1}-Y^{C2}-, -Y^{C1}-Y^{C2}-Y^{C1}-, -Y^{C1}-Y^{C2}-Y^{C1}-Y^{C2}-, -Y^{C2}-, -Y^{C2}-Y^{C1}-, - Y^{C2}-Y^{C1}-Y^{C2}-, and -Y^{C2}-Y^{C1}-Y^{C2}-Y^{C1}-.

When Y^{C} is trivalent, examples of Y^{C} include -Y^{C1}(-)₂, -Y^{C1}-Y^{C2}(-)₂, -Y^{C1}-(Y^{C2}-)₂, -Y^{C1}-Y^{C2}-Y^{C1}(-)₂, -Y^{C1}-Y^{C2}(-Y^{C1}-)₂, - Y^{C1}-(Y^{C2}-Y^{C1}-)₂, -Y^{C1}-Y^{C2}-Y^{C1}-Y^{C2}(-)₂, -Y^{C1}-Y^{C2}-Y^{C1}-(Y^{C2}-)_{2,} -Y^{C1}-Y^{C2}-(Y^{C1}-Y^{C2}-)_{2,} -Y^{C1}-(Y^{C2}-Y^{C1}-Y^{C2}-)₂;
-Y^{C2}(-)₂, -Y^{C2}-Y^{C1}(-)₂, -Y^{C2}-(Y^{C1}-)₂, -Y^{C2}-Y^{C1}-Y^{C2}(-)₂, -Y^{C2}-Y^{C1}(-Y^{C2}-)₂, -Y^{C2}-(Y^{C1}-Y^{C2}-)₂, -Y^{C2}-Y^{C1}-Y^{C2}-Y^{C1}(-)₂, -Y^{C2}-Y^{C1}-Y^{C2}-(Y^{C1}-)_{2,} -Y^{C2}-Y^{C1}-(Y^{C2}-Y^{C1}-)_{2,} and -Y^{C2}-(Y^{C1}-Y^{C2}-Y^{C1}-)₂.

When Y^{C} is tetravalent, examples of Y^{C} include -Y^{C1}(-)₃, -Y^{C1}-Y^{C2}(-)₃, -Y^{C1}-(Y^{C2}-)₃, -Y^{C1}-Y^{C2}-Y^{C1}(-)₃, -Y^{C1}-Y^{C2}(-Y^{C1}-)₃, -Y^{C1}-(Y^{C2}-Y^{C1}-)₃, -Y^{C1}-Y^{C2}-Y^{C1}-Y^{C2}(-)₃, -Y^{C1}-Y^{C2}-Y^{C1}-(Y^{C2}-)_{3,} -Y^{C1}-Y^{C2}-(Y^{C1}-Y^{C2}-)_{3,} -Y^{C1}-(Y^{C2}-Y^{C1}-Y^{C2}-)₃;
-Y^{C2}(-)₃, -Y^{C2}-Y^{C1}(-)₃, -Y^{C2}-(Y^{C1}-)₃, -Y^{C2}-Y^{C1}-Y^{C2}(-)₃, -Y^{C2}-Y^{C1}(-Y^{C2}-)₃, -Y^{C2}-(Y^{C1}-Y^{C2}-)₃, -Y^{C2}-Y^{C1}-Y^{C2}-Y^{C1}(-)₃, -Y^{C2}-Y^{C1}-Y^{C2}-(Y^{C1}-)_{3,} -Y^{C2}-Y^{C1}-(Y^{C2}-Y^{C1}-)_{3,} -Y^{C2}-(Y^{C1}-Y^{C2}-Y^{C1}-)₃.

Preferred examples of Y^{C} include
-Y^{C1}-, -Y^{C1}-Y^{C2}-, -Y^{C1}-Y^{C2}-Y^{C1}-, -Y^{C1}-Y^{C2}(-)₂,
-Y^{C2}-, -Y^{C2}-Y^{C1}-, -Y^{C2}-Y^{C1}-Y^{C2}-, -Y^{C2}-Y^{C1}(-)₂.

### (Preferred Example of Y^{C})

Preferably Y^{C} may be
-Y^{C11}- or
-YC11-YC21-YC12-
wherein, independently at each occurrence,
Y^{C11} is -O- or -NR'-,
Y^{C21} is a hydrocarbon group having 1 to 40 carbon atoms and
Y^{C12} is -O-, -O-C(=O)-, -O-C(=O)-O-, -C(=O)-NR'-, -O-C(=O)-NR'-, -NR'-, -NR'-C(=O)-, -NR'-C(=O)-O-, -NR'-C(=O)-NR'-, -C(=O)-, -C(=O)-O-, -C(=O)-NR'-, -SO₂-, - SO₂NR'-, -C(OR')R'- or -C(OR')(-)₂.

Y^{C11} is a non-hydrocarbon linker, and is a direct bond or divalent or higher valent group.

Y^{C11} may have a molecular weight of 10 or more, 50 or more, 100 or more, 200 or more, 300 or more, or 500 or more, and 2,000 or less, 1,500 or less, 1,000 or less, 750 or less, or 500 or less.

Y^{C11} may be a direct bond, -C(=O)-, -C(=O)-NR'- or - C(=S)-NR'-.

Y^{C21} is a divalent hydrocarbon linker, and may be a hydrocarbon group having 1 to 40 carbon atoms.

Y^{C21} may have 1 or more, 2 or more, 3 or more, 4 or more, 6 or more, 8 or more, 10 or more, 12 or more, 14 or more, 16 or more, or 18 or more, and 40 or less, 35 or less, 30 or less, 25 or less, 20 or less, 15 or less, 10 or less, or 5 or less carbon atoms.

The hydrocarbon group having 1 to 40 carbon atoms may be cyclic, branched or linear hydrocarbon group, and may be a saturated or unsaturated (e.g., saturated) aliphatic hydrocarbon group.

Specific examples of Y^{C21} include:
-(CH₂)ₚ- (p is 1 to 40, 1 to 20, or 1 to 10),
a linear hydrocarbon group having 1 to 40, 1 to 20, or 1 to 10 carbon atoms and having an unsaturated bond,
a branched hydrocarbon group having 1 to 40, 1 to 20, or 1 to 10 carbon atoms, and
-(CH₂)_{q}-Cy-(CH₂)ᵣ- (q and r are each independently 0 to 20, for example, 1 to 10, and Cy is a hydrocarbon aromatic ring or a heterocyclic ring).

Y^{C12} may be -O-, -O-C(=O)-, -O-C(=O)-O-, -O-C(=O)-NR'-, -NR'-, -NR'-C(=O)-, -NR'-C(=O)-O-, -NR'-C(=O)-NR'-, -C(=O)-, -C(=O)-O-, -C(=O)-NR'-, -SO₂-, -SO₂NR'-, - C(OR')R'- or -C(OR')(-)₂.

Y^{C12} may include at least an amide group, a urethane group, a urea group, an imide group, a thioamide group, a thiourethane group, a thiourea group, a thioimide group, a sulfone amide group, a sulfone urea group, a sulfone urethane group or a sulfone imide group. For example, Y^{C12} may be -C(=O)-NR'-, -O-C(=O)-NR'-, -NR'-C(=O)-, -NR'-C(=O)-NR'- or -SO₂NR'-. Inclusion of these groups in Y^{C12} may improve liquid repellency.

### (Z^{C})

Z^{C} is a monovalent hydrocarbon group having 6 or more and 40 or less carbon atoms and optionally having a substituent or a monovalent polysiloxane group. The same explanation in the above (Hydrocarbon group having 6 or more carbon atoms and optionally having substituent) and (Polysiloxane group) applies.

### [Other modifying groups]

The hydroxy group of polycarboxylic acid may be substituted by a modifying group other than -Y^{C}-Z^{C}ₙ. Examples of modifying groups include an anionic group and/or a cationic group. The anionic group and/or cationic group are as described in [Other modifying groups] in the polyol described above.

### [Production Method]

The modified body of polycarboxylic acid may be produced by reacting a modifying agent including a modifying group (or a precursor structure of the modifying group) with the hydroxy group of polycarboxylic acid.

### (Polycarboxylic acid)

Polycarboxylic acid has two or more carboxyl groups and is a raw material of the modified body of polycarboxylic acid. Polycarboxylic acid has two or more carboxyl groups in the molecule. Polycarboxylic acid may be aliphatic or aromatic, and is preferably aliphatic.

Polycarboxylic acid may be a low molecular weight compound (having a weight average molecular weight of, for example, less than 1,000 or 500 or less) and/or a high molecular weight compound. Polycarboxylic acid may have a weight average molecular weight of 100 or more, 300 or more, 500 or more, 1,000 or more, 3,000 or more, 5,000 or more, 10,000 or more, 30,000 or more, 100,000 or more, 300,000 or more, or 500,000 or more, and 1,000,000 or less, 7,500,000 or less, 500,000 or less, 3,000,000 or less, 100,000 or less, 75,000 or less, 50,000 or less, 30,000 or less, 10,000 or less, 5,000 or less, 3,000 or less, 2,000 or less, 1,000 or less, or 500 or less.

Polycarboxylic acid may have 2 or more, 5 or more, 7 or more, 10 or more, 15 or more, 30 or more, 50 or more, or 100 or more carboxyl groups, and 3,000 or less, 1,000 or less, 750 or less, 500 or less, 300 or less, 100 or less, 50 or less, 30 or less, or 20 or less carboxyl groups.

The carboxyl group equivalent of polycarboxylic acid may be 20 or more, 40 or more, 60 or more, 80 or more, 100 or more, 120 or more, 150 or more, and 1,000 or less, 800 or less, 600 or less, 400 or less, 200 or less, 100 or less, or 75 or less. The carboxyl equivalent of the polycarboxylic acid is obtained by dividing the weight average molecular weight of polycarboxylic acid by the number of hydroxyl groups.

Polycarboxylic acid may be a natural product. The natural product may be a high molecular weight natural product, a low molecular weight natural product or a derivative thereof. The above natural product also includes a compound converted from microorganisms.

Polycarboxylic acid may be at least one selected from the group consisting of a dicarboxylic acid, a tricarboxylic acid, a tetracarboxylic acid, a polymer of a carboxyl group-containing compound.

Dicarboxylic acid has two carboxyl groups, and examples thereof include oxalic acid, malonic acid, succinic acid, maleic acid, fumaric acid, adipic acid, phthalic acid, terephthalic acid, malic acid, tartaric acid, aldaric acid and a salt thereof.

Tricarboxylic acid has three carboxyl groups, and examples thereof include citric acid, tricarballylic acid, t-aconitic acid, trimellitic acid and a salt thereof.

Tetracarboxylic acid has four carboxyl groups, and examples thereof include pyromellitic acid and a salt thereof.

The polymer of a carboxyl group-containing compound has five or more carboxyl groups, and examples thereof include alginic acid, gum tragacanth, gum arabic, polyacrylic acid, polymethacrylic acid, polymaleic acid, polyaspartic acid, polyglutamic acid, hyaluronic acid, heparin, xanthan gum, gellan gum, carboxymethyl cellulose alginate, galacturonic acid, mannuronic acid and a salt thereof.

### (Modifying agent)

The modifying agent is preferably a compound which is reactive to polycarboxylic acid and comprises the monovalent hydrocarbon group having 6 or more and 40 or less carbon atoms and optionally having a substituent or the monovalent polysiloxane group described above.

Examples of modifying agents are as follows:

| | |
|---|---|
| Epoxy | (CH₂OCH)CH₂O-Z^{C} |
| Amine | H₂N-Z^{C} |
| Hydroxy | HO-Z^{C} |

[In the formula, Z^{C} is as described above].

Z^{C} in the structure of the above modifying agent may be replaced with any group constituting the modifying group. For example, Z^{C} may be a monovalent hydrocarbon group having 6 or more and 40 or less carbon atoms and optionally having a substituent, and for example, Z^{C} may be -Y^{C}-Z^{C}ₙ.

The modified body of polycarboxylic acid may also be synthesized by reacting polycarboxylic acid and a modifying agent. For example, the modified body of polycarboxylic acid may be produced by forming an ester bond by reacting a modifying agent, which is an epoxy compound, with the carboxy group of polycarboxylic acid. Conditions of the reaction between polycarboxylic acid and the modifying agent may be suitably designed by a person skilled in the art, including use of a catalyst (e.g., acid catalyst and base catalyst) and use of a condensing agent depending on the intended product.

### {Wax}

Wax, which is an example of liquid-repellent compounds, will be described. The repellent of the present disclosure may comprise wax, in particular hydrocarbon wax. The wax may be an organic material that is solid at room temperature and liquid when heated. For example, the wax may be a hydrocarbon compound or a compound having a hydrocarbon group having 6 or more and 40 or less carbon atoms (e.g., an alkyl group).

The wax in the present disclosure adheres to a substrate (in particular, a pulp substrate) and can impart liquid repellency such as water resistance, oil resistance, water-repellency, oil-repellency and/or antifouling properties to the substrate.

### [Characteristics of wax]

Characteristics of the wax will be described below.

The wax may be in the form of particles (powder). The wax may have an average particle size of 0.01 µm or more, 0.05 µm or more, 0.1 µm or more, 0.2 µm or more, 0.3 µm or more, 0.4 µm or more, 0.5 µm or more, or 0.6 µm or more, and 10 µm or less, 5 µm or less, 3 µm or less, 1 µm or less, 0.9 µm or less, 0.8 µm or less, 0.7 µm or less, 0.6 µm or less, 0.5 µm or less, 0.4 µm or less, 0.3 µm or less, or 0.2 µm or less, preferably 1 µm or less. The above particle size is the primary particle size. The average particle size in the above range provides excellent particle stability and may improve liquid repellency. The average particle size may be measured by a microscope (scanning electron microscope). Specifically, a sample of wax particles is observed under a microscope at any magnification. Next, when particles are spherical, the diameter is considered as the particle size, and when particles are non-spherical, the average of the major axis and the minor axis is regarded as the particle size. By repeating measuring the particle size of all particles present in a field of view and moving to a different field of view and measuring the particle size again, 100 or more particle sizes are measured, and the average of those is defined as the average particle size.

The wax may have a HD (n-hexadecane) contact angle of 10° or more, 20° or more, 25° or more, 30° or more, 35° or more, 40° or more, 45° or more, 50° or more, 55° or more, 60° or more, or 65° or more, preferably 25° or more, further preferably 30° or more, and 100° or less, 90° or less, or 75° or less. A HD contact angle of the wax of the lower limit or more can impart good liquid-repellency (in particular oil-repellency) to a substrate. The HD contact angle is a static contact angle of the wax to a spin-coated film, which is obtained by dropping 2 µL of HD on a spin-coated film and measuring the contact angle one second after the droplet reaches the film.

The wax may have a water contact angle of 35° or more, 40° or more, 45° or more, 50° or more, 55° or more, 65° or more, 75° or more, 85° or more, 90° or more, or 100° or more, and 160° or less, 140° or less, 130° or less, 120° or less, 110° or less, 100° or less, or 90° or less. A water contact angle of the wax of the lower limit or more can impart good liquid-repellency (in particular water-repellency) to a substrate. The water contact angle is a static contact angle of the wax to a spin-coated film, which is obtained by dropping 2 µL of water on a spin-coated film and measuring the contact angle one second after the droplet reaches the film.

The wax may be of low molecular weight (with a molecular weight of, for example, 1,000 or less, or 500 or less) or of high molecular weight. When the wax is a high molecular weight compound, the wax may have a weight average molecular weight of 1,000 or more, 3,000 or more, 5,000 or more, 7,500 or more, 10,000 or more, 30,000 or more, 100,000 or more, 300,000 or more, or 500,000 or more, and 10,000,000 or less, 7,500,000 or less, 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, 7,500 or less, 5,000 or less, or 3,000 or less.

The wax may have a melting point of 30°C or more, 40°C or more, 50°C or more, 60°C or more, 80°C or more, 100°C or more, or 120°C or more, preferably 40°C or more, particularly preferably 55°C or more, and 250°C or less, 225°C or less, 200°C or less, 150°C or less, 130°C or less, 120°C or less, 110°C or less, 100°C or less, 80°C or less, or 50°C or less, preferably 120°C or less. The melting point of wax may be measured according to JIS K 2235-1991. Usually, the peak top temperature of the endothermic peak at the maximum temperature before melting observed in DSC (differential scanning calorimetry) corresponds to the melting point.

### [Type of wax]

Examples of wax include mineral wax (petroleum wax) such as paraffin wax, microcrystalline wax, montan wax, ozokerite wax, ceresin wax and petrolatum wax; and synthetic wax such as Fischer-Tropsch wax, polyethylene wax and polypropylene wax. Paraffin wax and microcrystalline wax are preferred. The wax in the present disclosure may be hydrocarbon wax, and is preferably chain aliphatic hydrocarbon and, for example, linear or branched hydrocarbon, and in particular linear hydrocarbon.

### {Isocyanate derivative}

Isocyanate derivatives, which are an example of liquid-repellent compounds, will be described. In the present disclosure, an isocyanate derivative may be used as the water-repellent compound. The isocyanate derivative has a hydrocarbon group having 6 or more and 40 or less carbon atoms, in particular a monovalent hydrocarbon group having 6 or more and 40 or less carbon atoms.

The isocyanate derivative is a compound obtained by the reaction between an active hydrogen compound and a raw material isocyanate, and has a moiety derived from the active hydrogen-containing compound and a moiety derived from the raw material isocyanate. The isocyanate derivative usually has no isocyanate group unlike isocyanate curing agents.

The isocyanate derivative has -NHCO- which is formed by the reaction between an active hydrogen compound and a raw material isocyanate (in this regard, -NHCO- may be a moiety of a urethane group or a urea group). -NHCO- is a group formed by reacting an active hydrogen-containing group (typically a hydroxy group) of the active hydrogen compound and an active hydrogen-reactive group (typically an isocyanate group) of the raw material isocyanate. The isocyanate derivative is typically urethane (in particular, polyurethane).

The hydrocarbon group having 6 or more and 40 or less carbon atoms in the isocyanate derivative is preferably a monovalent hydrocarbon group. The hydrocarbon group having 6 or more and 40 or less carbon atoms is as described in the above (Hydrocarbon group having 6 or more carbon atoms and optionally having substituent).

The hydrocarbon group may be an aromatic hydrocarbon group or an aliphatic hydrocarbon group, and is preferably an aliphatic hydrocarbon group, and in particular a saturated aliphatic hydrocarbon group (an alkyl group). The hydrocarbon group may be branched, cyclic or linear, preferably in the form of chain, and in particular, linear. The hydrocarbon group may have 6 or more, 8 or more, 10 or more, 12 or more, 14 or more, 16 or more, 18 or more, 20 or more, or 22 or more, and preferably 10 or more, 12 or more, or 16 or more carbon atoms, and may have 40 or less, 35 or less, 30 or less, 25 or less, 20 or less, 15 or less, or 10 or less, and preferably 30 or less, 25 or less, or 20 or less carbon atoms.

The isocyanate derivative may have a weight average molecular weight of 3,000 or more, 5,000 or more, 10,000 or more, 30,000 or more, 100,000 or more, 300,000 or more, or 500,000 or more, and 1,000,000 or less, 750,000 or less, 500,000 or less, 300,000 or less, 100,000 or less, 75,000 or less, 50,000 or less, 30,000 or less, 10,000 or less, or 5,000 or less.

### [Active hydrogen compound]

The active hydrogen compound comprises an active hydrogen group which reacts with an isocyanate group.

Examples of active hydrogen groups include a hydroxy group, an amino group and a carboxyl group, and the active hydrogen group is typically a hydroxy group.

### (α1) Hydrocarbon alcohol

The active hydrogen compound may be an active hydrogen compound (α1) composed of a hydrocarbon group and hydroxy.

The hydrocarbon group in the active hydrogen compound (α1) is the hydrocarbon group having 6 or more and 40 or less carbon atoms described above, and is as described above.

Furthermore, the active hydrogen compound (α1) preferably has one hydroxy group per molecule.

Examples of active hydrogen compounds (α1) include a linear saturated hydrocarbon group-containing alcohol such as n-tridecanol, n-tetradecanol, n-pentadecanol, n-hexadecanol, n-heptadecanol, n-octadecanol (stearyl alcohol), n-nonadecanol and eicosanol; branched saturated hydrocarbon group-containing alcohol such as isomyristyl alcohol, isocetyl alcohol, isostearyl alcohol and isoicosyl alcohol; a linear unsaturated hydrocarbon group-containing alcohol such as tetradecenyl alcohol, hexadecenyl alcohol, oleyl alcohol, icosenyl alcohol, docosenyl alcohol, tetracosenyl alcohol, hexacosenyl alcohol and octacosenyl alcohol; and branched unsaturated hydrocarbon group-containing active hydrogen compound such as phytol.

Herein, the linear saturated hydrocarbon group-containing alcohol and the linear unsaturated hydrocarbon group-containing alcohol may be used together. When the linear saturated hydrocarbon group-containing alcohol and the linear unsaturated hydrocarbon group-containing alcohol are used together, the mixing ratio of the linear saturated hydrocarbon group-containing alcohol is for example, 40 parts by mass or more, preferably 55 parts by mass or more, more preferably 70 parts by mass or more, and for example 90 parts by mass or less, and preferably 80 parts by mass or less based on 100 parts by mass of the total amount of the linear saturated hydrocarbon group-containing alcohol and the linear unsaturated hydrocarbon group-containing alcohol. Furthermore, the mixing ratio of the linear unsaturated hydrocarbon group-containing alcohol is, for example, 10 parts by mass or more, and preferably 20 parts by mass or more, and for example 60 parts by mass or less, preferably 45 parts by mass or less, and more preferably 30 parts by mass or less based on 100 parts by mass of the total amount of the linear saturated hydrocarbon group-containing alcohol and the linear unsaturated hydrocarbon group-containing alcohol. When the mixing ratio of the linear saturated hydrocarbon group-containing alcohol is the lower limit or more, the crystallinity of hydrocarbon groups is improved, and as a result the liquid-repellency of the object to be treated with the repellent may be improved.

### (α2) Modified body of sugar alcohol/ hydroxy acid

The active hydrogen compound may be a modified body of sugar alcohol/ hydroxy acid (α2), which is sugar alcohol/ hydroxy acid (sugar alcohol and/or hydroxy acid) modified with a hydrocarbon group having 6 or more and 40 or less carbon atoms. The type of sugar alcohol/ hydroxy acid is not limited, and may be cyclic or acyclic. Examples of sugar alcohols include monosaccharide, reducing sugar, amino sugar, aldonic acid and aldonolactone. Examples of hydroxy acids include hydroxy polyvalent carboxylic acid. Sugar alcohol/ hydroxy acid may be a substance existing in a living body. Examples of sugar alcohols/ hydroxy acids include, but are not limited to, a compound derived from aldose and ketose, such as tetrose, pentose, hexose and heptose. Specific examples thereof include glucose, glyceraldehyde, erythrose, arabinose, ribose, arabinose, allose, altrose, mannose, xylose, lyxose, gulose, galactose, talose, fructose, ribulose, mannoheptulose, sedoheptulose, threose, erythritol, threitol, glucopyranose, mannopyranose, talopyranose, allopyranose, altropyranose, idopyranose, gulopyranose, glucitol, mannitol, erythritol, sorbitol, arabitol, xylitol, ribitol, galactitol, fucitol, iditol, inositol, pentaerythritol, dipentaerythritol, volemitol, gluconic acid, glyceric acid, xylonic acid, galactaric acid, ascorbic acid, citric acid, gluconolactone, glyceric acid lactone, xylonic acid lactone, glucosamine, galactosamine and a mixture thereof. Sugar alcohol/ hydroxy acid may have 2 or more, 4 or more, or 6 or more, and 30 or less, 20 or less, or 10 or less carbon atoms. The compound (α2) has an average OH value of more than 0 to about 230, preferably about 10 to about 175, and most preferably about 25 to about 140.

The modified body of sugar alcohol/ hydroxy acid (α2) may have 1 or more, 2 or more, 3 or more, 4 or more, or 5 or more, and 12 or less, 9 or less, 6 or less, or 3 or less hydrocarbon groups having 6 or more and 40 or less carbon atoms.

In the modified body of sugar alcohol/ hydroxy acid (α2), at least one active hydrogen (for example, hydrogen in the OH group and the carboxyl group) of the sugar alcohol and/or hydroxy acid may be replaced with an active hydrogen-substituting group selected from -R^{α2}, - C(O)R^{α2}, -(CH₂CH₂O)ₙ(CH(CH₃)CH₂O)ₘR^{α2}, -

(CH₂CH₂O)ₙ(CH(CH₃)CH₂O)ₘC(O)R^{α2} and a mixture thereof. Here R^{α2} is a hydrogen atom or a hydrocarbon group having 6 or more and 40 or less carbon atoms, n is each independently 0 to 20, m is each independently 0 to 20, and m + n may be more than 0. The compound (α2) has at least one active hydrogen. In the modified body of sugar alcohol/ hydroxy acid, at least one (one or more) active hydrogens in sugar alcohol/ hydroxy acid may be unmodified. These active hydrogens (for example, an -OH group) may be allowed to react with the active hydrogen reactive group (in particular, an isocyanate group) in the compound (b) to form -NHCO-.

### (α21) Modified body of sorbitan

The modified body of sugar alcohol/ hydroxy acid may be a modified body of sorbitan (α21), which is sorbitan modified with a hydrocarbon group having 6 or more and 40 or less carbon atoms, and may be in particular alkyl sorbitan. The modified body of sorbitan may be a sorbitan substituted with -R^{α2}, -C(O)R^{α2}, -

(CH₂CH₂O)ₙ(CH(CH₃)CH₂O)ₘR^{α2}, -(CH₂CH₂O)ₙ(CH(CH₃)CH₂O)ₘC(O)R^{α2} or a mixture thereof (wherein R^{α2} is a hydrocarbon group having 6 or more and 40 carbon atoms). The modified body of sorbitan may be, for example, sorbitan monosubstituted, disubstituted, or trisubstituted with -C(O)R^{α2}. In this regard, sorbitan may include sorbitol, isosorbide, or other intermediate products or by-products thereof. A commercially available sorbitan such as SPAN may be used as the above alkyl sorbitan.

In an embodiment, at least one active hydrogen-substituting group may be -C(O)R^{α2}, and R^{α2} may be a linear · branched alkyl group having 6 to 40, more preferably 7 to 21, and most preferably 11 to 21 carbon atoms. Preferred compounds include a monosubstituted, disubstituted, or trisubstituted sorbitan derived from caprylic acid, capric acid, lauric acid, myristic acid, palmitic acid, stearic acid, arachidic acid, behenic acid, lignoceric acid and a mixture thereof. More preferred compounds include monosubstituted, disubstituted or trisubstituted sorbitan stearate and sorbitan behenin.

In an embodiment, R^{α2} may have at least one unsaturated bond. Examples of such compounds (in which at least one active hydrogen-substituting group is selected from -C(O)R^{α2} and R^{α2} has at least one unsaturated bond) include, but are not limited to, sorbitan trioleate (in which R^{α2} is -C₇H₁₄CH=CHC₈H₁₇). Other examples include, but are not limited to, a monosubstituted, disubstituted or trisubstituted sorbitan derived from palmitoleic acid, linoleic acid, arachidonic acid and erucic acid.

In an embodiment, the modified body of sorbitan (α21) has at least one active hydrogen-substituting group. The active hydrogen-substituting group may be independently -(CH₂CH₂O)ₙ(CH(CH₃)CH₂O)ₘR^{α2} or - (CH₂CH₂O)ₙ(CH(CH₃)CH₂O)ₘC(O)R^{α2}, and m is each independently 0 to 20, n is each independently 0 to 20, and m+n is more than 0). This compound is known as polysorbate and sold under the tradename TWEEN. Those sorbitans may be monosubstituted, disubstituted or trisubstituted by R^{α2}. Commercially available polysorbates are known to include a wide variety of compounds such as polysorbate in which each R² is H (non-substituted) and polysorbate in which each R^{α2} is a linear or branched alkyl group having 6 to 40 carbon atoms (fully substituted), and a mixture of those substituted compounds. Examples of such modified bodies of sorbitan (α21) include polysorbate such as polysorbate tristearate and polysorbate monostearate. Examples of modified bodies of sorbitan (α21) in which m+n is more than 0 and R^{α2} has at least one unsaturated bond include, but are not limited to, polysorbate trioleate (in which R^{α2} is C₇H₁₄CH=CHC₈H₁₇) which is sold under the name polysorbate 80. The modified body of sorbitan (α21) may include a mixture of compounds having various active hydrogen substituting groups, and may also include a mixture of a compound in which R^{α2} has at least one unsaturated bond and a compound in which R^{α2} is fully saturated.

### (α22) Modified body of citric acid

The modified body of sugar alcohol/ hydroxy acid (α2) may be a modified body of citric acid (α22), which is citric acid modified with a hydrocarbon group having 6 or more and 40 or less carbon atoms, and in particular, may be alkyl citrate. For example, the modified body of citric acid (α22) may exist in the form of a monosubstituted, disubstituted or trisubstituted body having an alkyl group. A mixture of citrates which have a different number of active hydrogen substituting groups may be used, and a mixture of a compound comprising a hydrocarbon group in which R^{α2} has at least one unsaturated bond and a compound in which R^{α2} is a fully saturated hydrocarbon may also be included. The modified body of citric acid (α22) may have an active hydrogen substituting group selected from - (CH₂CH₂O)ₙ(CH(CH₃)CH₂O)ₘR^{α2} and - (CH₂CH₂O)ₙ(CH(CH₃)CH₂O)ₘC(O)R^{α2} (in which R^{α2} is a hydrocarbon group having 6 or more and 40 or less carbon atoms). Examples of modified bodies of citric acid (α22) include, but are not limited to, trialkyl citrate.

### (α23) Modified body of pentaerythritol

The modified product of sugar alcohol/ hydroxy acid (α21) may be a modified body of pentaerythritol (α23), which is pentaerythritol modified with a hydrocarbon group having 6 or more and 40 or less carbon atoms, and may be a monosubstituted, disubstituted or trisubstituted pentaerythritol comprising a hydrocarbon group having 6 or more and 40 or less carbon atoms (in particular, an alkyl group), and is, for example, dipentaerythritol ester. The active hydrogen substituting group may include -CH₂C[CH₂OR^{α2}]₃ (wherein R^{α2} is a hydrocarbon group having 6 or more and 40 or less carbon atoms). Furthermore, the modified body of pentaerythritol (α23) may include a mixture of compounds having hydrocarbon groups with a different chain length, or a mixture of a compound in which R^{α2} has at least one unsaturated bond and a compound in which R^{α2} is fully saturated.

### (α3) Cationic active hydrogen compound

The active hydrogen compound may be a cationic active hydrogen compound (α3) having an active hydrogen group and a cationic group.

Furthermore, the cationic active hydrogen compound (α3) preferably has two or more hydroxy groups per molecule.

Examples of cationic groups include a tertiary amino group.

In other words, the cationic active hydrogen compound (α3) preferably has two or more hydroxy groups per molecule as an active hydrogen group and a tertiary amino group as a cationic group in combination.

This cationic active hydrogen compound can impart good dispersibility in liquid medium (for example, water) and can introduce a cationic group compatible to textile products (described later) into resin and thus can improve wash durability.

More preferably, the cationic active hydrogen compound has two hydroxy groups per molecule as an active hydrogen group and a tertiary amino group as a cationic group in combination.

Examples of cationic active hydrogen compounds include alkyl dialkanolamine such as N-methyl diethanolamine, N-ethyl diethanolamine, N-propyl diethanolamine, N-butyl diethanolamine, N-methyl dipropanolamine and propanolamine and trialkanolamine such as N-triethanolamine and N-triisopropanolamine, and preferably N-methyl diethanolamine.

The cationic active hydrogen compound (or a portion of the water-repellent compound which is derived from a cationic active hydrogen compound) may form a salt with an acid compound.

Examples of acid compounds include organic acid and inorganic acid. Examples of organic acids include acetic acid, lactic acid, tartaric acid and malic acid, and acetic acid and lactic acid are preferred, and acetic acid is more preferred. Examples of inorganic acids include hydrochloric acid, sulfuric acid and phosphoric acid, and hydrochloric acid is preferred. The acid compound is preferably an organic acid. When the acid compound includes an organic acid, acid is evaporated by heat treatment, and liquid-repellency of the object to be treated with the repellent can be improved. Furthermore, evaporation of acid by heat treatment facilitates adsorption of cationic groups to textile products, and thus wash durability of the textile product may be improved.

### (α4) Other active hydrogen-containing compounds

The active hydrogen compound (α) may include other active hydrogen-containing compounds (α4).

### (α41) Compound

The active hydrogen compound (α4) may be a compound (α41) represented by the formula:

R^{α41}-X^{α41}

wherein R^{α41} is a C₁ to C₃₀ linear or branched alkyl optionally having at least one unsaturated group, a hydroxy functional C₁ to C₃₀ linear or branched alkyl, hydroxy functional linear or branched C₁ to C₃₀ polyether, hydroxy functional linear or branched polyester, hydroxy functional linear or branched organosiloxane, thiol functional C₁ to C₃₀ linear or branched alkyl, amine functional C₁ to C₃₀ linear or branched alkyl, Y-R^{α41}1R^{α412}R^{α413}N⁺-R^{α414}- wherein Y is a halide ion such as Cl⁻, HOS(=O)₂-R^{α414}-, or R^{α411}R^{α412}C=N- wherein R^{α411}, R^{α412}, R^{α413} are each independently -H or C₁ to C₆ alkyl and R^{α414} is a divalent alkyl group having 1 to 20 carbon atoms,
X^{α41} is a isocyanate reactive functional group such as -OH, -C(O)OH, -SH, -NH(R'), -O-(CH₂CH₂O)ₛ(CH(CH₃)CH₂O)ₜ-H or -C(O)-O-(CH₂CH₂O)ₛ(CH(CH₃)CH₂O)ₜ-H wherein R' is -H or a monovalent organic group, s is an integer of 0 to 50, t is an integer of 0 to 50 and s+t is more than 0.

The compound (α41) may be a hydrophilic watersoluble material having at least one hydroxy terminated polyether. In the formula, X^{α41} is -O-(CH₂CH₂O)ₛ(CH(CH₃)CH₂O)ₜ-H or -C(O)-O-(CH₂CH₂O)ₛ(CH(CH₃)CH₂O)ₜ-H. -(CH2_{C}H2_{O})- represents an oxyethylene group (EO) and -(CH(CH₃)CH₂O)- represents an oxypropylene group (PO). These polyethers may include only the EO group, only the PO group or a mixture thereof. Furthermore, these polyethers may be in the form of a specified PEG-PPG-PEG (polyethylene glycol-polypropylene glycol-polyethylene glycol) triblock copolymer.

In an embodiment, X^{α41} is -OH, -C(O)OH, -SH or - NH(R'), and R^{α41} is selected from a C₁ to C₃₀ linear or branched alkyl optionally having at least one unsaturated group, a hydroxy functional C₁ to C₃₀ linear or branched alkyl, a hydroxy functional linear or branched C₁ to C₃₀ polyether, a hydroxy functional linear or branched polyester, hydroxy or amine functional linear or branched organosiloxane, thiol functional C₁ to C₃₀ linear or branched alkyl, and an amine functional C₁ to C₃₀ linear or branched alkyl.

X^{α41} may be -OH, and examples of such compounds (α41) include, but are not limited to, an alkyl alcohol such as propanol and butanol, an aliphatic alcohol including stearyl alcohol (in which R^{α41} is a C₁ to C₃₀ linear or branched alkyl optionally having at least one unsaturated group), alkyldiol or polyol such as ethanediol, propanediol, butanediol and hexanediol (in which R^{α41} is a hydroxy functional C₁ to C₃₀ linear or branched alkyl), alkylene glycol ether such as triethylene glycol, tetraethylene glycol, poly(ethylene glycol) (PEG), poly(propylene glycol)(PPG) and poly(tetrahydrofuran), glycol ether containing a mixture of PEG, PPG or THF units (in which R^{α41} is hydroxy functional linear or branched C₁ to C₃₀ polyether), polyester polyol (in which R^{α41} is hydroxy functional linear or branched polyester), silicone prepolymer polyol (in which R^{α41} is hydroxy functional linear or branched organosiloxane), N,N-dimethylaminoethanol (in which R^{α41} is amine functional C₁ to C₃₀ linear or branched alkyl), choline chloride or betaine HCl (in which R^{α41} is Y⁻R^{α411}R^{α412}R^{α413}N⁺-R^{α414}-) and butanone oxime (in which R^{α41} is R^{α411}R^{α412}C=N-). Polyether polyol may include only the EO group, only the PO group, only the THF group, or a mixture thereof. These polyethers may be in the form of a block copolymer which is specified with PEG-PPG-PEG (polyethylene glycol-polypropylene glycol-polyethylene glycol). Polyether glycol has an average molecular weight of preferably about 200 or more, and most preferably 350 to 2,000.

X^{α41} may be -C(O)OH, and examples of such compounds (α41) include, but are not limited to, fatty acid such as caprylic acid, capric acid, lauric acid, myristic acid, palmitic acid, stearic acid, arachidic acid, behenic acid, lignoceric acid, palmitoleic acid, linoleic acid, arachidonic acid, oleic acid and erucic aid (in which R^{α41} is a C₁ to C₃₀ linear or branched alkyl optionally having at least one unsaturated group), hydroxy-containing acid such as hydroxycaprylic acid, hydroxycapric acid, hydroxylauric acid, hydroxymyristic acid, hydroxypalmitic acid, hydroxystearic acid, hydroxyarachidic acid, hydroxybehenic acid, hydroxylignoceric acid, hydroxypalmitoleic acid, hydroxylinoleic acid, hydroxyarachidonic acid, hydroxyoleic acid and hydroxyerucic acid (in which Rα⁴¹ is hydroxy functional C₁ to C₃₀ linear or branched alkyl), and mercaptoalkanoic acid such as mercaptopropionic acid (in which R^{α41} is thiol functional C₁ to C₃₀ linear or branched alkyl).

X^{α41} may be -SH, and examples of such compounds (α41) include, but are not limited to, alkylthiol such as lauryl mercaptan and dodecyl mercaptan (in which R^{α41} is a C₁ to C₃₀ linear or branched alkyl optionally having at least one unsaturated group).

X^{α41} may be -NH(R'), and examples of such compounds (α41) include, but are not limited to, alkylamine such as diisopropylamine, propylamine, hexylamine and laurylamine (in which R^{α41} is a C₁ to C₃₀ linear or branched alkyl optionally having at least one unsaturated group), alkanolamine such as ethanolamine and propanolamine (in which R^{α41} is a hydroxy functional C₁ to C₃₀ linear or branched alkyl), silicone prepolymer polyamine (in which R^{α41} is amine functional linear or branched organosiloxane), alkyldiamine (in which R^{α41} is an amine functional C¹ to C³⁰ linear or branched alkyl), and aminoalkanesulfonic acid such as 2-aminoethanesulfonic acid (in which R^{α41} is HO-S(O)₂R^{α414-}).

### (α42) Compound

The compound (α42) may be a compound represented by the formula:

R^{α421}-(OCH₂CH(OR^{α422})CH₂)_{z}-OR^{α423}

[wherein
at least one of R^{α421}, R^{α422} and R^{α423} is -H, and R^{α421}, R^{α422} and R^{α423} are each independently -H, -R^{α424} or - C(O)R^{α424}, R^{α424} is independently a linear or branched alkyl group having 5 to 29 carbon atoms and optionally having at least one unsaturated bond, and z is 1 to 15.]

The compound (α42) may be a compound commonly referred to as polyglycerol. Other specific examples include, but are not limited to, triglycerol monostearate, triglycerol distearate, hexaglycerol monostearate, hexaglycerol distearate, decaglyceryl mono(caprylate/caprate), decaglyceryl di(caprylate/caprate), decaglycerol, polyglycerol-3 and C18 diglyceride.

### (α43) Chain extender

The compound (α4) may be a chain extender (α43). The chain extender (α43) has two or more (for example, two) functional groups having active hydrogen in the molecule. The chain extender may be a known chain extender, and examples thereof include an aliphatic or aromatic diol or polyol such as ethylene glycol, diethylene glycol, triethylene glycol, propylene glycol, dipropylene glycol, tripropylene glycol, 1,4-butanediol, 1,6-hexanediol and cyclohexanedimethanol; an aliphatic or aromatic diamine or polyamine such as ethylenediamine, piperazine, aminoethylpiperazine, phenylenediamine and diethyltoluenediamine; a phenol hydroxyl group-containing compound such as resorcinol, catechol, hydroquinone, bisphenol, bisphenol A, bisphenol AP (1,1-bis(4-hydroxylphenyl)-1-phenylethane), bisphenol F, bisphenol K, bisphenol M, tetramethylbiphenol and o,o'-diallylbisphenol A; and alcohol amine such as aminoethylethanolamine, aminopropylethanolamine, aminohexylethanolamine, aminoethylpropanolamine, aminopropylpropanolamine and aminohexylpropanolamine.

### [Raw material isocyanate]

The fluorine-containing compound comprises a moiety derived from a raw material isocyanate.

Examples of raw material isocyanates include a compound selected from: an aromatic polyisocyanate selected from tolylene diisocyanate (2,4- or 2,6-tolylene diisocyanate or a mixture thereof) (TDI), phenylene diisocyanate (m-, p-phenylene diisocyanate or a mixture thereof, 4,4'-diphenyl diisocyanate, diphenylmethane diisocyanate (4,4'-, 2,4 or 2,2'-diphenylmethane diisocyanate or a mixture thereof) (MDI), 4,4'-toluidine isocyanate (TODI), 4,4'-diphenyl ether diisocyanate, xylylene diisocyanate (1,3- or 1,4-xylylene diisocyanate or a mixture thereof) (XDI), tetramethyl xylylene diisocyanate (1,3- or 1,4-tetramethylxylylene diisocyanate or a mixture thereof) (TMXDI), ω,ω'-diisocyanate-1,4-diethylbenzene, naphthalene diisocyanate (1,5-, 1,4- or 1,8-naphthalene diisocyanate or a mixture thereof) (NDI), triphenylmethane triisocyanate, tris(isocyanate phenyl)thiophosphate, polymethylene polyphenylene polyisocyanate, nitrodiphenyl-4,4'-diisocyanate, 3,3'-dimethyldiphenylmethane-4,4'-diisocyanate, 4,4'-diphenylpropane diisocyanate and 3,3'-dimethoxydiphenyl-4,4'-diisocyanate;
an acyclic aliphatic polyisocyanate selected from trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), hexamethylene diisocyanate, pentamethylene diisocyanate, 2,2,4-trimethylhexamethylene diisocyanate, 2,4,4-trimethylhexamethylene diisocyanate, 2,6-diisocyanatomethylcaproate, lysine diisocyanate, lysine ester triisocyanate, 1,6,11-undecane triisocyanate, 1,3,6-hexamethylene triisocyanate, trimethyl hexamethylene diisocyanate and decamethylene diisocyanate;
an alicyclic polyisocyanate selected from 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate, IPDI), methylene bis(cyclohexyl isocyanate (4,4'-, 2,4'- or 2,2'-methylene bis(cyclohexyl isocyanate or a mixture thereof) (hydrogenated MDI), methyl cyclohexane diisocyanate (methyl-2,4-cyclohexane diisocyanate, methyl-2,6-cyclohexane diisocyanate, bis(isocyanatomethyl)cyclohexane (1,3- or 1,4-bis(isocyanatomethyl)cyclohexane or a mixture thereof) (hydrogenated XDI), dimer acid diisocyanate, transcyclohexane 1,4-diisocyanate, hydrogenated tolylene diisocyanate (hydrogenated TDI) and hydrogenated tetramethylxylylene diisocyanate (hydrogenated TMXDI);
a bridged alicyclic isocyanate selected from norbornene diisocyanate, norbornane diisocyanatomethyl, bicycloheptane triisocyanate, diisocyanatomethyl bicycloheptane and di(diisocyanatomethyl)tricyclodecane; 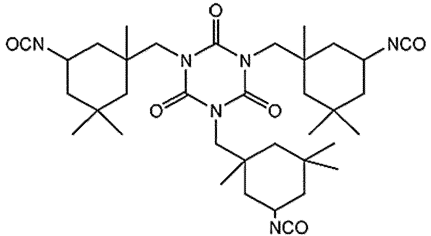 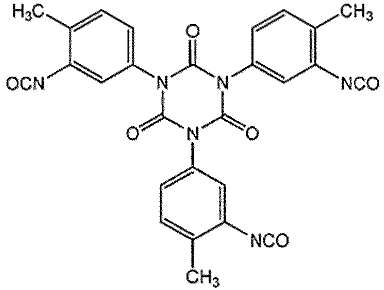 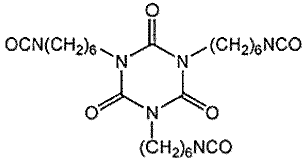 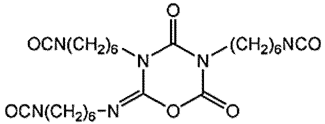 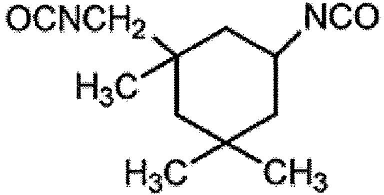 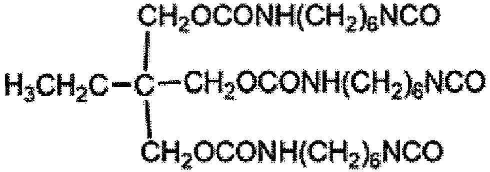 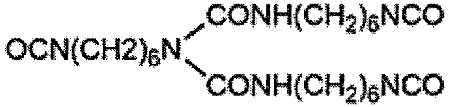 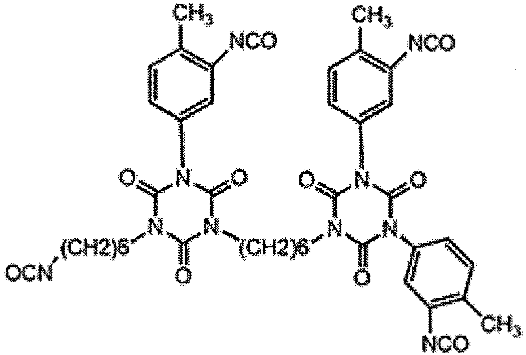
a biuret modified product of the above isocyanate, a multimer (such as dimer, trimer (e.g., an isocyanurate derivative, an iminooxadiazindion derivative), pentamer, heptamer) of polyisocyanate, an allophanate derivative (e.g., an allophanate derivative formed by the reaction between the above polyisocyanate and a monovalent alcohol or divalent alcohol), a polyol derivative (e.g., a polyol derivative formed by the reaction between the above polyisocyanate and trivalent alcohol (e.g., trimethylolpropane) (alcohol adduct, preferably trimethylolpropane adduct and the like)), a biuret derivative (e.g., a biuret derivative formed by the reaction between the above polyisocyanate and water or amine), a urea derivative (e.g., a urea derivative formed by the reaction between the above polyisocyanate and diamine), an oxadiazinetrione derivative (e.g., oxadiazinetrione formed by the reaction between the above polyisocyanate and carbon dioxide gas), a carbodiimide derivative (e.g., a carbodiimide derivative formed by decarboxylation condensation reaction of the above polyisocyanate), a uretdione derivative and a uretonimine derivative.

The raw material isocyanate has an average number of isocyanate groups of 2 or more, preferably 2.5, and more preferably 2.9, and for example 3.8 or less. The raw material isocyanate may be polyisocyanate having a plurality of isocyanate groups.

### [Method for synthesizing isocyanate derivative]

To obtain the isocyanate derivative, the active hydrogen compound is reacted with the raw material isocyanate. The reaction may be performed in a single step or sequentially in multiple steps. For example, when unreacted active hydrogen groups or active hydrogen reactive groups are present in the product, synthesis may be sequentially performed. Sequential reaction is useful when substituted sugar alcohol having a large number of OH groups is used. The reaction conditions such as the concentration in the reaction and reaction temperature are not limited, and may be determined by those skilled in the art. More specifically, the active hydrogen compound and the raw material isocyanate may be mixed so that the equivalent ratio of the active hydrogen reactive group (an isocyanate group) to the active hydrogen group (active hydrogen reactive group/ active hydrogen group) is for example, 1.2 or more, preferably 1.5 or more, and for example, 2.0 or less.

### [Composition of isocyanate derivative]

The amount of the moiety derived from the active hydrogen compound may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the isocyanate derivative.

The amount of the moiety derived from the hydrocarbon alcohol (α1) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the moiety derived from the active hydrogen compound.

The amount of the moiety derived from the modified body of sugar alcohol/ hydroxy acid (α2) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the moiety derived from the active hydrogen compound.

The amount of the moiety derived from the cationic active hydrogen compound (α3) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the moiety derived from the active hydrogen compound.

The amount of the moiety derived from another active hydrogen-containing compound (α4) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the moiety derived from the active hydrogen compound.

The amount of the moiety derived from the raw material isocyanate may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less based on the isocyanate derivative.

### {Silicone}

Silicone, which is an example of liquid-repellent compounds, will be described. The repellent in the present disclosure may comprise silicone (polyorganosiloxane). Inclusion of silicone can achieve both good texture and durability in addition to good liquid repellency derived from the polysiloxane structure.

Silicone is a compound mainly composed of a polyorganosiloxane structure, and may be a non-modified silicone in which the reactive group is not modified (e.g., polyalkylsiloxane, polyalkylphenylsiloxane, polydimethylsiloxane), or a modified silicone (e.g., amino-modified, epoxy-modified silicone, carboxy-modified silicone, methylhydrogen silicone).

The polyorganosiloxane structure of silicone is as described in the above (Polysiloxane group).

The main backbone of silicone is a polyorganosiloxane structure. The weight of SiO may account for 30% by weight or more, 50% by weight or more, 70% by weight or more, or 90% by weight or more.

The polysiloxane group has 3 or more, 5 or more, 6 or more, 10 or more, 30 or more, 50 or more, 100 or more, 500 or more, 1,000 or more, 2,000 or more, or 3,000 or more, preferably 10 or more silicon atoms, and 50,000 or less, 25,000 or less, 10,000 or less, 7,500 or less, 5,000 or less, 3,000 or less, 1,500 or less, 1,000 or less, 500 or less, 300 or less, 200 or less, 100 or less, or 50 or less, and for example, 500 or less silicon atoms.

Silicone may take the form of a liquid (such as oil), a viscous material, or solid particles and the like.

### {Dispersant}

The repellent in the present disclosure may comprise a dispersant. The dispersant may be at least one selected from an organic dispersant and an inorganic dispersant. The dispersant may be at least one selected from an anionic dispersant, a nonionic dispersant, a cationic dispersant, an amphoteric dispersant and an inorganic dispersant. In particular, the repellent of the present disclosure may include a nonionic dispersant.

An organic dispersant and an inorganic dispersant may be used as the dispersant, respectively, or an organic dispersant and an inorganic dispersant may be used in combination.

An organic dispersant may be used as the dispersant. The organic dispersant may be classified into a nonionic dispersant, an anionic dispersant, a cationic dispersant and an amphoteric dispersant. The organic dispersant may mean a surfactant.

The dispersant does not need to have a fluorine atom.

### [Nonionic dispersant]

The dispersant may comprise a nonionic dispersant. The nonionic dispersant may be a nonionic surfactant.

The nonionic dispersant may be of low molecular weight (with a molecular weight of, for example, 2,000 or less, in particular, 10,000 or less) or of high molecular weight (with a molecular weight of, for example, 2,000 or more). The nonionic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 25,000 or less, 10,000 or less, 7,500 or less, 5,000 or less, 2,500 or less, 750 or less, or 250 or less.

Examples of nonionic dispersant include ether, ester, ester ether, alkanolamide, polyol and amine oxide.

The ether is, for example, a compound having an oxyalkylene group (preferably a polyoxyethylene group).

The ester is, for example, an ester of an alcohol and a fatty acid. The alcohol is, for example, an alcohol which is 1 to 30 hydric (particularly dihydric to decahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is 1 to 30 hydric (particularly dihydric to decahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5 hydroxyl groups, having 2 to 50, particularly 5 to 30 carbon atoms.

The polyol may be, for example, a dihydric to pentahydric alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.

The nonionic dispersant is selected from the group consisting of an ether, an ester, an ester ether, an alkanolamide, a polyol and an amine oxide, and is preferably a nonionic dispersant having an oxyalkylene group.

The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example).

Furthermore, the nonionic dispersant may not include an aromatic group.

The nonionic dispersant may be the compound represented by the formula:

R¹O-(CH₂CH₂O)ₚ-(R²O)_{q}-R³

[wherein R¹ is an alkyl group having 1 to 22 carbon atoms, an alkenyl group or an acyl group, having 2 to 22 carbon atoms,
R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is a numeral of 2 or more,
q is 0 or a numeral of 1 or more.].

R¹ preferably has 8 to 20 carbon atoms, particularly 10 to 18 carbon atoms. Preferred examples of R¹ include an octyl group, a nonyl group, a trimethylnonyl group, a lauryl group, a tridecyl group, an oleyl group and a stearyl group.

R² is, for example, a propylene group and a butylene group.

In the nonionic dispersant, for example, p may be a numeral of 3 or more (for example, 5 to 200) and q may be a numeral of 2 or more (for example, 5 to 200). Namely, -(R²O)_{q}- may form, for example, a polyoxyalkylene chain.

The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.

Specific examples of the nonionic dispersants include a condensation product of ethylene oxide with hexylphenol, isooctatylphenol, hexadecanol, oleic acid, an alkane(C₁₂-C₁₆)thiol, a sorbitan monofatty acid (C₇-C₁₉), an alkyl(C₁₂-C₁₈)amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin derivative. Examples of nonionic dispersants include polyoxyethylene alkyl ether, polyoxyethylene polyoxypropylene alkyl ether, polyoxyethylene polyoxybutylene alkyl ether, polyoxyethylene polyoxypropylene glycol and polyethyleneimine ethoxylate.

The proportion of the polyoxyethylene block can be 5 to 80% by weight, for example, 30 to 75% by weight, particularly 40 to 70% by weight, based on a molecular weight of the nonionic dispersant (copolymer).

The average molecular weight of the nonionic dispersant is generally 300 to 5,000, for example, 500 to 3,000.

For example, the nonionic dispersant may be used singly or in admixture of two or more. The nonionic dispersant may be a mixture of a compound with an HLB (hydrophilic-hydrophobic balance) of less than 15 (particularly 5 or less) and a compound with an HLB of 15 or more. More specifically, it is preferable to select the nonionic dispersant from polyoxyethylene alkyl ether, polyoxyethylene polyoxypropylene alkyl ether, polyoxyethylene and polyoxypropylene having an HLB of 1 to 18, sorbitan fatty acid ester, glycerol fatty acid ester, polyglycerol fatty acid ester, sucrose fatty acid ester, propylene glycol fatty acid ester, polyoxyethylene glycerol fatty acid ester and polyoxyethylene sorbitan fatty acid ester having an HLB of less than 7.

### [Cationic dispersant]

The dispersant may comprise a cationic dispersant. The cationic dispersant may be a cationic surfactant. The cationic dispersant may be a compound not having an amide group.

The cationic dispersant may be of low molecular weight (with a molecular weight of 2,000 or less, in particular, 10,000 or less) or of high molecular weight (with a molecular weight of, for example, 2,000 or more). The cationic dispersant may not have an amide group. The cationic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 25,000 or less, 10,000 or less, 7,500 or less, 5,000 or less, 2,500 or less, 750 or less, or 250 or less.

The cationic dispersant may be aliphatic or aromatic, and examples thereof include an ammonium salt (e.g., quaternary ammonium salt). The cationic dispersant may be oxyethylene-added ammonium salt. Specific examples thereof include an amine salt dispersant such as alkylamine salt, an amino alcohol fatty acid derivative, a polyamine fatty acid derivative and imidazoline; a quaternary ammonium salt dispersant such as alkyl trimethyl ammonium salt, dialkyl dimethyl ammonium salt, alkyl dimethyl benzyl ammonium salt, pyridinium salt, alkyl isoquinolinium salt, benzalkonium chloride and benzethonium chloride; and a polymer cationic dispersant such as polyquaternium-1 to 47. Examples of cationic dispersants include alkyl amine salt and quaternary ammonium salt.

The low molecular weight cationic dispersant may be a compound represented by the formula:

R²¹-N⁺(-R²²)(-R²³)(-R²⁴)X⁻

[wherein R²¹, R²², R²³ and R²⁴ are a hydrogen or a hydrocarbon group having 1 to 40 carbon atoms, and
X is an anionic group].

Specific examples of R²¹, R²², R²³ and -R²⁴ include an alkyl group (e.g., a methyl group, a butyl group, a stearyl group, a palmityl group) and an aromatic group (e.g., a benzyl group, phenyl group). Specific examples of X include a halogen (e.g., chlorine) and an acid (e.g., hydrochloric acid and acetic acid). The cationic dispersant may be monoalkyltrimethylammonium salt (in which alkyl has 4 to 40 carbon atoms) and benzalkonium chloride.

More specifically, the low molecular weight cationic dispersant may be an ammonium salt represented by the formula:

R¹ₚ-N⁺-R²_{q}X⁻

[wherein R¹ is a C12 or higher (e.g., C₁₂ to C₅₀) linear and/or branched aliphatic (saturated and/or unsaturated) group,
R² is H or a C1 to 4 alkyl group, a benzyl group, a polyoxyethylene group (in which the number of oxyethylene groups is for example, 1 (in particular 2, and especially 3) to 50) (particularly preferably CH₃, C₂H₅),
X is a halogen atom (e.g., chlorine) or a C₁ to C₄ fatty acid salt or a C₁ to C₄ sulfonate,
p is 1 or 2, q is 2 or 3 and p + q = 4.]
R¹ may have 12 to 50, and for example 12 to 30 carbon atoms.

Examples of the low molecular weight cationic dispersants may include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl]oleamide hydrochloride.

The high molecular weight cationic dispersant may be a polymer having a cationic group (for example, an ammonium group, a quaternary ammonium group) (for example, polypolyquaternium-1 to 47). Examples of high molecular weight cationic dispersants include a cationic natural product (in particular, cationic sugar) such as cationic starch, cationic cellulose (e.g., O-(2-hydroxy-3-(trimethylammonio)propylhydroxyethyl cellulose chloride), cationic guar gum, cationic xanthan gum and chitosan; a polymer of a cationic group-containing monomer such as aziridine, vinyl imidazole, aminoalkyl methacrylate, N,N,N',N'-tetramethyl-2-butene-1,4-diamine, quaternary dimethyl ammonium ethyl methacrylic acid, diallyldimethylammonium chloride, dimethylaminopropylamine and quaternary vinyl imidazole.

### [Anionic dispersant]

The dispersant may comprise an anionic dispersant. The anionic dispersant may be an anionic surfactant. The dispersant may not include an anionic dispersant.

The anionic dispersant may be of low molecular weight (with a molecular weight of, for example, 2,000 or less, in particular, 10,000 or less) or of high molecular weight (with a molecular weight of, for example, 2,000 or more). The anionic dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 25,000 or less, 10,000 or less, 7,500 or less, 5,000 or less, 2,500 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an α-sulfone fatty acid salt, a N-acylamino acid dispersant, a phosphate mono- or diester dispersant, and a sulfosuccinic acid ester. Examples of anionic dispersants include a carboxylic acid salt (e.g., fatty acid salt).

### [Amphoteric dispersant]

The dispersant may comprise an amphoteric dispersant. The amphoteric dispersant may be an amphoteric surfactant.

The amphoteric dispersant may be of low molecular weight (with a molecular weight of, for example, 2,000 or less, in particular, 10,000 or less) or of high molecular weight (with a molecular weight of, for example, 2,000 or more). The amphoteric dispersant may have a molecular weight of 100 or more, 500 or more, 1,000 or more, 2,000 or more, 4,000 or more, or 6,000 or more, and 1,000,000 or less, 750,000 or less, 500,000 or less, 250,000 or less, 100,000 or less, 50,000 or less, 25,000 or less, 10,000 or less, 7,500 or less, 5,000 or less, 2,500 or less, 750 or less, or 250 or less.

Examples of the amphoteric dispersants include, for example, alanines, imidazolinium betaines, amidobetaines, and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

### [Inorganic dispersant]

The dispersant may comprise an inorganic dispersant.

The inorganic dispersant has an average primary particle size of 5 nm or larger, 30 nm or larger, 100 nm or larger, 1 µm or larger, 10 µm or larger, or 25 µm or larger, and 100 µm or smaller, 50 µm or smaller, 10 µm or smaller, 1 µm or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

### [Amount of Dispersant]

The amount of dispersant may be 0.01 parts by weight or more, 0.1 parts by weight or more, 1 part by weight or more, 3 parts by weight or more, 5 parts by weight or more, 10 parts by weight, 15 parts by weight or more, 20 parts by weight or more, 50 parts by weight or more, 75 parts by weight or more, or 100 parts by weight or more, relative to 100 parts by weight of the liquid-repellent compound, and may be 500 parts by weight or less, 300 parts by weight or less, 200 parts by weight or less, 100 parts by weight or less 30 parts by weight or less, 20 parts by weight or less, 10 parts by weight or less, 5 parts by weight or less, 3 parts by weight or less, or 1 part by weight or less.

### {Liquid medium}

The repellent in the present disclosure may comprise a liquid medium. The liquid medium may be water, an organic solvent, or a mixture of water and an organic solvent. The repellent may be a dispersion or a solution. The repellent in the present disclosure is preferably a water dispersion.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used alone, or two or more of them may be used in combination.

### [Amount of liquid medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the liquid-repellent compound.

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less based on 1 part by weight of the liquid-repellent compound.

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the liquid-repellent compound.

### {Organic Acid}

The repellent of the present disclosure may contain an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use.

### [Amount of Organic Acid]

The amount of organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the liquid-repellent compound, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less. The amount of organic acid may be adjusted so that a pH of the repellent is 3 to 10, for example 5 to 9, particularly 6 to 8. For example, the repellent may be acidic (pH of 7 or less, for example 6 or less).

### {Inorganic acid}

The repellent according to the present disclosure may comprise an inorganic acid. The inorganic acid may be a known inorganic acid. Examples of inorganic acids include hydrogen chloride, hydrogen bromide, hydrogen iodide, nitric acid, boric acid, sulfuric acid and phosphoric acid. In the present disclosure, one inorganic acid may be used, or two or more of them may be used in combination. The addition of inorganic acid can improve the stability of the water dispersion.

### [Amount of inorganic acid]

The amount of the inorganic acid may be 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less based on 100 parts by weight of the liquid-repellent compound. The amount of the inorganic acid may be adjusted so that the repellent has a pH of 3 to 10, for example, 5 to 9, and in particular, 6 to 8. The repellent may be acidic (may have a pH of 7 or less, for example, 6 or less).

### {Curing Agent}

The repellent of the present disclosure may contain a curing agent (active hydrogen-reactive compound or active hydrogen-containing compound). The repellent does not need to contain a curing agent when the repellent is for paper (e.g., an oil-resistant agent for paper).

The curing agent (cross-linking agent) in the repellent can effectively cure the repellent. The curing agent may be an active hydrogen-reactive compound or an active hydrogen-containing compound, which reacts with an active hydrogen or an active hydrogen-reactive group. Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an araliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the araliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4"-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in solution and can be used in the same solution as solution of the repellent.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

### [Amount of Curing Agent]

The amount of the curing agent may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the liquid-repellent compound, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less.

### {Other Component}

The repellent may contain a component other than the aforementioned components. Examples of the other components include, for example, polysaccharides, an agglomerating agent, a yield improver, a coagulant, a binder resin, an anti-slip agent, a sizing agent, a paper strengthening agent, a filler, an antistatic agent, an antiseptic agent, an ultraviolet absorber, an antibacterial agent, a deodorant, and a fragrance. These may be used singly or in combination of two or more thereof. In addition to the above components, as other components, for example, a repellent (for example, a water-repellent and/or oil-repellent agent), a dispersant, a texture modifier, a softening agent, a flame retarder, a coating material fixing agent, a wrinkle-resistant agent, a drying rate adjuster, a cross-linking agent, a film formation agent, a compatibilizer, an antifreezing agent, a viscosity adjuster, an ultraviolet absorber, an antioxidant, a pH adjuster, an insect repellent, an antifoaming agent, an anti-shrinkage agent, a laundry wrinkle-resistant agent, a shape retention agent, a drape retention agent, an ironing improving agent, a brightening agent, a whitening agent, fabric softening clay, a migration-proofing agent such as a polyvinylpyrrolidone, a polymer dispersant, a soil release agent, a scum dispersant, a fluorescent brightening agent such as 4,4-bis(2-sulfostyryl)biphenyldisodium (Tinopal CBS-X manufactured by Ciba Specialty Chemicals Plc), a dye fixing agent, an anti-color fading agent such as 1,4-bis(3-aminopropyl)piperazine, a stain removing agent, enzymes such as cellulase, amylase, protease, lipase, and keratinase as fiber surface modifiers, a foam inhibitor, and silk protein powder that can impart texture and functions of silk such as moisture absorption and release properties, and surface modified products or emulsified dispersions thereof (for example, K-50, K-30, K-10, A-705, S-702, L-710, FP series (Idemitsu Petrochemical Co., Ltd.), hydrolyzed silk liquid (Jomo), SILKGEN G Soluble S (ICHIMARU PHARCOS Co., Ltd.)), an antifouling agent (for example, a nonionic polymer compound composed of an alkylene terephthalate and/or an alkylene isophthalate units and a polyoxyalkylene unit (for example, FR627 manufactured by GOO CHEMICAL CO., LTD.), SRC-1 manufactured by Clariant (Japan), K. K.), can be compounded. These may be used singly or in combination of two or more thereof. The components may be determined according to the application of the repellent.

### [Amount of Other Component]

Each amount or the total amount of other components may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, relative to 100 parts by weight of the liquid-repellent compound, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less.

### <Pulp composition>

The pulp composition in the present disclosure comprises the liquid-repellent compound and a pulp substrate. The pulp composition in the present disclosure has excellent oil resistance.

The pulp composition in the present disclosure is obtained by adding the liquid-repellent compound to a pulp substrate. The pulp composition may be obtained by treating a pulp substrate with a repellent containing the liquid-repellent compound. In that case the amount of the repellent added and the composition of the repellent may be adjusted to achieve the desired amounts of the respective components. The components to be contained in the repellent may also be separately added to the pulp composition as an additive.

The pulp composition in the present disclosure does not need to have any one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group, and a compound having a fluorine atom. The pulp composition in the present disclosure can impart liquid-repellency to a substrate without including these fluorine-containing compounds.

The pulp composition may have a pH of 3 to 10, for example, 5 to 9, and in particular 6 to 8. The amount of the respective components may be adjusted to achieve such pH.

### {Pulp substrate}

The pulp composition comprises a pulp substrate. The pulp substrate is composed of pulp, which may be wood pulp, non-wood pulp and wastepaper pulp.

### [Wood pulp]

Wood pulp includes softwood kraft pulp from the genera Fir, Pine, and the like, and hardwood kraft pulp from the genera Acacia, Eucalyptus, Beech, and Aspen (e.g., poplar). Softwood kraft pulp includes, for example, unbleached softwood kraft pulp (NUKP), bleached softwood pulp (NBKP), semi-bleached softwood kraft pulp (NSBKP), and softwood sulfite pulp. Examples of hardwood kraft pulp include unbleached hardwood kraft pulp (LUKP), bleached hardwood kraft pulp (LBKP), semi-bleached hardwood kraft pulp (LSBKP), and hardwood sulfite pulp. The pulp may be used singly or in combination.

In addition to softwood kraft pulp and hardwood kraft pulp, wood pulp includes a mechanical pulp such as stone ground pulp (SGP), pressure stone ground pulp (PGW), refiner ground pulp (RGP), thermoground pulp (TGP), chemiground pulp (CGP), crushed wood pulp (GP) and thermomechanical pulp (TMP). Furthermore, wastepaper pulp includes a disintegrated wastepaper pulp, a disintegrated and deinked wastepaper pulp and a disintegrated, deinked and bleached wastepaper pulp produced from recycled brown paper, recycled kraft envelopes, wastepaper of magazines, wastepaper of newspapers, wastepaper of flyers, sorted office paper, wastepaper of cardboard, hard white shavings wastepaper, Kent wastepaper, wastepaper of poster paper and bond paper.

### [Non-wood pulp]

Examples of non-wood pulp include pulp prepared from bagasse, kenaf, bamboo, linter, cotton, linen, hemp, ramie, straw, esparto, Manila hemp, Xyzal hemp, yellow hemp, flax, ganpi, paper bush and kozo (Japanese paper mulberry).

### [Fiber length of pulp]

The pulp has an average fiber length of preferably 0.1 mm or more, more preferably 0.3 mm or more, further preferably 0.5 mm or more from the viewpoint of the improvement in the oil resistance, and preferably 5.0 mm or less, more preferably 4.0 mm or less, further preferably 3.0 mm or less, particularly preferably 2.0 mm or less, most preferably 1.2 mm or less from the viewpoint of ease of manufacture.

### [Fiber width of pulp]

The pulp has an average fiber diameter of preferably 5 µm or more, more preferably 10 µm or more, and further preferably 15 µm or more, and preferably 50 µm or less, more preferably 40 µm or less, and further preferably 30 µm or less from the viewpoint of the improvement in the oil resistance.

### [Form of pulp substrate]

The form of the pulp substrate when the liquid-repellent compound is added thereto may be pulp alone, pulp slurry, or a pulp product. Specific examples thereof include bleached or unbleached chemical pulp such as kraft pulp or sulfite pulp; bleached or unbleached high-yield pulp such as groundwood pulp, mechanical pulp, or thermomechanical pulp; pulp slurry including the above pulp; and a pulp product such as paper, a paper container and a pulp formed article.

### [Amount of pulp substrate]

The amount of the pulp substrate may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, or 90% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. When the pulp composition is prepared by internal addition, the amount of the pulp substrate may be 30% by weight or less in the pulp composition; when the pulp composition is prepared by external addition, the amount of the pulp substrate may be 75% by weight or more in the pulp composition.

The amount of the pulp substrate may be 50% by weight or more, 60% by weight or more, 70% by weight or more, 80% by weight or more, 90% by weight or more, 95% by weight or more, or 99% by weight or more, and 99.9% by weight or less, 95% by weight or less, 90% by weight or less, 85% by weight or less, 75% by weight or less, 65% by weight or less, or 55% by weight or less in the pulp composition excluding liquid medium.

### {Liquid medium}

The pulp composition may comprise a liquid medium. The liquid medium may be water, an organic solvent, or a mixture of water and an organic solvent. The liquid medium is typically an aqueous medium (water or a mixture of water and an organic solvent), and in particular, water. The liquid medium may comprise a liquid medium derived from repellent.

### [Amount of liquid medium]

The amount of the liquid medium may be 0.1% by weight or more, 0.5% by weight or more, 1% by weight or more, 3% by weight or more, 5% by weight or more, 10% by weight or more, 20% by weight or more, 30% by weight or more, 50% by weight or more, 75% by weight or more, 90% by weight or more, or 95% by weight or more, and 99% by weight or less, 75% by weight or less, 50% by weight or less, 40% by weight or less, 30% by weight or less, 20% by weight or less, 10% by weight or less, 5% by weight or less, 4% by weight or less, or 3% by weight or less in the pulp composition. Typically, when the pulp composition is prepared by internal addition, the amount of the liquid medium is 50% by weight or more, and in particular 90% by weight or more in the pulp composition; when the pulp composition is prepared by external addition, the amount of the liquid medium may be 30% by weight or less, and in particular, 10% by weight or less in the pulp composition.

### {Liquid-repellent compound}

The pulp composition includes a liquid-repellent compound. Details of the liquid-repellent compound are as described for the liquid-repellent compound in <Repellent> described above.

### [Amount of liquid-repellent compound]

The amount of the liquid-repellent compound may be 0.01% by weight or more, 0.03% by weight or more, 0.1% by weight or more, 0.3% by weight or more, 0.5% by weight or more, 0.75% by weight or more, 1.0% by weight or more, 2.0% by weight or more, or 3.0% by weight or more, preferably 0.03% by weight or more, and for example, 0.5% by weight or more, and 25% by weight or less, 20% by weight or less, 15% by weight or less, 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, and for example, 15% by weight or less, or 5.0% by weight or less, preferably 3.0% by weight or less based on the pulp substrate.

The surface of the pulp substrate (for example, a pulp product such as paper, a paper container and a pulp formed article) may be subjected to external addition treatment with the liquid-repellent compound. The amount of the liquid-repellent compound included in the coating layer formed by the external addition treatment may be 0.01 g/m² or more, 0.03 g/m² or more, 0.05 g/m² or more, 0.1 g/m² or more, 0.3 g/m² or more, 0.5 g/m² or more, or 1.0 g/m² or more, and 5.0 g/m² or less, 4.0 g/m² or less, 3.0 g/m² or less, 2.0 g/m² or less, 1.0 g/m² or less, 0.5 g/m² or less, 0.3 g/m² or less, or 0.1 g/m² or less.

### {lignin compound}

It is preferable that the pulp composition comprises a lignin compound. Details of the lignin compound are as described for the lignin compound in <Repellent>.

### [Amount of lignin compound]

The amount of the lignin compound may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, preferably 5.0% by weight or less, and more preferably 3.0% by weight or less based on the pulp substrate.

### {Dispersant}

The pulp composition may comprise a dispersant. Details of the dispersant are as described for the dispersant in <Repellent>.

### [Amount of dispersant]

The amount of the dispersant may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, preferably 5.0% by weight or less, and more preferably 3.0% by weight or less based on the pulp substrate.

### {Paper strength agent}

The pulp composition may comprise a paper strength agent. Examples of paper strength agent include:
a polyacrylamide-based paper strength agent such as cationic polyacrylamide, anionic polyacrylamide and amphoteric polyacrylamide;
a polysaccharide-based paper strength agent such as starch, enzyme modified starch, thermochemically modified starch, oxidized starch, esterified starch, etherified starch (e.g., hydroxyethylated starch), aldehyde starch, cationized starch, starch, xanthan gum, gum karaya, welan gum, guar gum, pectin, tamarind gum, carrageenan, chitosan, gum arabic, locust bean gum, cellulose, alginic acid, agar, dextran, cellulose, carboxymethylcellulose, hydroxyethylcellulose, hydroxypropylcellulose, chitin nanofiber, cellulose nanofiber and pullulan, and a modified polysaccharide thereof (e.g., a modified polysaccharide prepared by introducing a hydroxyl group or a cationic group thereinto);
a polyamide-based paper strength agent such as polyamide resin, polyamine resin, polyamide-polyamine resin, polyamide-epichlorohydrin resin, polyamide-polyamine-epichlorohydrin resin, polyamide-polyurea-formaldehyde resin and epoxidized polyamide resin;
a urea/melamine-based paper strength agent such as urea resin, melamine resin, urea-formaldehyde resin and melamine-formaldehyde resin;
a polyvinyl alcohol-based paper strength agent such as polyvinyl alcohol, completely saponified polyvinyl alcohol, partially saponified polyvinyl alcohol, carboxyl modified polyvinyl alcohol, silanol modified polyvinyl alcohol, cation modified polyvinyl alcohol and terminal alkyl modified polyvinyl alcohol; and
a styrene · butadiene copolymer, polyvinyl acetate, a vinyl chloride-vinyl acetate copolymer, polyvinyl chloride, polyvinylidene chloride, polyacrylic ester, fatty acid diamide, polyethyleneimine resin and ketone aldehyde resin.

A polyacrylamide-based paper strength agent, a polysaccharide-based paper strength agent and a polyamide-based paper strength agent are preferred as the paper strength agent in the present disclosure.

### [Amount of paper strength agent]

The amount of the paper strength agent may be 0.1% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less, preferably 5.0% by weight or less based on the pulp.

### {Sizing agent}

The pulp composition may comprise a sizing agent. Examples of sizing agents include a cationic sizing agent, an anionic sizing agent, a neutral sizing agent and an amphoteric sizing agent, a rosin-based sizing agent (for example, an acidic rosin-based sizing agent and a neutral rosin-based sizing agent), alkyl ketene dimer and alkenyl succinic anhydride.

### [Amount of sizing agent]

The amount of the sizing agent may be 0.1% by weight or more, 0.2% by weight or more, 0.3% by weight or more, 0.5% by weight or more, 0.75% by weight or more, 1.0% by weight or more, 2.0% by weight or more, or 3.0% by weight or more, and 10% by weight or less, 7.5% by weight or less, 5.0% by weight or less, 4.0% by weight or less, 3.0% by weight or less, 2.0% by weight or less, 1.0% by weight or less, 0.75% by weight or less, or 0.5% by weight or less based on the pulp.

### {Other additives}

The pulp composition may also include other additives used for producing a pulp product in addition to the above components, including a known combination chemical for paper such as a fixing agent (e.g., a water-soluble aluminum compound such as aluminum sulfate and polyaluminum chloride), a coagulant and an agglomerating agent (polyamine-based resin), an yield improver (polyacrylamide-based resin), an organic acid (e.g., formic acid, acetic acid), a dye, a slime control agent, and an antifoaming agent.

### [Amount of other additives]

The amount of other additives may be 0.01% by weight or more, 0.1% by weight or more, 1% by weight or more, 3% by weight or more, 5% by weight or more, and 30% by weight or less, 20% by weight or less, 10% by weight or less, 5% by weight or less, 3% by weight or less, or 1% by weight or less, respectively, based on the pulp substrate.

### <Method for producing product>

The method for producing a product in the present disclosure may comprise a step of treating a substrate with the repellent of the present disclosure as a treatment agent.

Substrates to be treated with the treatment agent in the present disclosure are not limited, and are preferably a fiber substrate, and may be a textile substrate (fabric substrate) or a pulp substrate (paper substrate), and in particular, a pulp substrate.

Examples of fiber substrates include an animal or plant natural fiber such as cotton, hemp, wool and silk, a synthetic fiber such as polyamide, polyester, polyvinyl alcohol, polyacrylonitrile, polyvinyl chloride and polypropylene, a semi-synthetic fiber such as rayon and acetate, an inorganic fiber such as glass fiber, carbon fiber and asbestos fiber, and a mixed fiber thereof. Textile products include a woven fabric, a knitted fabric and a non-woven fabric, a fabric in the form of clothing (e.g., water-repellent clothing, e.g., raincoats) and a carpet, but treatment may also be done on fibers, yarns and intermediate fiber products (e.g., slivers or coarse yarns) before being made into fabric.

Examples of substrates to be treated with the treatment agent according to the present disclosure are not limited to fiber substrates, but also include stone, a filter (e.g., an electrostatic filter), a dust mask, a fuel cell component (e.g., a gas diffusion electrode and a gas diffusion support), glass, wood, leather, fur, asbestos, brick, cement, metal and oxide, a ceramic product, plastics, a painted surface, and plaster.

When the substrate is glass, the glass product to be produced may be an optical component. Some layer (or film) may be formed on the surface (outermost layer) of the glass substrate, such as a hard coat layer or antireflection layer. Both a single-layer antireflection layer and a multilayer antireflection layer may be used for the antireflection layer. Examples of inorganic substances that can be used for the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂ and WO₃. These inorganic substances may be used alone or in combination of two or more (e.g., in a mixture). When forming a multilayer antireflection layer, it is preferable to use SiO₂ and/or SiO for the outermost layer. If the article to be produced is an optical glass component for a touch panel, it may have a thin film of transparent electrode, e.g., indium tin oxide (ITO) or indium zinc oxide, on part of the surface of the substrate (glass). The substrate may also have an insulating layer, an adhesive layer, a protective layer, a decorative frame layer (I-CON), an atomizing film layer, a hard coating film layer, a polarizing film, a phase difference film, and a liquid crystal display module, depending on its specific specifications and the like.

### {Method for producing pulp product}

The pulp product (paper product) according to the present disclosure may be obtained by subjecting a pulp composition prepared by treating a pulp substrate with a repellent containing a liquid-repellent compound to a treatment step of drying, heating and forming according to need. The pulp product may be an oil-resistant pulp product prepared by treating with an oil-resistant agent.

The repellent in the present disclosure can be applied to a pulp substrate as a treatment agent (particularly a surface-treating agent) by a conventionally known method. The treatment method may be a method in which the repellent in the present disclosure is dispersed in an organic solvent or water, if necessary, to dilute it and the resultant is allowed to adhere to the inside and/or on the surface of the substrate by a known method such as dip coating, spray coating, and foam coating. The dilution factor may be changed depending on the concentration and the purpose of use of the repellent, and may range from 3 to 2,000 times, and for example, 10 to 100 times. After drying, a pulp product to which the solid component of the repellent is adhered, is obtained. If necessary, the repellent of the present disclosure may be applied in combination with a suitable cross-linking agent, and curing may be carried out.

The repellent can be applied to a pulp substrate by any method known for treating a pulp substrate with liquid. The pulp substrate may be immersed in the repellent, or the pulp substrate and the repellent may be mixed, or a solution may be adhered or sprayed onto the pulp substrate. The treated pulp substrate is preferably dried and cured by heating in order to develop liquid-repellency. The heating temperature may be, for example, 100°C to 200°C, 100°C to 170°C, or 100°C to 120°C. In the present disclosure, the heating time may be 5 seconds to 60 minutes, for example, 30 seconds to 3 minutes.

The method for treating a pulp substrate may be an internal addition treatment method in which repellent is added to a pulp substrate before papermaking (e.g., in the form of pulp slurry), or an external addition treatment method in which repellent is applied to a pulp substrate after papermaking (e.g., a pulp product). Examples of internal addition treatment methods include mixing and dipping, and the internal addition treatment method may include a step of adding a repellent to pulp slurry and mixing it with stirring. Examples of external addition treatment methods include spraying, coating, dipping and foam coating and more specifically a pound-type two-roll size press, a gate roll type size press and a rod metering type size press. The treatment may be external addition treatment or internal addition treatment. For example, when the pulp substrate is paper, the repellent may be applied to paper, or solution may be adhered or sprayed onto paper, or the repellent may be mixed with pulp slurry before papermaking to perform treatment. When the pulp substrate is a fiber material, examples of treatment methods include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment include a method involving using an air spray that nebulizes and sprays a treatment liquid by compressed air, or an air spray by hydraulic pressure nebulization system.

The method of treatment may be internal addition treatment in which a repellent is added to pulp slurry before papermaking. The internal addition treatment may include filling the pulp slurry into the mold and allowing the liquid medium to pass through the mold to form the pulp. The internal addition treatment method may include, but is not limited to, one or more of a step of adding the repellent to pulp slurry and stirring and mixing them; a step of sucking and dehydrating the pulp composition prepared in the step through a net-like body of predetermined shape and depositing the pulp composition then to form a pulp formed article intermediate; and a step of molding and drying the pulp formed article intermediate by using a heated molding mold to obtain a pulp formed article. After having been lightly dried at room temperature or elevated temperature, the treated paper may be optionally subjected to heat treatment, depending on the nature of the paper. Temperature of the heat treatment may be 150°C or higher, 180°C or higher, or 210°C or higher, and may be 300°C or lower, 250°C or lower, or 200°C or lower, particularly 80°C to 180°C. Carrying out the heat treatment in such a temperature range enables exhibiting, for example, excellent oil resistance and water resistance. The pulp substrate which has undergone internal addition treatment may be subjected to external addition treatment to be treated with the repellent, allowing another liquid-repellent compound to be adhered to the surface.

The treatment method may be an external addition treatment method in which repellent is applied to a pulp substrate after papermaking. The size press used in an external addition treatment method, can be divided into the following types depending on the coating method. One coating method involves supplying a coating liquid (size liquid) to a nip portion formed by passing paper between two rubber rolls, creating a pool of the coating liquid called a pond, and allowing the paper to pass through this pool to coat both sides of the paper with the size liquid, which is a method employed for a so-called pound-type two-roll size press. Another coating method is a method used for a gate roll type size press in which a size liquid is applied by a surface transfer type, and a rod metering type size press. In the pound-type two-roll size press, the size liquid easily penetrates into an inside of paper, and in the surface transfer type, a size liquid component is likely to stay on a surface of the paper. In the surface transfer type, a coating layer is likely to stay on a surface of paper more than in the pound-type two-roll size press, and the amount of coating layer formed on the surface is more than in the pound-type two-roll size press. In the present disclosure, even in the case of using the former pound-type two-roll size press, performance can be imparted to paper. After having been lightly dried at room temperature or elevated temperature, the paper treated in such a manner is arbitrarily accompanied by heat treatment that can have a temperature range of up to 300°C, for example up to 200°C, and particularly the temperature range of 80°C to 180°C, depending on the nature of the paper, as a result of which excellent oil resistance, water resistance, and the like can be exhibited.

Specific examples of the pulp products include, for example, paper, a paper container, a pulp formed article, a food packaging material, a food container, gypsum board base paper, coated base paper, medium-quality paper, a general liner and core, neutral pure white roll paper, a neutral liner, a rust-proof liner, and metal pasted paper, kraft paper, neutral printing writing paper, neutral coated base paper, neutral PPC paper, neutral thermal paper, neutral pressure-sensitive base paper, neutral inkjet paper and neutral information paper. Preferred examples of pulp products include a food packaging material and a food container, and for example, a pulp product for food contact, in particular, a pulp formed article for food contact.

Embodiments have been described above, but it will be understood that various modifications can be made to embodiments and details without departing from the spirit and the scope of the claims.

### Examples

Hereinafter, the present disclosure will be described in detail with reference to Examples, but the present disclosure is not limited to these Examples.

### <Test Method>

The test procedures are as follows.

### {High temperature oil resistance}

100 ml of evaluation liquid (corn oil) at 65°C was poured into the pulp mold product formed into a container and allowed to stand for 45 minutes, or 100 ml of evaluation liquid (corn oil) at 80°C was poured into the pulp mold product and allowed to stand for 30 minutes, and then the evaluation liquid was discarded. The degree of oil staining in the pulp mold product (container) was visually evaluated based on the following criteria.
4: Substantially no oil stain on inside bottom of container
3: No oil stain on outside bottom of container
2: Oil stain on less than 5% of area of outside bottom of container
1: Oil stain on 5% or more and less than 50% of area of outside bottom of container
0: Oil stain on 50% or more of area of outside bottom of container

### {Product stability}

40 g of the liquid-repellent agent was put in a 50 ml glass bottle and left to stand at 20°C and the stability of the liquid-repellent agent was visually evaluated according to the following criteria.
∘: No sedimentation or separation for 4 weeks
Δ: No sedimentation or separation for 1 week, but sedimentation or separation is observed within 4 weeks.
×: Sedimentation or separation is observed within 1 week.

### <Synthetic Example 1>

100 parts of stearic acid amide ethyl acrylate, 370 parts of pure water, 3 parts of SAN X (registered trademark) P252 manufactured by Nippon Paper Industries Co., Ltd. and 12 parts of polyoxyethylene alkyl ether were charged in a 1L plastic container. The mixture was heated to 80°C and then emulsified and dispersed with ultrasound for 15 minutes. The emulsified dispersion was transferred to a 1,000 cc four-neck flask equipped with a nitrogen gas inlet, a thermometer, a stirring rod and a reflux tube. After nitrogen replacement, 1 part of ammonium persulfate was added thereto and the mixture was allowed to react at 60°C for 4 hours to give an aqueous dispersion of the polymer. Then pure water was added thereto to give a water dispersion (oil-resistant agent) with a solid concentration of 20% by weight.

### <Synthetic Example 2>

100 parts of stearic acid amide ethyl acrylate, 370 parts of pure water, 6 parts of SAN X P252 and 12 parts of polyoxyethylene alkyl ether were charged in a 1L plastic container. A water dispersion was prepared in the same manner as in Synthetic Example 1.

### <Synthetic Example 3>

100 parts of stearic acid amide ethyl acrylate, 370 parts of pure water, 1 part of SAN X P252 and 12 parts of polyoxyethylene alkyl ether were charged in a 1L plastic container. A water dispersion was prepared in the same manner as in Synthetic Example 1.

### <Synthetic Example 4>

100 parts of paraffin wax, 370 parts of pure water, 3 parts of SAN X P252 and 12 parts of polyoxyethylene alkyl ether were mixed and heated to 80°C, and then the mixture was emulsified and dispersed with ultrasound for 15 minutes to give a water dispersion.

### <Comparative Synthetic Example 1>

100 parts of stearic acid amide ethyl acrylate, 370 parts of pure water, 3 parts of sodium lauryl sulfate and 12 parts of polyoxyethylene alkyl ether were charged in a 1L plastic container. A water dispersion was prepared in the same manner as in Synthetic Example 1.

### <Comparative Synthetic Example 2>

100 parts of stearic acid amide ethyl acrylate, 370 parts of pure water, 3 parts of sodium dioctyl sulfosuccinate and 12 parts of polyoxyethylene alkyl ether were charged in a 1L plastic container. A water dispersion was prepared in the same manner as in Synthetic Example 1.

### <Comparative Synthetic Example 3>

100 parts of stearic acid amide ethyl acrylate, 370 parts of pure water and 12 parts of polyoxyethylene alkyl ether were charged in a 1L plastic container. A water dispersion was prepared in the same manner as in Synthetic Example 1.

### <Comparative Synthetic Example 4>

100 parts of paraffin wax, 370 parts of pure water, 3 parts of sodium lauryl sulfate and 12 parts of polyoxyethylene alkyl ether were mixed and heated to 80°C, and then the mixture was emulsified and dispersed with ultrasound for 15 minutes to give a water dispersion.

### <Example 1>

2,000 g of a 0.5% by weight aqueous dispersion of a mixture of 70 parts of hardwood bleached kraft pulp and 30 parts of softwood bleached kraft pulp, which were beaten to a freeness (Canadian Standard Freeness) of 550 cc, was added with stirring. Then 2 g of the water dispersion of Synthetic Example 1 diluted to a solid content of 10% with water was added thereto, and stirring was continued for 1 minute. Next, 0.16 g of cationic polyamine (Hercobond (registered trademark) 6950 manufactured by Solenis) diluted to a solid content of 10% were added thereto and the mixture was stirred for 1 minute or 120 minutes.

The above pulp slurry was charged in a metal tank. A pulp mold molding mold made of metal with many suction holes was installed at the lower part of the tank, and a reticular body was arranged thereon. From the opposite side of the pulp mold molding mold to the side where the reticular body was arranged, the pulp-containing aqueous composition was suctioned and dehydrated through the pulp mold molding mold and the reticular body by a vacuum pump, and solids (pulp, etc.) contained in the pulp-containing aqueous composition were allowed to deposit on the reticular body to obtain a pulp mold intermediate. Next, the resulting pulp mold intermediate was dried by applying pressure from the tops and bottoms of male and female molding molds made of metal, which had been heated to 60 to 200°C. Thus, a pulp mold product formed in the form of a container was produced. The content ratio of the respective components in the resulting pulp mold product relative to pulp, and the results of evaluation of the high temperature oil resistance and the product stability are shown in Table 1.

### <Example 2>

The test was performed in the same manner as in Example 1, except that 1.5 g of the water dispersion diluted to a solid content of 10% with water was added. The content ratio of the respective components in the resulting pulp mold product relative to pulp, and the results of evaluation of the high temperature oil resistance and the product stability are shown in Table 1.

### <Example 3>

The test was performed in the same manner as in Example 2, except that the water dispersion of Synthetic Example 2 was used. The content ratio of the respective components in the resulting pulp mold product relative to pulp, and the results of evaluation of the high temperature oil resistance and the product stability are shown in Table 1.

### <Example 4>

The test was performed in the same manner as in Example 2, except that 1 g of the water dispersion of Synthetic Example 3 diluted to a solid content of 10% with water was added. The content ratio of the respective components in the resulting pulp mold product relative to pulp, and the results of evaluation of the high temperature oil resistance and the product stability are shown in Table 1.

### <Example 5>

The test was performed in the same manner as in Example 2, except that 1 g of the water dispersion of Synthetic Example 1 diluted to a solid content of 10% with water was added. The content ratio of the respective components in the resulting pulp mold product relative to pulp, and the results of evaluation of the high temperature oil resistance and the product stability are shown in Table 1.

### <Example 6>

The test was performed in the same manner as in Example 1, except that a mixture of 50 parts of bamboo bleached kraft pulp and 50 parts of bagasse bleached kraft pulp was used instead of the mixture of 70 parts of hardwood bleached kraft pulp and 30 parts of softwood bleached kraft pulp of Example 1. The content ratio of the respective components in the resulting pulp mold product relative to pulp, and the results of evaluation of the high temperature oil resistance and the product stability are shown in Table 1.

### <Example 7>

The test was performed in the same manner as in Example 2, except that 3 g of the water dispersion of Synthetic Example 4 diluted to a solid content of 10% with water was added. The content ratio of the respective components in the resulting pulp mold product relative to pulp, and the results of evaluation of the high temperature oil resistance and the product stability are shown in Table 1.

### <Comparative Example 1>

The test was performed in the same manner as in Example 2, except that the water dispersion of Comparative Synthetic Example 1 was used. The content ratio of the respective components in the resulting pulp mold product relative to pulp, and the results of evaluation of the high temperature oil resistance and the product stability are shown in Table 1.

### <Comparative Example 2>

The test was performed in the same manner as in Example 2, except that the water dispersion of Comparative Synthetic Example 2 was used. The content ratio of the respective components in the resulting pulp mold product relative to pulp, and the results of evaluation of the high temperature oil resistance and the product stability are shown in Table 1.

### <Comparative Example 3>

The test was performed in the same manner as in Example 2, except that the water dispersion of Comparative Synthetic Example 3 was used. The content ratio of the respective components in the resulting pulp mold product relative to pulp, and the results of evaluation of the high temperature oil resistance and the product stability are shown in Table 1.

### <Comparative Example 4>

The test was performed in the same manner as in Example 2, except that the water dispersion of Comparative Synthetic Example 4 was used. The content ratio of the respective components in the resulting pulp mold product relative to pulp, and the results of evaluation of the high temperature oil resistance and the product stability are shown in Table 1.

**[Table 1]**

| | | | | | Example 1 | Example 2 | Example 3 | Example 4 | Example 5 | Example 6 | Example 7 | Comparative Example 1 | Comparative Example 2 | Comparative Example 3 | Comparative Example 4 |
|---|---|---|---|---|---|---|---|---|---|---|---|---|---|---|---|
| | | | | | Synthetic Example 1 | Synthetic Example 1 | Synthetic Example 2 | Synthetic Example 3 | Synthetic Example 1 | Synthetic Example 1 | Synthetic Example 4 | Comparative Synthetic Example 1 | Comparative Synthetic Example 2 | Comparative Synthetic Example 3 | Comparative Synthetic Example 4 |
| Oil-resistant agent | Oil-resistant compound (liquid-repellent compound) | Stearic acid amide ethyl acrylate polymer | | Part (s) by weight | 100 | 100 | 100 | 100 | 100 | 100 | | 100 | 100 | 100 | |
| | | Paraffin wax | | Part (s) by weight | | | | | | | 100 | | | | 100 |
| | Lignin compound/ emulsifie r | Lignin compound | SAN X (registered trademark) P252 manufactured by Nippon Paper Industries, Co., Ltd. | Part (s) by weight | 3 | 3 | 6 | 1 | 3 | 3 | 3 | | | | |
| | | Anionic emulsifier | Sodium lauryl, sulfate | Part (s) by weight | | | | | | | | 3 | | | 3 |
| | | | Sodium dioctyl sulfosuccinat e | Part (s) by weight | | | | | | | | | 3 | | |
| | | Nonionic emulsifier | | Part (s) by weight | 12 | 12 | 12 | 12 | 12 | 12 | 12 | 12 | 12 | 12 | 12 |
| Pulp composition | | Oil-resistant agent | | Solid content (%) | 2.0 | 1.5 | 1.5 | 1.5 | 1.0 | 2.0 | 3.0 | 1.5 | 1.5 | 1.5 | 3.0 |
| | | Paper strength agent | Cationic polyamine (Hercobond 6950) | Solid content (%) | 0.16 | 0.16 | 0.16 | 0.16 | 0.16 | 0.16 | 0.16 | 0.16 | 0.16 | 0.16 | 0.16 |
| Evaluation of properties | | High temperature oil resistance (on a scale of 1 to 4) | 65°C × 45 minutes | Time of stirring 1 min | 4 | 4 | 4 | 3 | 4 | 4 | 3 | 3 | 2 | 1 | 2 |
| | | | | Time of stirring 120 min | 4 | 4 | 3 | 3 | 3 | 4 | 3 | 3 | 2 | 1 | 2 |
| | | | 80°C × 30 minutes | Time of stirring 1 min | 4 | 4 | 3 | 3 | 4 | 4 | 0 | 3 | 2 | 1 | 0 |
| | | | | Time of stirring 120 min | 4 | 4 | 3 | 3 | 3 | 4 | 0 | 2 | 2 | 1 | 0 |
| | | Product stability of oil-resistant agent | | | ○ | ○ | ○ | ○ | ○ | ○ | ○ | × | Δ | × | × |

## Claims

1. An oil-resistant agent comprising a liquid-repellent compound and a lignin compound.

2. The oil-resistant agent according to claim 1,
wherein the lignin compound has an ionic group other than a phenolic hydroxy group.

3. The oil-resistant agent according to claim 1 or 2,
wherein the lignin compound is lignin sulfonate.

4. The oil-resistant agent according to any one of claims 1 to 3, wherein the lignin compound is sodium lignin sulfonate.

5. The oil-resistant agent according to any one of claims 1 to 4, wherein the liquid-repellent compound is a compound having at least one selected from the group consisting of a hydrocarbon group having 6 or more carbon atoms and optionally having a substituent, and a polysiloxane group.

6. The oil-resistant agent according to claim 5,
wherein the liquid-repellent compound is at least one selected from the group consisting of a vinyl polymer, a modified body of amine, a modified body of polyol, a modified body of polycarboxylic acid, an isocyanate derivative, wax and silicone.

7. The oil-resistant agent according to claim 5 or 6,
wherein the liquid-repellent compound is at least one selected from the group consisting of a (meth)acrylic polymer, a styrene polymer, a polysiloxane group-containing (meth)acrylic polymer, a hydrocarbon wax, polyurethane, silicone resin, fatty acid ester, fatty acid amide and modified starch.

8. The oil-resistant agent according to any one of claims 1 to 7, wherein the liquid-repellent compound is a (meth)acrylic polymer having a chain alkyl having 12 or more and 18 or less carbon atoms.

9. The oil-resistant agent according to any one of claims 1 to 8, wherein the liquid-repellent compound has a hexadecane contact angle of 25° or more.

10. The oil-resistant agent according to any one of claims 1 to 9, wherein the oil-resistant agent has a charge density of -1,500 µeq/g or more and 0 µeq/g or less.

11. The oil-resistant agent according to any one of claims 1 to 10, wherein the liquid-repellent compound is a (meth)acrylic polymer comprising 50% by weight or more of a repeating unit derived from a monomer (a1), wherein
the monomer (a1) is
(a1) a monomer represented by the formula:
CH₂=C(-X^{a1})-C(=O)-Y^{a11}-Z(-Y^{a12}-R^{a1})ₙ
wherein R^{a1} is each independently a hydrocarbon group having 6 or more and 40 or less carbon atoms,
X^{a1} is a hydrogen atom, a monovalent organic group or a halogen atom,
Y^{a11} is -O- or -NH-,
Y^{a12} is each independently a direct bond or a group composed of at least one selected from -O-, -C(=O)-, - S(=O)₂-, -NH- and -CH₂-,
Z is a direct bond or a divalent or trivalent hydrocarbon group having 1 to 5 carbon atoms, and
n is 1 or 2.

12. An oil-resistant pulp product comprising a pulp substrate having the liquid-repellent compound and the lignin compound of the oil-resistant agent according to claims 1 to 11 adhered thereto.

13. The oil-resistant pulp product according to claim 12, wherein the amount of the liquid-repellent compound is 0.03% by weight or more and 3.0% by weight or less based on the pulp substrate.

14. The oil-resistant pulp product according to claim 12 or 13, which is a pulp formed article.

15. The oil-resistant pulp product according to any one of claims 12 to 14, which is a food packaging material or a food container.

16. A method for producing an oil-resistant pulp product, comprising subjecting a pulp substrate to an external addition treatment or an internal addition treatment with the oil-resistant agent according to any one of claims 1 to 15.
